# EUROPEAN PATENT SPECIFICATION

(11) **EP 1 228 465 B1**
(45) Date of publication and mention of the grant of the patent: **27.03.2013**
(21) Application number: 00973679.4
(22) Date of filing: 20.10.2000
(51) Int. Cl.: G06Q 10/00

(54) **METHOD AND APPARATUS FOR MONITORING THE STATUS AND TRANSFER OF FOOD PRODUCTS**
VERFAHREN UND GERÄT ZUR ZUSTANDSÜBERWACHUNG UND ÜBERTRAGUNG VON LEBENSMITTELN
PROCEDE ET APPAREIL DE SURVEILLANCE DE L'ETAT ET DU TRANSFERT DE PRODUITS ALIMENTAIRES

(30) Priority: 22.10.1999 US 160878 P; 19.10.2000 US 692578
(43) Date of publication of application: 07.08.2002
(73) Proprietor: Salerno, Mark, Huntington, NY 11743 (US)
(72) Inventor: Salerno, Mark, Huntington, NY 11743 (US)
(74) Representative: Sajda, Wolf E.
(86) International application number: PCT/US2000/028948
(87) International publication number: WO 2001/031533

(56) References cited:
- WO-A-99/10794
- US-A- 4 737 463
- US-A- 5 045 283
- US-A- 5 539 671
- US-A- 5 667 303
- US-A- 6 009 400
- US-A- 6 052 667

## Description

### BACKGROUND OF THE INVENTION

### Field of the Invention

This invention relates generally to systems which monitor a status of a product, such as prepared food, and more specifically relates to automated product status systems which communicate the status of multiple food products to food preparers, and enable the transfer of food products within the system.

In particular, the invention relates to a method defined in the preamble of claim 1 and system as defined in the preamble of claim 18. Which a method and system are known from the document WO 99/10794.

### Description of the Prior Art

The control of product freshness and quality has always been a major concern with industries, such as restaurants, dealing with the sale of perishable goods, such as prepared foods. Numerous inventory control systems exist which track parameters such as the origin, quantity used, quantity stored and the age of products. However, an automated system, which monitors the shelf life of perishable goods, has not yet been placed into practice. In addition, many of the systems and methods for monitoring product status currently in use cannot ensure that the oldest product is used first or that available product is optimally used to minimize waste. Therefore, it would be advantageous if such a system or method could accurately and efficiently track the status of perishable goods while providing a means for reducing the amount of waste.

In the restaurant industry, at least two durations of time become important variables to monitor. One is a hold time, which is the shelf life of prepared food or the duration of time during which a particular product meets a set of standards imposed by the food provider. The second variable is a cook time, which is the duration of time required to cook and/or prepare additional product. The cook time must be accounted for if product is to be continually available. In conventional product status systems, employees or workers engaged in the preparation of food typically monitor the hold and cook times, and are required to set, monitor and reset a different timer for each of the large number of food products being sold. Such a situation results in a tremendous inefficiency in the use of manpower and a reduction in productivity. In addition, the potential for human error can lead to an unacceptable or dangerous product being sold to the consumer. Therefore, it would be advantageous if the hold time, cook time and other variables relevant to the preparation and sale of the food product could be automatically monitored and provided to the worker in summary format without undue human intervention.

In most restaurants, the status of products and the need for additional products is communicated by shouting requests or commands across the kitchen or other food preparation area. This results in additional noise, confusion and often misinformation, which ultimately affects the quality of the food being provided to the consumer as well as the environment, provided for the consumers enjoyment within the restaurant. Therefore, a system and method that could effectively communicate the status of each of many products being offered for sale to all workers without the need for individual communication between workers would be advantageous.

Conventional methods of tracking product status do not provide an efficient means for collecting and processing information concerning loss or waste of perishable goods once they have been prepared for sale; the rate of sale for each product during different periods of the day and promotional events; and worker productivity. Therefore, it would be advantageous if a product status system could provide information on such variables for use in management databases and as a planning tool.

Many of the product status systems in the prior art, such as those using individual timers monitored by workers for each of a number of different products being sold, require that additional timers be used, and that the workers become familiar with additional hold and cook times when new and/or different products are sold. Therefore, it would be advantageous if a product status system was flexible and readily upgradeable to adapt to different types and quantities of food products without burdening the workers and decreasing productivity.

### OBJECTS AND SUMMARY OF THE INVENTION

The object underlying the present invention is to provide a method as well as a product status system which monitor the status and storage location of a prepared food product, which method and system have a high versatility to make certain that food products are monitored from their production to selling, irrespective of their specific location, to ensure that older food will be used first or reliably be discarded after a predetermined time has elapsed.

According to the invention, the object is solved by means of a method as defined in patent claim 1 and a product status system as defined in claim 18. Advantageous further developments of the method and the system according to the invention are specified in the depending subclaims.

In accordance with the present invention, a product status system is provided which monitors the status and storage location of a prepared food product including a processing circuit, a food product status switch, a food product status indicator, and a storage timer. The food product status indicator displays the status of the food product in a particular storage location. The storage timer counts the duration of time the food product has been stored at the storage location. The status indicates whether or not the prepared food product is available in the storage location, whether the storage time of the food product has exceeded an acceptable food product hold time, and when additional food product should be cooked in order to be ready before the storage time of existing food product exceeds the hold time.

The product status system can include a plurality of storage locations, such as a source storage location and a destination storage location, between which the food product is transferred along with the storage time associated therewith. In this case, the storage time from the source storage location is transferred to a destination storage timer associated with the destination storage location, and the destination storage timer counts the duration of time the food product has been stored at both the source and destination storage locations. The status can also indicate which of two or more source storage locations contains the food product, which has been stored for the greatest length of time to facilitate use of the oldest product first. In addition, the status can indicate which of two or more destination storage locations to transfer a given food product into.

The product status system can include a display which displays the status, a pan fill level, an activity level and a day part associated with the prepared food product. Each of the food products can have a different pan fill level associated therewith, which represents a quantity of food product to prepare when the associated storage location becomes empty. The activity level represents an overall rate of sale for all of the food products in a restaurant, and can affect the pan fill level for any or all of the food products.

In further accordance with the present invention, a method for monitoring the status and storage location of a prepared food product is provided, which includes the steps of supplying the prepared food product to the storage location, changing the state of the food product status indicator, initiating a storage timer to count the storage time for the food product in the storage location, comparing the storage time with the acceptable food product hold time, changing the state of the food product status indicator if the storage time exceeds the hold time and changing the state of the food product status indicator when the storage location no longer contains the food product.

The storage time can be transferred with the food product if there are two or more storage locations, such as the source storage location and the destination storage location. In this case, the state of the food product status indicator is changed to indicate when the duration of time the food product has been stored at both the source and destination storage location exceeds the hold time. The state of the food product status indicator can also be changed to indicate which of two or more storage locations contains food product which has been stored longer, and which of two or more storage locations a given food product undergoing a transfer can be transferred into.

These and other objects, features, and advantages of the present invention will be apparent from the following detailed description of illustrative embodiments thereof, which is to be read in connection with the accompanying drawings.

### BRIEF DESCRIPTION OF THE DRAWINGS

Figure 1 is a block diagram of a product status and transfer system formed in accordance with the present invention and applied to a restaurant.
Figure 2 is a front view of a workstation, such as a drive-through station, a front counter station, or a holding station of the product status and transfer system formed in accordance with the present invention.
Figure 3 is a front view of a display and the holding station of the product status and transfer system formed in accordance with the present invention.
Figure 4 is an enlarged view of the display shown in Figure 3.
Figure 5A shows a product label, product status switches, and product status indicators, which are located on the stations formed in accordance with the present invention.
Figure 5B shows an active switch, an active indicator, a transfer switch, and a transfer indicator, which are located on the stations formed in accordance with the present invention.
Figure 6 is a flowchart of an active/inactive station routine used in a method formed in accordance with the present invention.
Figures 7A & 7B are flowcharts of a product transfer routine used in the method formed in accordance with the present invention.
Figure 8A is a flowchart summarizing the product transfer routine shown in Figures 7A and 7B.
Figure 8B is a block diagram showing the operation of a multiple transfer used in the method formed in accordance with the present invention.
Figure 8C is a flowchart of a minimum stock level routine formed in accordance with the present invention.
Figures 8D and 8E show a front and rear view of the holding station, respectively.
Figure 8F shows a flowchart for a product transfer algorithm formed in accordance with the present invention.
Figures 9A and 9B are flowcharts of the method for monitoring a status for each of a plurality of products formed in accordance with the present invention.
Figure 10 is a circuit board level block diagram of the product status and transfer system formed in accordance with the present invention.
Figures 11A - 11E are schematic diagrams of a station/worker interface board (SWIB) of the product status and transfer system formed in accordance with the present invention.
Figure 12 is a schematic diagram of an active/transfer board (ATB) of the product status and transfer system formed in accordance with the present invention.
Figures 13A - 13E are schematic diagrams of a station interface board (SIB) of the product status and transfer system formed in accordance with the present invention.
Figures 14A - 14J are schematic diagrams of a station control board (SCB) of the product status and transfer system formed in accordance with the present invention.
Figures 15A1 -15L are schematic diagrams of a display board (CDB) of the product status and transfer system formed in accordance with the present invention.

### DETAILED DESCRIPTION OF THE PREFERRED EMBODIMENTS

### Top Level Description of Product Status and Transfer System

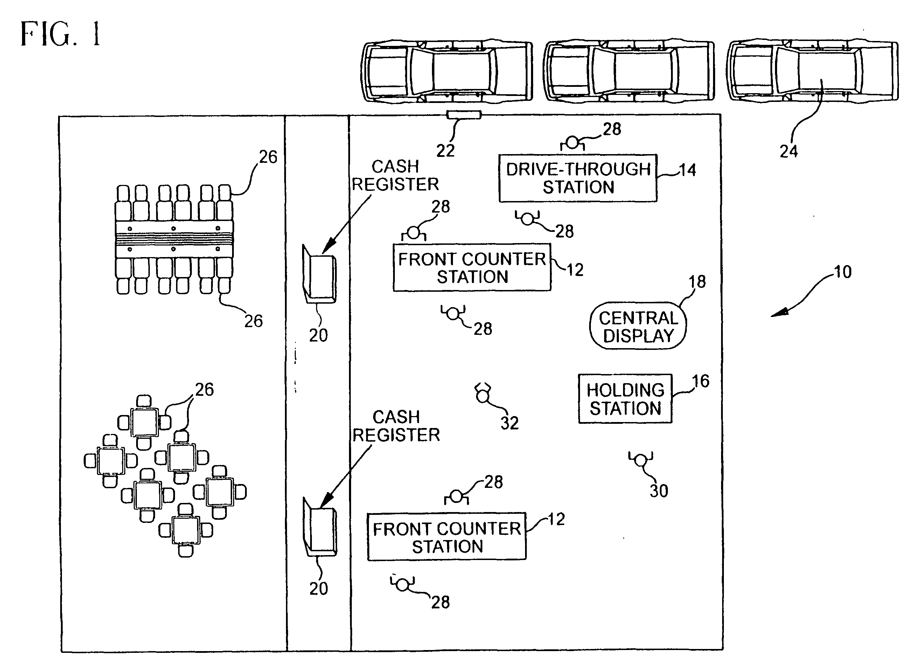

Figure 1 shows a top-level block diagram of a product status and transfer system 10 formed in accordance with the present invention and applied to a restaurant serving prepared food. The product status and transfer system (PSTS) 10 preferably includes one or more front counter stations 12, one or more drive-through stations 14, a holding station 16, and a display 18. The display 18 may be centrally located. The front counter station 12 is preferably located near a serving counter and a corresponding cash register 20. The drive-through station 14 is preferably located near a window 22 through which workers service drive-up customers in their cars 24. The holding station 16 and the display 18 are preferably located in a centralized location, which is readily accessible to the front counter stations 12 and the drive-through station 14. Seating 26 may also be provided within the restaurant.

The drive-through station 14 and the front counter stations 12 preferably each enable two sandwich makers 28 standing on opposing sides of the stations 12, 14 to remove cooked product from the stations 12, 14 and to prepare the cooked product for sale to a consumer. The holding station 16 preferably enables at least one expeditor 30 to cook the food product and place the cooked product into the holding station 16. A store manager 32 is preferably responsible for managing the operation of the restaurant. The sandwich makers 28 and the expeditor 30 are collectively referred to as workers 28 or workers 30 according to the station they are working at.

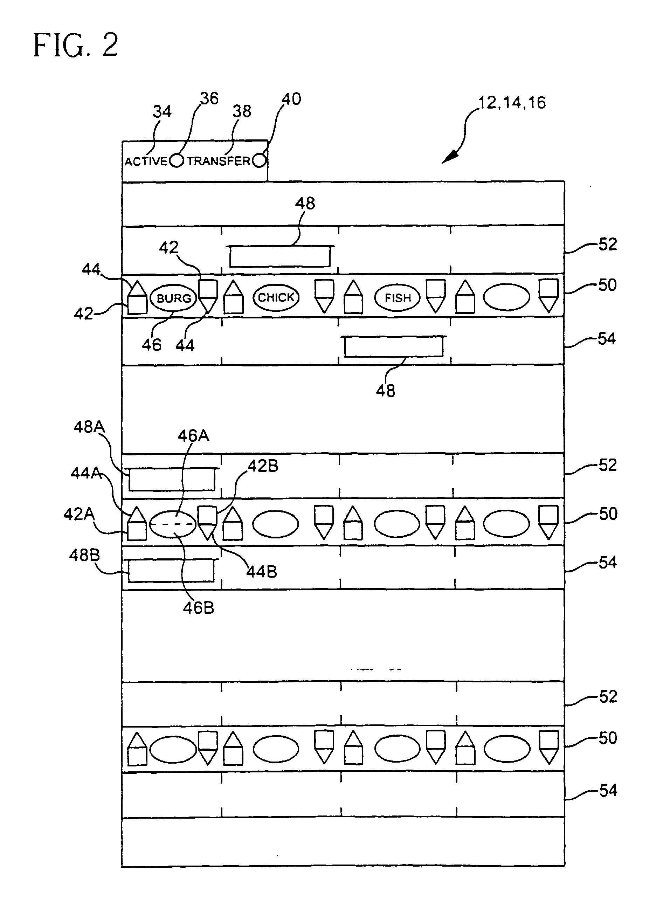

Figure 2 shows a pictorial representation of a front view of the front counter station 12, drive-through station 14 and holding station 16, which are collectively referred to as the station 12, 14, 16. The station 12, 14, 16 preferably includes at least one active switch 34, at least one active indicator 36, at least one transfer switch 38, at least one transfer indicator 40, product status switches 42, product status indicators 44 and product labels 46. The holding station 16 is substantially the same as the front counter station 12 and the drive-through station 14, except that the holding station 16 is preferably designed for use by one worker 30. Thus, since the product located in the holding station 30 is intended to be accessed by only one worker 30, preferably only one active switch 34, one active indicator 36, one transfer switch 38 and one transfer indicator 40 exist on the holding station 16. In contrast, two of each of these switches and indicators exist on each of the front counter station 12 and the drive-through stations 14.

The stations 12, 14, 16 can preferably each accommodate up to 24 different pans 48 of food product as shown in Figure 2. Each product status switch 42 and product status indicator 44 corresponds to a particular pan 48 of product. The stations 12, 14, 16 preferably include three rows 50 of product status switches 42, product status indicators 44 and product labels 46. Each row 50 corresponds to an upper row of pans 52 and a lower row of pans 54. The upper row of pans 52 is preferably used by the worker 28 on one side of the station 12, 14, while the lower row of pans 54 is preferably used by the worker 28 on the opposing side of the station 12, 14. Thus, the upper row of pans 52 holds what is preferably considered to be primary pans by the worker on one side of the station 12, 14, while the lower row of pans 54 holds what is preferably considered to be secondary pans by the worker 28 on the opposing side of the station 12, 14. Conversely, the lower row of pans 54 holds what is considered to be primary pans by the worker 28 on one side of the station 12, 14, while the upper row of pans 52 holds what is considered to be secondary pans by the worker 28 on the opposing side of the station 12, 14. The primary pan corresponding to a particular side of the station 12, 14 is preferably used exclusively by the worker 28 located on that side of the station 12, 14. However, should the primary pan be empty, the worker 28 can use the product located in what is considered to be the secondary pan (which is considered the primary pan for the worker 28 on the opposing side of the station 12, 14).

The use of upper and lower rows of pans 52, 54 effectively enables two workers 28 to work at the station 12, 14 simultaneously without interfering with each other. Since as already described, there is preferably only one worker 30 at the holding station 16, that worker 30 preferably has equal access to both upper and lower rows of pans 52, 54. The food products are preferably located within pans 48 at the stations 12, 14, 16 which are ergonomically advantageous according to a rate of sale for that product. In other words, those products that are sold most often are preferably placed in the location most easily accessed by the worker at the station 12, 14, 16. Also, the same product is preferably placed in substantially the same location in each of the stations 12, 14, 16.

The product label 46 preferably indicates the identity of the food product or the selectable menu, which is located in the pan 48 immediately above and immediately below the product label 46. It is important to note that the product label 46, the food product status switch 42, and the food product status indicator 44 are preferably located in alignment with the corresponding food product pan 48. Alternatively, the identity of the food product or selectable menu associated with the pan 48 may be electronically displayed and changed in response to a selectable menu switch. The products immediately above and below the product label 46 are preferably the same since this allows two workers 28 to access the same product at the same station simultaneously, as well as the concept of primary and secondary pans described above.

The product status indicators 44 are preferably shaped in the form of an arrow. The product status switch 42 and the product status indicator 44 modify and indicate, respectively, the status of the products located in the pan pointed to by the corresponding product status indicator 44. For instance, as shown in Figure 2, the product label 46, the product status indicator 44A and the product status switch 42A correspond to an upper pan 48A. Likewise, the product label 46, the product status indicator 44B and the product status switch 42B correspond to a lower pan 48B. If the products in corresponding upper and lower pans are different, the product label 46 can be divided into an upper portion indicating the identity of the product in the upper pan 48A, and a lower portion indicating the identity of the product in the lower pan 48B.

The active switch 34 and the active indicator 36 can modify and display the activity of the station 12, 14, 16. The transfer switch 38 and the transfer indicator 40 are used to initiate and indicate a transfer of the food product between locations in the same or different stations 12, 14, 16.

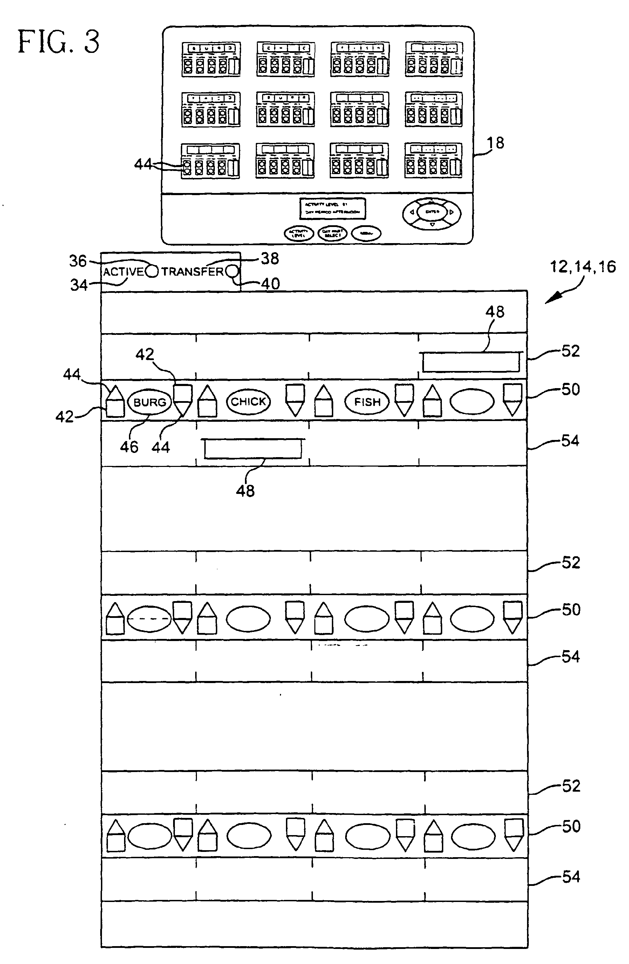

Figure 3 shows the holding station 16, which is equivalent to the drive-through station 14 and the front counter station 12, except that one worker 30 preferably operates the holding station 16, and both the upper and lower rows of product pans 52, 54 are accessed by that worker 30. In addition, the display 18 is preferably located in a position which is viewable by the worker 30 operating the holding station 16, such as above the holding station 16 as shown in Figure 3.

### Top Level Summary of Operation

At the beginning of a day in the restaurant, the worker 30 situated in front of the holding station 16 cooks a predetermined quantity or pan fill level of each product as indicated on the display 18, and stores the cooked product in the appropriate pan 48 in the holding station 16. Each product has a corresponding hold time, which represents a shelf life of the cooked product or a duration of time during which the product has an acceptable quality and can be served to consumers. The worker 30 then presses the product status switch 42 on the holding station 16 corresponding to the pan 48 just filled indicating the presence of cooked product, and triggering a timer corresponding to the location just filled to initiate a count of the storage time for the corresponding food product. The cooked product is then transferred from the holding station 16 to the front station 12 and the drive-through station 14 along with the storage time corresponding to the product being transferred.

As product is prepared and sold to consumers, the cooked food products at the stations 12, 14 are depleted. When the last unit of a particular product has been removed from one of the stations 12. 14, the worker 28 presses the product status switch 42 corresponding to the depleted product, which indicates that there is an absence of the depleted product in a particular location in the station 12, 14 via a corresponding product status indicator 44 on the display 18. The worker 30 at the holding station 16 observes the product status indicator 44 corresponding to the depleted product, and either cooks fresh product or transfers existing cooked product from the holding station 16 to the station 12, 14 requiring the cooked product.

If one of the cooked food products is retained in one of the stations 12, 14, 16 for a time which exceeds the hold time for that particular product, the corresponding product status indicator 44 will indicate that the product should be discarded rather than being sold to the consumer. The product status indicator 44 will also warn the workers 28, 30 that the hold time is about to expire by turning yellow to indicate that additional product must be cooked in order to have cooked product before the existing product expires. A cook time represents a duration of time required to cook the corresponding product. The product status indicator 44 preferably turns yellow when the storage time for the product equals the hold time minus the cook time. Thus, enough time is provided to cook additional product prior to the expiration of existing cooked product. The product status indicators turn green to indicate that unexpired food product is available at a particular location in a station 12, 14, 16, and turn red to indicate the absence of the food product at a particular location in the station 12, 14, 16.

### Detailed Description of Common Functions and Components

### Active/Inactive Station

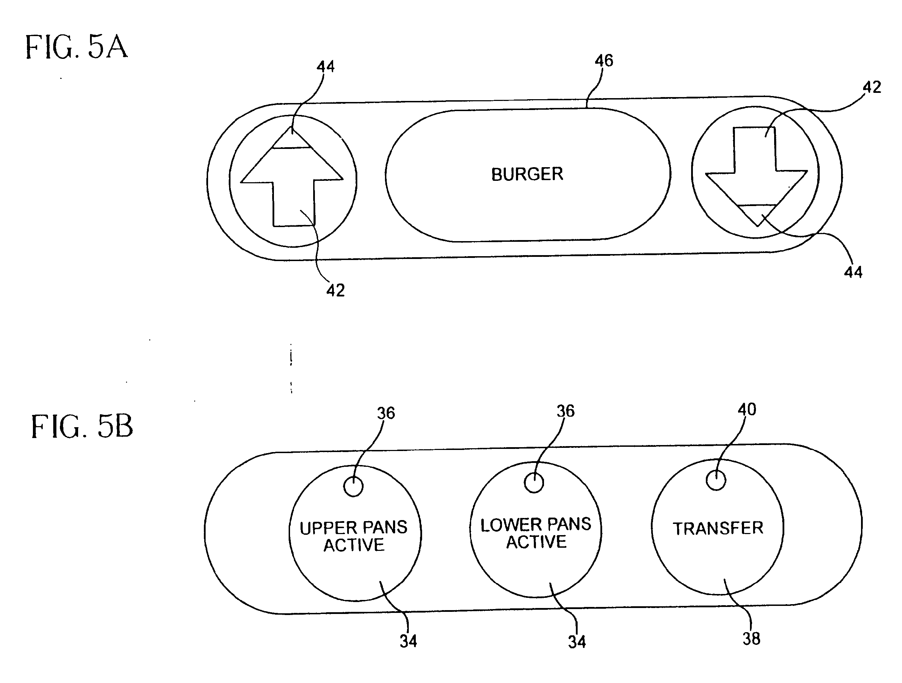

As already described, each of the stations 12, 14, 16 includes at least one active switch 34 and at least one active indicator 36. Additional active switches and indicators may be included to indicate activity of the upper and lower pans of the station 12, 14, as shown in Figure 5B. The front counter station 12 and the drive-through station 14 each have two active switches 34 and two active indicators 36. One active switch 34 and one active indicator 36, as shown in Figure 5B, correspond to each side of the station 12, 14. Initially upon power-up, all stations 12, 14, 16 are placed in an active mode in which each of the active indicators 36 is illuminated. Thereafter, the workers 28, 30 may select any of the active switches 34 which function to place the station 16 or side of the station 12, 14 corresponding to the active switch 34 in an inactive mode. The active indicator 36 is not illuminated in the inactive mode.

When the station 12, 14, 16 is in the active mode, each of the product status indicators 44 are illuminated and indicate the status of the corresponding product. When the station 12, 14, 16 is in the inactive mode, each of the product status indicators 44 on the corresponding station 16 or side of the station 12, 14, as well as the product status indicator 44 corresponding to the inactive station 12, 14, 16 located on the display 18 are turned off. Activating any one of the active switches 34 causes the corresponding station 16 or side of the station 12, 14 to toggle between the active mode and the inactive mode.

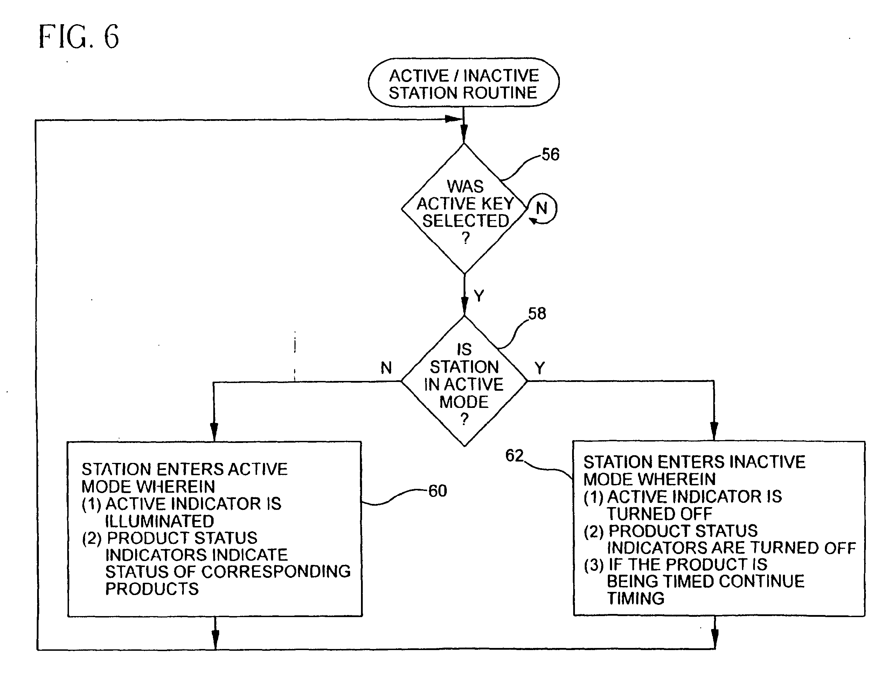

Figure 6 is a flowchart showing the operation of the stations 12, 14, 16 during an active/inactive station routine. The station idles in step 56 until the active switch is depressed or selected, and then determines whether the station is currently in the active mode in step 58. If the station is not in the active mode, the station enters the active mode in step 60 wherein the active indicator on the inactive station is illuminated and the product status indicators on the active station indicate the status of the corresponding products. However, if the station is in the active mode in step 58, the station enters the inactive mode in step 62 wherein the corresponding active indicator and the product status indicators on the inactive station are turned off. However, timing for any products being timed prior to entry into the inactive mode continues during the inactive mode. Following steps 60 and 62, the routine again idles in step 56 waiting for the next selection of the active switch. It is to be noted that the product status indicators on the display reflect the same status as the corresponding product status indicators on the stations. Therefore, if the station is in the inactive mode, the product status indicators on the display corresponding to the inactive station are off.

### Product Timers

The product status and transfer system 10 includes at least one timer for each of the preferably 12 different products in the preferably 24 different product locations in each of the stations 12, 14, 16. When fresh product is placed in a particular pan 48 in the station 12, 14, 16, the corresponding product status switch 42 is selected by the worker 28, 30 until the corresponding product status indicator 44 turns green, which triggers the timer to begin counting the storage time. The green product status indicator 44 indicates that the pan 48 contains unexpired product. Preferably, the storage time is counted by loading the hold time into the timer when fresh product is first placed into a particular pan 48, and continuing to count down the hold time until the corresponding food product has been depleted, or the timer reaches zero indicating that the storage time has reached the hold time.

The cook time corresponding to any given product is that duration of time necessary to cook the particular product. If the value remaining on the timer is less than or equal to the cook time, then the corresponding product status indicators 44 turn yellow indicating to the worker 30 at the holding station 16 that additional product should be cooked since the product corresponding to the yellow light is about to expire. When the timer has counted down to zero, the corresponding product status indicator 44 flashes slow red indicating that the product remaining in the corresponding pan has expired and should be discarded rather than being served to the consumer.

### Product Status

As already described above, each of the 24 locations in each of the stations 12, 14, 16 has a corresponding product label 46, product status switch 42 and product status indicator 44 as shown in Figures 2, 3 and 5A. Each of the product status indicators 44 on each of the stations 12, 14, 16 has a corresponding product status indicator 44 on the display 18, which displays substantially the same status displayed to the workers 28, 30 at the stations 12, 14, 16. Table 1 provides a summary of the status and action to be taken for each of the colors and flashing speeds provided by the product status indicators 44.

**TABLE 1**

| **COLOR** | **FLASHING SPEED** | **ACTIVE/INACTIVE SIDE/STATION** | **STATUS OF PRODUCT** | **ACTION TO BE TAKEN** |
|---|---|---|---|---|
| Green | static | active | unexpired, existing | serve product |
| Red | static | active | no product | replenish product |
| Yellow | static | active | product is within cook time of expiring | begin cooking more product |
| Red | slow | active | expired | discard product |
| Red | fast | active | product can be transferred into location during a pending transfer | transfer product into location |
| Green | slow | active | oldest product available to transfer out of location | transfer this product first |
| Off | static | inactive | none | none or place station in active mode |

### Product Transfer

Each of the stations 12, 14, 16 preferably includes at least one transfer switch 38 and transfer indicator 40, as shown in Figures 2, 3 and 5B. The front counter station 12 and drive-through station 14 both have two transfer switches 38 and two transfer indicators 40. One transfer switch 38 and one transfer indicator 40 correspond to each side of the station 12,14. The holding station 16 has one transfer switch 38 and one transfer indicator 40 since preferably only one side is accessed.

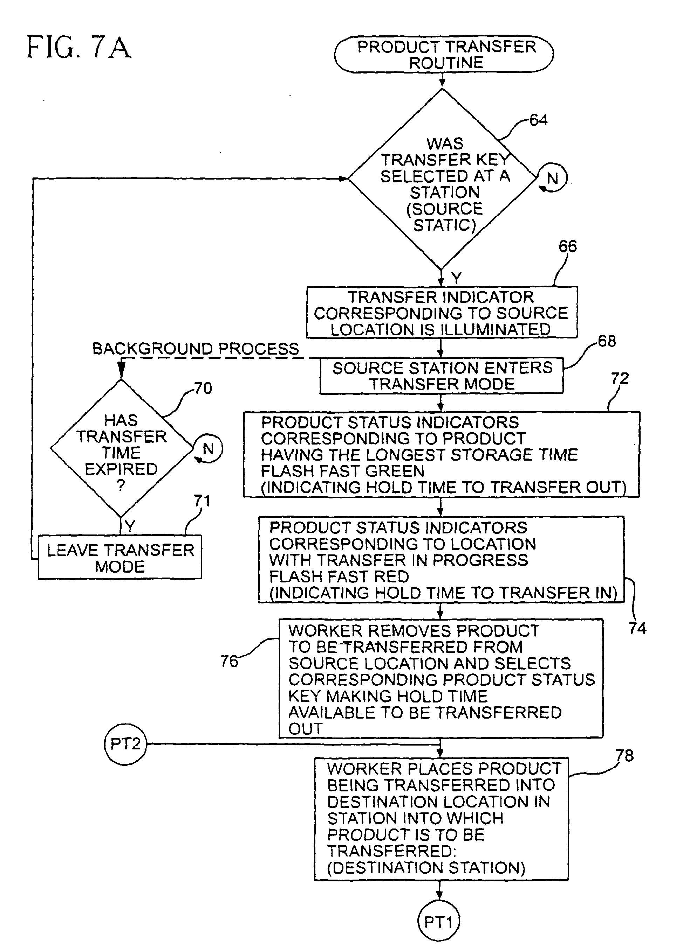

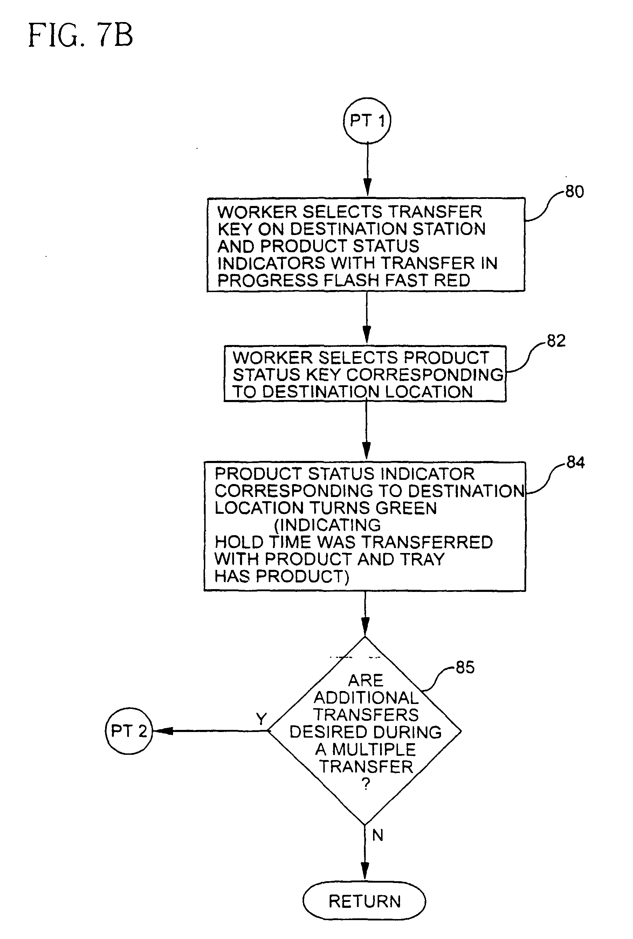

Figures 7A and 7B are flowcharts of the operation of a product transfer routine. The station idles in step 64 until the transfer switch is selected. Once the transfer switch is selected, the routine continues to step 66 in which the transfer indicator on the corresponding station or side of the station, which is now considered to be a source station or location, is illuminated. The source station enters a transfer mode in step 68, and the routine performs a background process in step 70, which determines whether a predetermined transfer time has expired. If the transfer time has expired, the system exits the transfer mode in step 71, and the routine proceeds back to step 64. If the transfer time has not expired, the background process in step 70 continues to idle.

After pressing the transfer switch on the source station, the product status indicator corresponding to the product which has been stored the longest flashes fast green, which indicates to the worker which product is the oldest and facilitates the use of the oldest product first. The product status indicators corresponding to locations holding products having a transfer in progress flash fast red indicating that the hold time may be transferred into these locations in step 74. The worker removes the product to be transferred from a source location in the source station, which is preferably the product corresponding to the product status indicator which is flashing fast green, and presses the corresponding product status switch which makes the corresponding storage time available to be transferred out in step 76. The worker then places the product being transferred into a destination location in a destination station in step 78. The destination station can be the same station as the source station. The destination location can also be the same location in the same station as the source location. The products are preferably transferred while in the pans 48. However, a portion of the food product in the pan may be transferred to more than one destination location. The destination location may be the same as the source location.

The flowchart continues on Figure 7B in which the worker presses the transfer switch on the destination station and fills the destination location with the product being transferred in step 80. The empty pans in the destination station corresponding to product with a transfer in progress will flash fast red indicating an empty pan with a potential for accepting the product being transferred. The worker presses the product status switch in step 82 corresponding to the destination location filled in step 78, and the corresponding product status indicator turns green in step 84 indicating that the hold time, which was transferred out of the source station, has now been transferred into the destination location along with the product that was transferred. If only a portion of the product transferred out of the source location was transferred into the destination during a so-called "multiple transfer", the remaining product can be transferred to additional destination locations including back to the source location in step 85. If additional transfers are desired, the routine returns to repeat steps 78, 80, 82 and 84 until no additional transfers are desired and the routine returns. This completes the product transfer routine until the transfer switch is again selected.

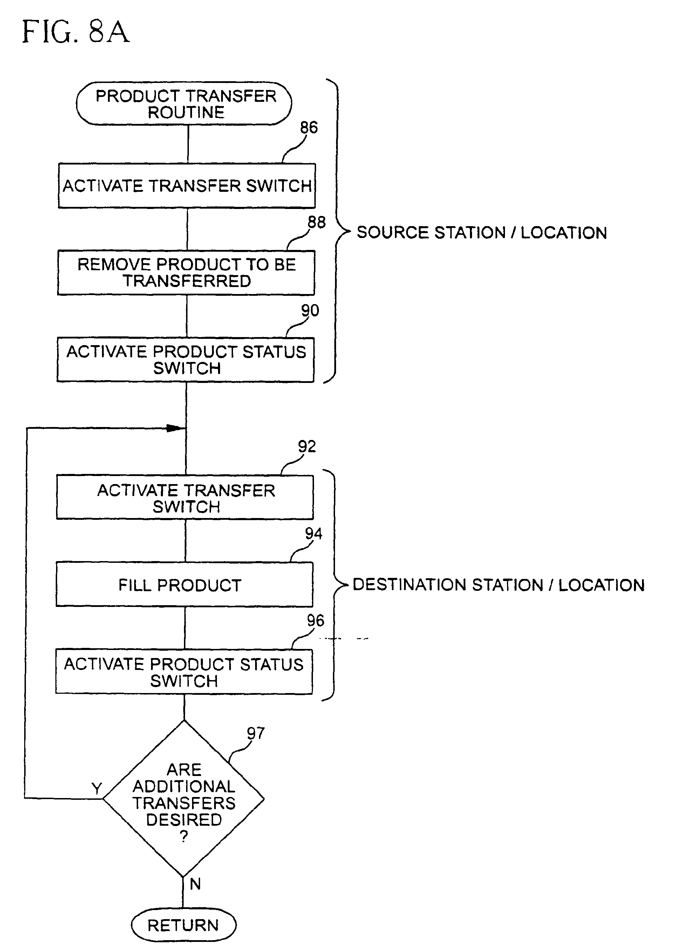

The product transfer routine is essentially a very straightforward and simple process, which can readily be performed by workers having almost any level of skill. Figure 8A shows a summarized form of the product transfer routine taken from the viewpoint of the worker. If the worker wishes to transfer product from one location to another, the worker selects or presses the transfer switch corresponding to the source station in step 86 and removes the product to be transferred in step 88. The worker then presses the product status switch corresponding to the source location in step 90. The worker transfers the product to the destination location and selects the transfer switch corresponding to the destination location in step 92. The worker selects the product status switch corresponding to the destination location in step 96. If some of the product transferred from the source location has not been transferred to the destination location, additional transfers can be made in step 97 via the reiteration of steps 92, 94 and 96 until additional transfers are no longer desired, at which point the routine returns. It is to be understood that the product transfer routine transfers not only product from one station to another, but also transfers the elapsed storage time corresponding to the product being transferred. This ensures the accurate maintenance of the storage time for each product regardless of the transfer of products within the system.

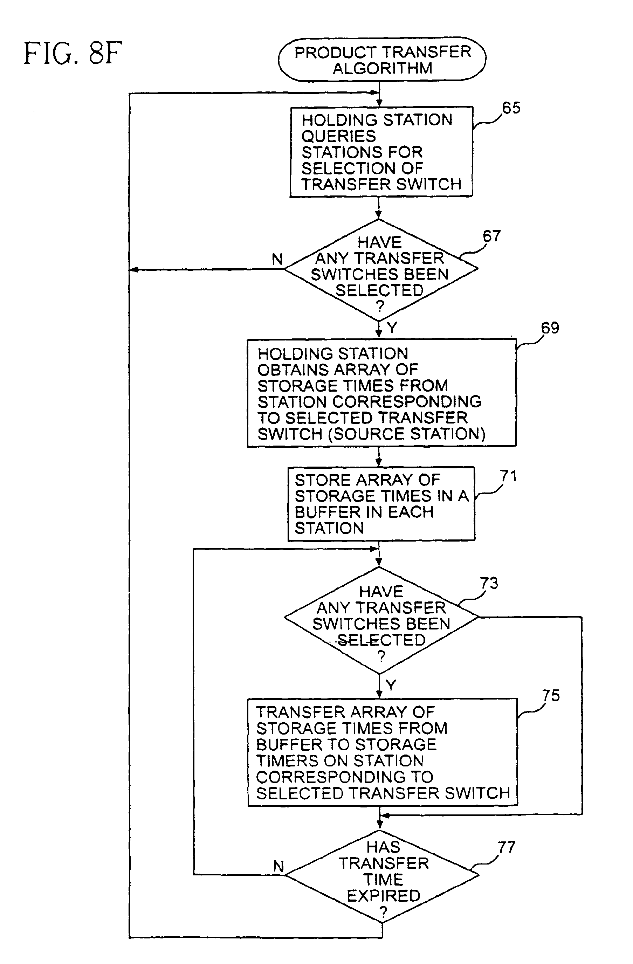

Figure 8F is a flowchart of an algorithm that enables the product status system to perform the product status transfer routine shown in Figure 7A. The holding station queries the stations in step 65 to determine if the corresponding transfer switch has been selected at any of the stations. If the transfer switch has been selected in step 67, the holding stations obtains an array of storage times from the station corresponding to the transfer switch selected in step 69. The array includes twelve numbers representing the storage times for each of the twelve products stored in either the upper or lower pans in any of the stations. If the transfer switch has not been selected at any of the stations, the algorithm returns to re-execute step 65 from step 67.

The array of storage times is stored in a buffer within each of the stations in step 71. If the transfer switch has been selected at the same or another station in step 73, that station will transfer the array of storage times from its buffer to its storage timers in step 75. If the transfer switch has not been selected in step 73 or after then array of storage times is transferred to the storage timers, the algorithm determines whether the predetermined transfer time has expired in step 77. If the transfer time has expired, the algorithm returns to step 65. If the transfer time has not expired, the algorithm returns to re-execute step 73.

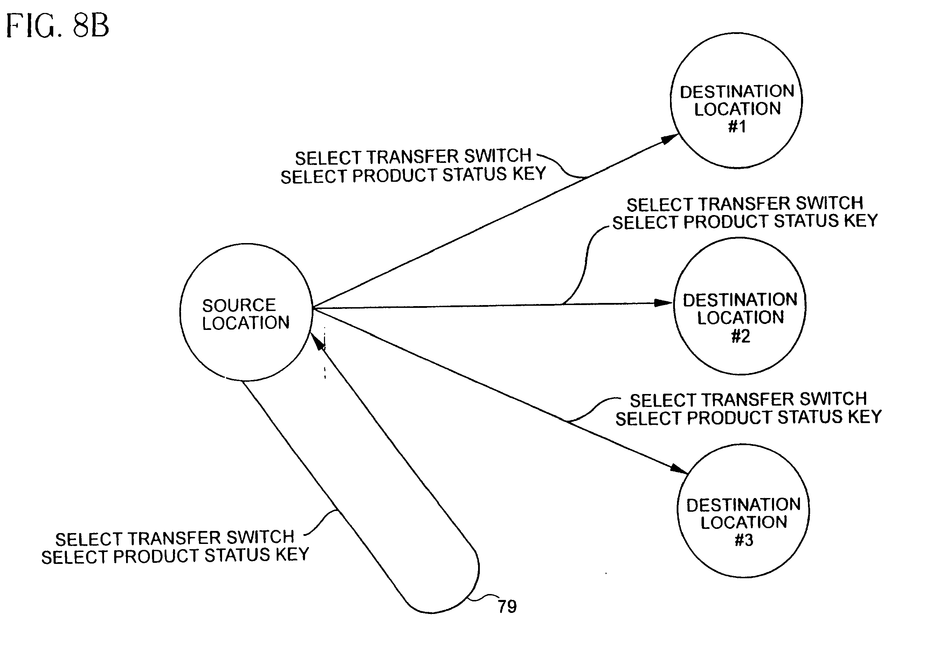

Figure 8B is a block diagram showing the multiple transfer of food product between the source location and one or more destination locations. The food product and the elapsed storage time corresponding to the food product are transferred from the source location to the destination location in response to activation of the transfer switch corresponding to the source station and the product status switch corresponding to the source location as well as activation of the transfer switch corresponding to each of the destination stations and the product status switch corresponding to each of the destination locations. The source location can also be one of the destination locations by activating the transfer switch corresponding to the source station and the product status switch corresponding to the source station as indicated by arrow 79. In this way, the multiple transfer of product can be made from the source location back to the source location and one or more destination locations.

As an alternative to selecting the transfer switch 38, the transfer of food product may be initiated by pressing and holding the product status switch 42. This results in a significant reduction in the quantity of electromechanical components required by the system, which increases reliability and reduces manufacturing costs.

### Minimum Stock Levels

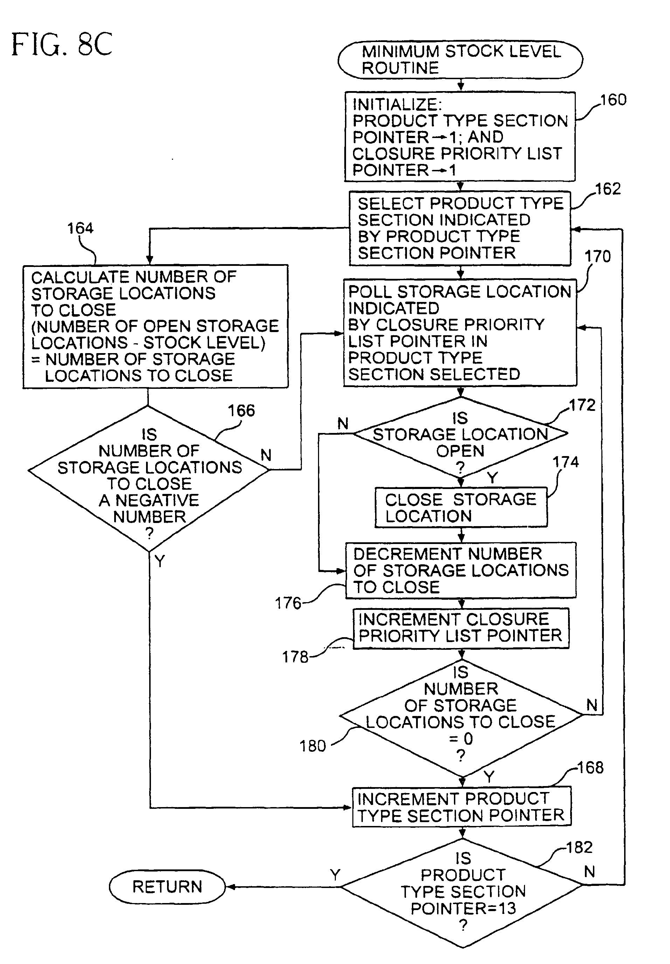

Figure 8C shows a flowchart of a minimum stock level routine, which is designed to inactivate or close storage locations when there are more storage locations are open than are required to hold a given stock level of the prepared food product. The stock level is equal to the total number of open stations for a given prepared food product multiplied by the pan fill level for that product. For instance, if the total number of stations open for burgers is 5 and the pan fill level for burgers is 8, the stock fill level is 40. However, the stock level indicates a preferred quantity of units of a given prepared food product, which should be present in the restaurant at any given time. Therefore, the stock level typically represents an initial value from which the pan fill level and number of open stations are determined. Thus, given a stock level of 42 for burgers, one possible result after rounding is that there are 5 open stations with a pan fill level of 8 for burgers.

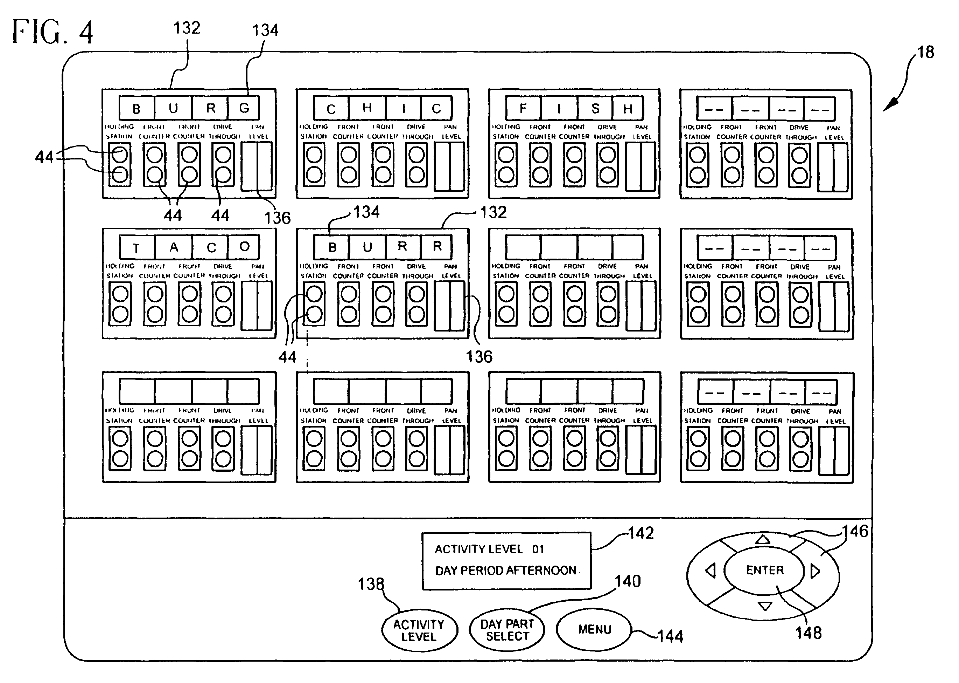

The routine begins with step 160 in which a product type section pointer and a closure priority list pointer are preferably initialized to 1. The product type section pointer selects different product type sections 132 as shown in Figure 4. The product type section pointed to or selected by the product type section pointer is selected in step 162, and each of the sides of the stations are polled to determine whether the storage location corresponding to the product type selected are open (active) or closed (inactive). The order of polling the storage locations is provided by the closure priority list, which is ordered in an increasing order of priority. Stated differently, those storage locations that have a higher priority of being closed are listed before those storage locations having a lower priority of being closed in the closure priority list. The number of storage locations to close is calculated in step 164 by subtracting the stock level from the total number of open storage locations for the given product type section. If the number of storage locations to close is a negative number in step 166, none of the storage locations are closed and the product type section pointer is incremented in step 168 to point to the next product type section.

If the number of storage locations to close is a positive number in step 166, the storage location indicated by the closure priority list pointer is polled in step 170. If the polled location is open in step 172, the storage location is closed in step 174, and the number of storage locations to close is decremented in step 176. However, if the storage location is not open in step 172, the number of storage locations to close is decremented in step 176, and the closure priority list pointer is incremented in step 178. If the number of storage locations to close is equal to zero in step 180, the product type section pointer is incremented in step 168. However, if the number of storage locations to close is not equal to zero in step 180, the routine returns to step 170 to select the next storage location to poll as indicated by the closure priority list pointer. Following step 168, if the product type section pointer is not equal to 13 in step 182, indicating that the routine has not been performed for each of the 12 product type sections, the routine returns to step 162. However, if the product type section is equal to 13 in step 182, the routine terminates.

Conversely, it is also possible that the demand for one or more food products exceeds the number of storage locations allocated to that food product given a maximum pan fill level for each of the storage locations. In this case, more than one storage location can be assigned to the same prepared food product, and transfers of the food product and the associated storage time can be made between each of these storage locations. Such a transfer is termed a "cross-transfer", and is not ordinarily permitted during normal operation, but can be programmed in response to increased demand for a particular food product.

The pan fill level represents the desired quantity of food product to be prepared on a per-pan basis. In order to calculate the pan fill level, a food product per unit sale volume is preferably determined, which represents the quantity of a particular food product sold at a predetermined unit of sale volume. For instance, if the unit of sale volume is selected to be $500 and the quantity of hamburgers sold is 50 when the volume of sale is $500, then the food product per unit sale volume would be 50. It is anticipated that the food product per unit sale volume will be calculated by sampling actual data under different conditions, such as at different times of the day and different days of the week to establish an acceptable degree of statistical certainty.

The current activity level is then preferably established as a multiple of the unit of sale volume in dollars. Thus, if the current activity level is $2000, then the activity level is equal to 4 since the current activity level is four times the unit of sale volume, which is $500. The food product per unit sale volume is then preferably multiplied by the current activity level and the product is divided by the total number of open pans to yield the pan fill level. Therefore, with a food product per unit sale volume equal to 50, an activity level equal to 4, and the quantity of open pans equal to 2, the pan fill level would preferably be equal to 100.

### Method of Operation

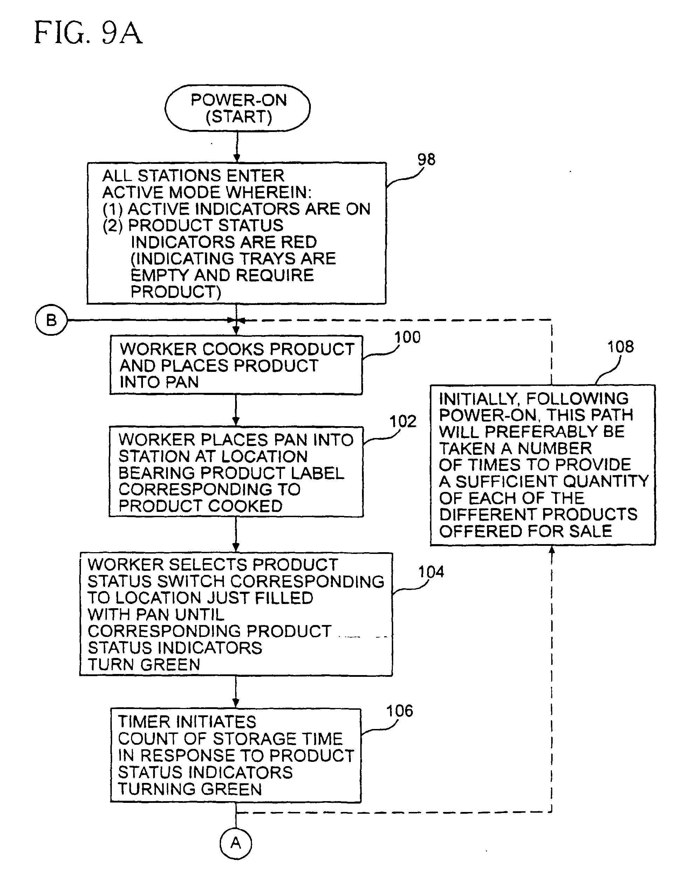

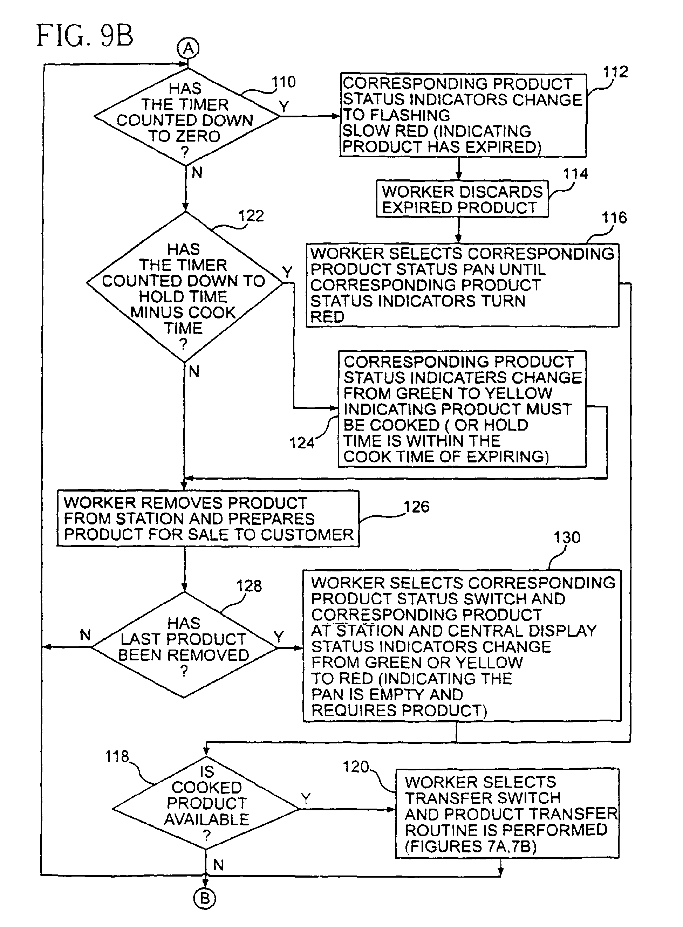

Figures 9A and 9B show flowcharts of a method for monitoring the status of a food product using the product status and transfer system formed in accordance with the present invention. Upon power-on of the product status and transfer system, all stations enter the active mode wherein all active indicators are illuminated, and all product status indicators are red indicating that the product pans are empty and require product in step 98. The worker then cooks the food product, places the cooked product into the pan in step 100, and places the pan into the station, which is preferably the holding station in step 102. The worker selects the product status switch corresponding to the location in the station just filled until the corresponding product status indicator turns green in step 104 indicating that there is unexpired product in the location just filled. The timer then initiates the count of the storage time by counting down the hold time in step 106 in response to the product status indicator turning green. Preferably following power-on, steps 100-106 will be repeated via step 108 until a sufficient quantity of each of the different products offered for sale is cooked and available at the holding station.

The flowchart continues on Figure 9B with step 110, which determines whether the timer has counted down to zero. If the timer has counted down to zero, the corresponding product status indicators change to flashing slow red in step 112 indicating that the corresponding product has expired and is no longer of acceptable quality. The worker then discards the expired product in step 114, and selects the corresponding product status switch until the corresponding product status indicator turns red in step 116. The routine continues with step 118, which determines whether cooked product is available, and if it is, the worker selects the transfer switch which triggers the product transfer routine to be performed in step 120. When the transfer routine has been completed, the routine returns to step 110. If cooked product is not available, the routine returns to step 100 and the worker cooks additional product.

If the timer has not counted down to zero in step 110, the routine determines whether the timer has counted down to the hold time less the cook time in step 122. If the timer has counted down to the hold time less the cook time, the corresponding product status indicators change from green to yellow in step 124 indicating that the hold time is within the duration of the cook time of expiring and that additional product must be cooked. The routine continues with step 126 wherein the worker removes product from the station and prepares it for sale to the consumer. If the last food product has been removed from a particular location in step 128, the worker presses the corresponding product status switch and the corresponding product status indicator changes from green or yellow to red in step 130 indicating that the pan is empty and requires product. If cooked product is available in step 118, the product transfer routine is performed in step 120 and the routine continues with step 110. If cooked product is not available in step 118, the routine continues with step 100, which provides additional cooked product. If the last product has not been removed in step 128, the routine continues with step 110.

### Detailed Description of Display

The display 18 shown in Figure 4 includes a separate product type section 132 corresponding to each upper and lower pan combination found in the stations 12, 14, 16. Thus, the display 18 includes twelve total product type sections 132. Each product type section 132 includes a product name display 134, the product status indicators 44 corresponding to each of the stations 12, 14, 16 and a pan fill level display 136. It is to be noted that each product type section 132 preferably corresponds to upper and lower pan combinations in each of the stations 12, 14, 16, which are located in the same place on the station 12, 14, 16. For instance, the product type section 132 located in a first column and a first row of the display 18 corresponds to the upper and lower pan combinations in the first row and the first column of each of the stations 12, 14, 16. Thus, the product described by the product name display 134 in the first row and first column on the display 18, e.g., "Burg", preferably corresponds to the product noted in the product label 46 in the first row and the first column on each of the stations 12, 14, 16.

Similarly, the product status indicators 44 in each of the product type sections 132 on the display 18 correspond to their counterparts on each of the stations 12, 14, 16 and display the same status. For instance, the product status indicators 44 corresponding to the holding station 16 in the product type section 132 in the first column and the first row of the display 18 preferably correspond to the product status indicators 44 in the first column and the first row of the holding station 16. Likewise, the product status indicators 44 in the product type section 132 located in the first row and the first column of the display 18 corresponding to the front counter station 12, preferably correspond to the product status indicators 44 in the first row and the first column of the front counter station 12. Within each product type section 132 there are two product status indicators 44 (upper and lower) for each station 12, 14, 16. The upper product status indicator 44 preferably corresponds to the upper pan for that location in the station 12, 14, 16, and the lower product status indicator preferably corresponds to the lower pan for that location in the station 12, 14, 16.

Thus, the worker 30 responsible for cooking product at the holding station 16 can monitor the status of each of the products at each of the stations by looking at the display 18. In addition, the product status indicators 44 in each of the product type sections 132 are arranged such that the priority for replenishing the food products in each of the corresponding stations preferably decreases from left to right. The product status indicators 44 corresponding to the holding station 16 are positioned the farthest to the left, followed by the product status indicators 44 corresponding to the front counter station 12 and the drive-through station 14. Thus, the holding station 16 is to be refilled before the front counter station 12, which is to be refilled before the drive-through station 14. The pan fill level display 136 indicates the pan fill level for each product, which is the number of units of each product that should be prepared when new product is cooked.

The display 18 also includes an activity level switch 138, a day part switch 140 and an alphanumeric display panel 142 for electronically displaying an activity level and a day part. The activity level is preferably stored in memory. The pan fill level for each of the twelve different products displayed in the product type sections 132 is a function of the activity level, which represents an overall rate of sale for all of then products. Therefore, if the activity level is increased, the pan fill level for each of the products may increase causing additional product to be cooked and ready to meet an increase in demand. The worker can manually adjust the activity level by depressing the activity level switch 138 until the desired activity level is displayed on the alphanumeric display panel 142. The activity level can also be automatically adjusted as a function of the time, the day, promotional events, sales, and the like. A change in the activity level preferably causes changes in the pan fill level for each of the products independently. For example, when changing from activity level 1 to activity level 2, the number of chicken sandwiches can be increased from 6 to 10 whereas the number of burgers can remain at 10.

The day part switch 140 can be used to select a desired period of the day, such as morning, afternoon, early evening and late evening. The day part preferably affects the identity of the products shown in the product name displays 134 for each of the product type sections 132. For instance, if the day part is set to morning, typical products shown in the product name displays 134 might be eggs, muffins, sausages, and the like. In contrast, if the day part is set to afternoon, the product name displays 134 might indicate such products as burgers, chicken sandwiches, fish sandwiches, and the like.

The day part can be manually modified by activating the day part switch 140, which sequences through the possible values for the day part shown on the alphanumeric display 142 until the desired day part is obtained. The day part can also be automatically modified as a function of the time.

The display 18 includes a menu switch 144, editing cursor switches 146 and an enter switch 148, which enable the product name displays 134, pan fill level displays 136, and potential values for the activity level and day part to be entered and modified by the workers 28, 30 using means well known in the art. An external terminal (not shown) can optionally be connected to the display 18 and used to modify, download and upload versions of operational software, variables, constants, data, and the like as well as editing any of the parameters associated with and/or displayed on the displays 18.

### Circuit Board Level Block Diagram

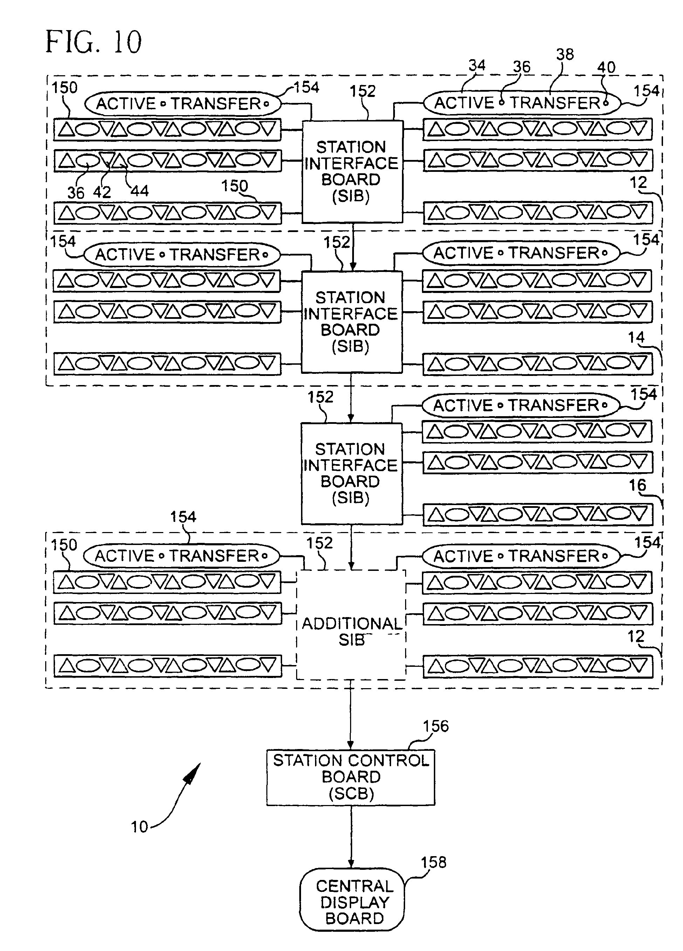

Figure 10 shows a circuit board level block diagram of the product status and transfer system 10 formed in accordance with the present invention. The product status and transfer system 10 preferably includes six station/worker interface boards (SWIB) 150 for each of the stations 12, 14. Three of the SWIB 150 correspond to the front of the front counter station 12 or drive-through station 14, and three of the SWIB 150 correspond to the rear of the front counter station 12 or drive-through station 14. The holding station 16 preferably requires only three SWIB 150 since the worker 30 accesses only one side of the holding station 150. The SWIB 150 corresponding to each of the stations 12, 14, 16 is indicated by dashed lines surrounding sets of SWIB 150 bearing reference numerals corresponding to the stations 12, 14, 16.

Each station/worker interface board 150 includes four sets of two product status switches 42, two product status indicators 44 and one product label 46 corresponding to each of the four columns in the station 12, 14, 16. Each station 12, 14 also includes two active/transfer boards (ATB) 154. Each ATB 154 has one active switch 34, one active indicator 36, one transfer switch 38 and one transfer indicator 40. The holding station 16 preferably includes only one ATB 154 since only one worker 30 accesses the holding station 150. Each station 12, 14, 16 also includes a station interface board (SIB) 152 electrically coupled to each of the three or six SWIB 150, and one or two ATB 154. Each of the SIB 152 are electrically coupled to a station control board (SCB) 156, which is electrically coupled to a display board 158.

### Detailed Description of Board Level Schematics

Tables 2A-2E are parts list for the display board (CDB), station control board (SCB), station interface board (SIB), station worker interface board (SWIB) and active transfer board (ATB), respectively, shown in the circuit board level block diagram of Figure 10.

Tables 3A-3E are netlists for the display board (CDB), station control board (SCB), station interface board (SIB), station worker interface board (SWIB) and active transfer board (ATB), respectively, shown in the circuit board level block diagram of Figure 10. The netlists provide a listing of connectivity between components located on the circuit boards according to the reference designations corresponding to the components and pin numbers on the components shown in the schematic diagrams for each of the circuit boards.

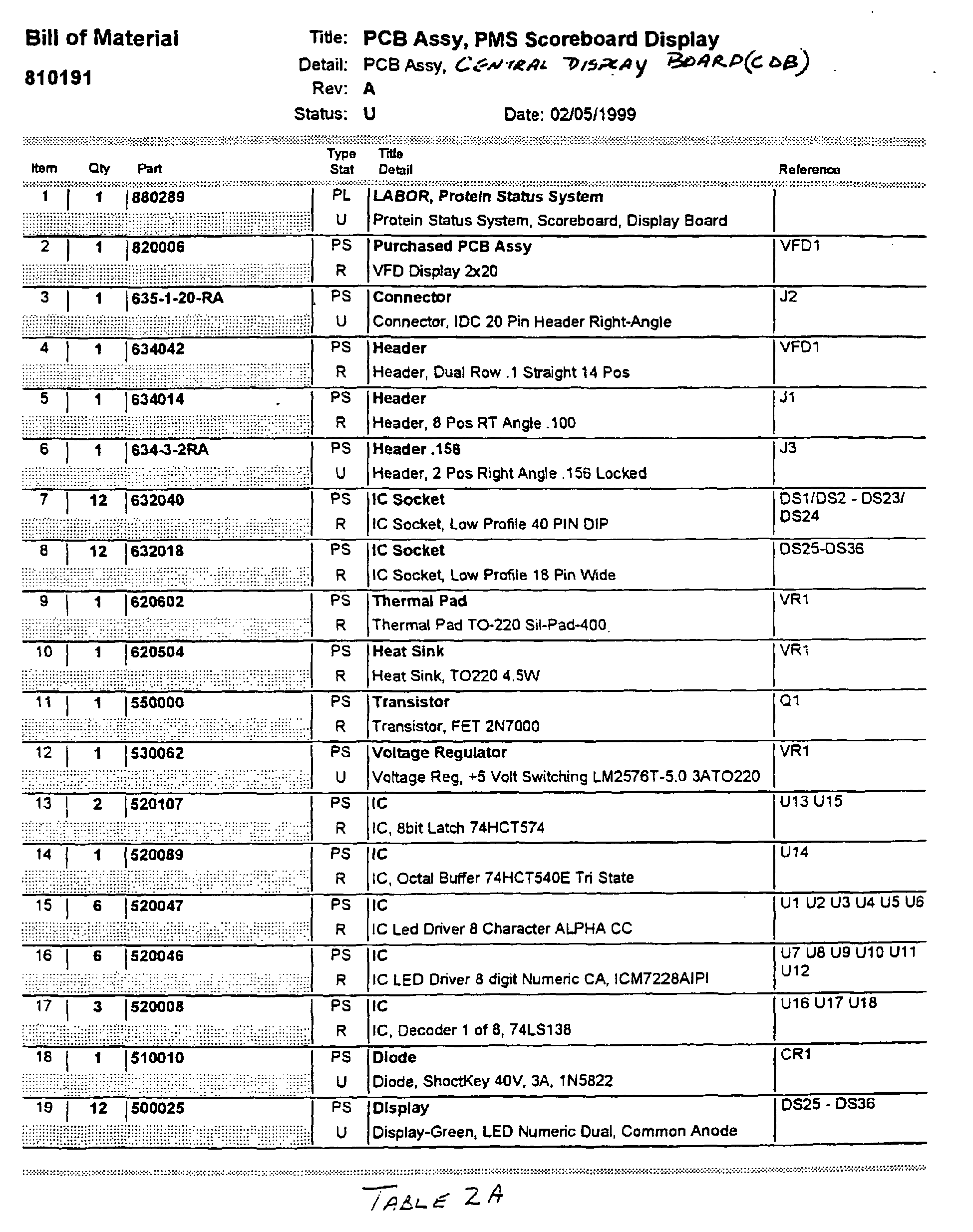

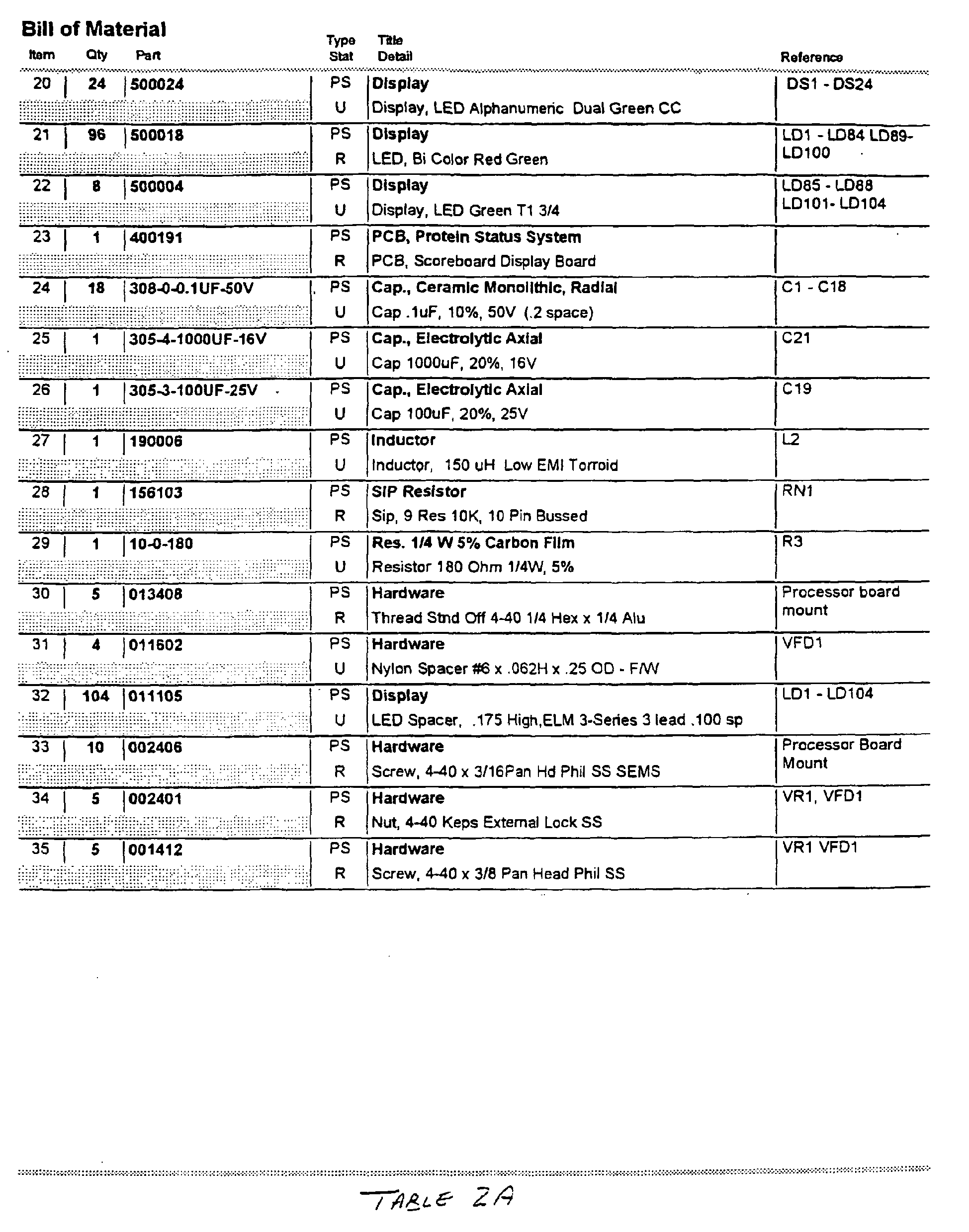

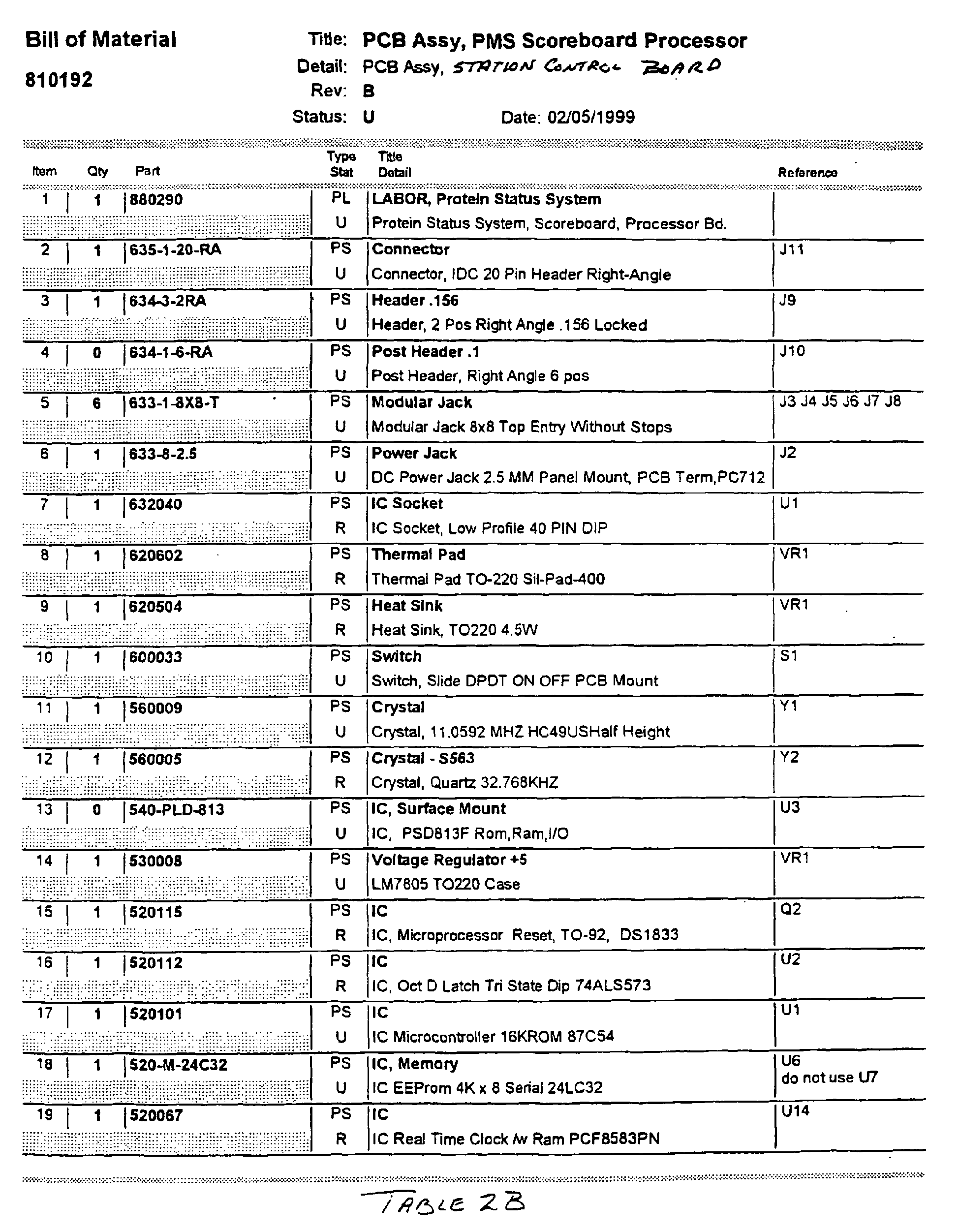

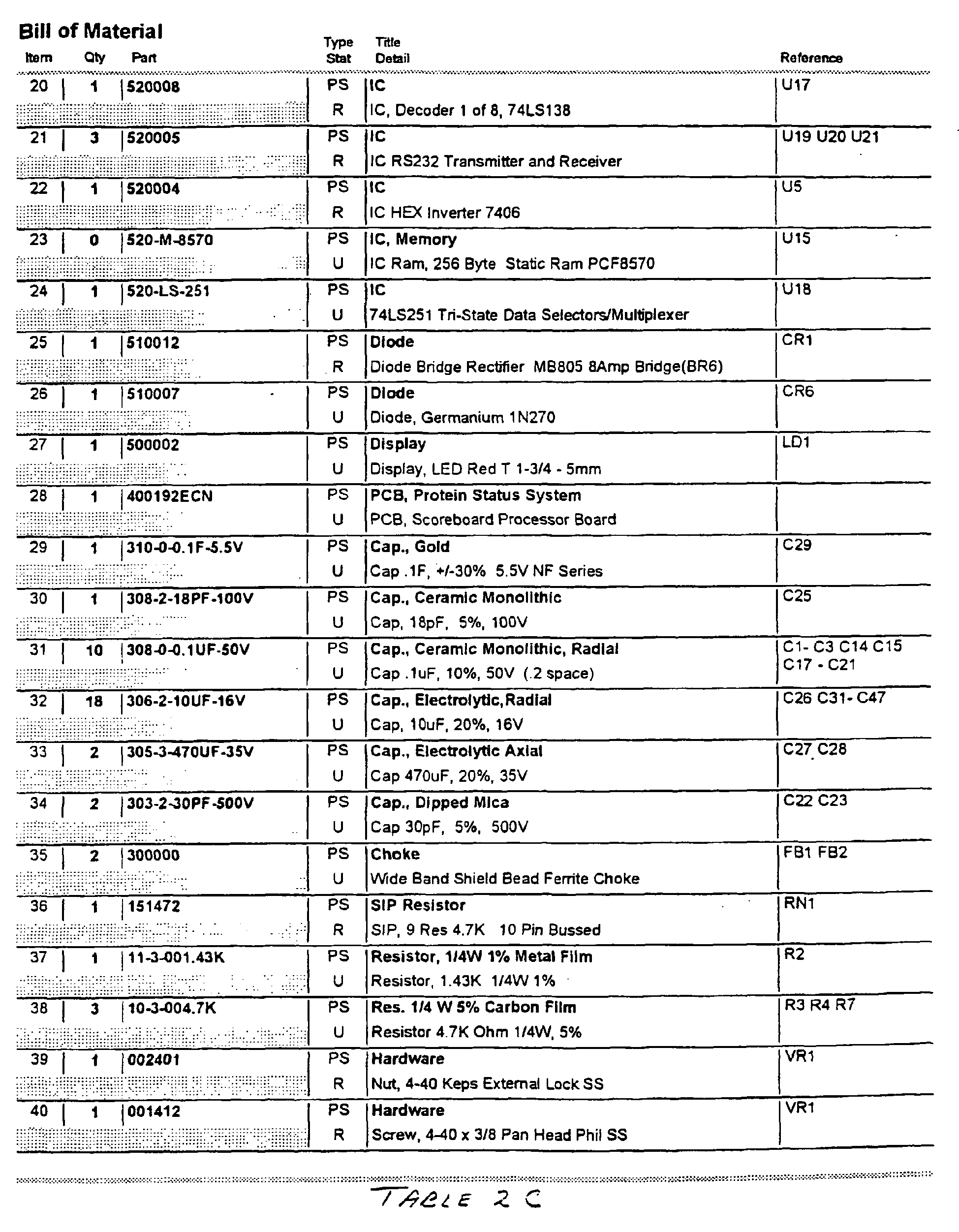

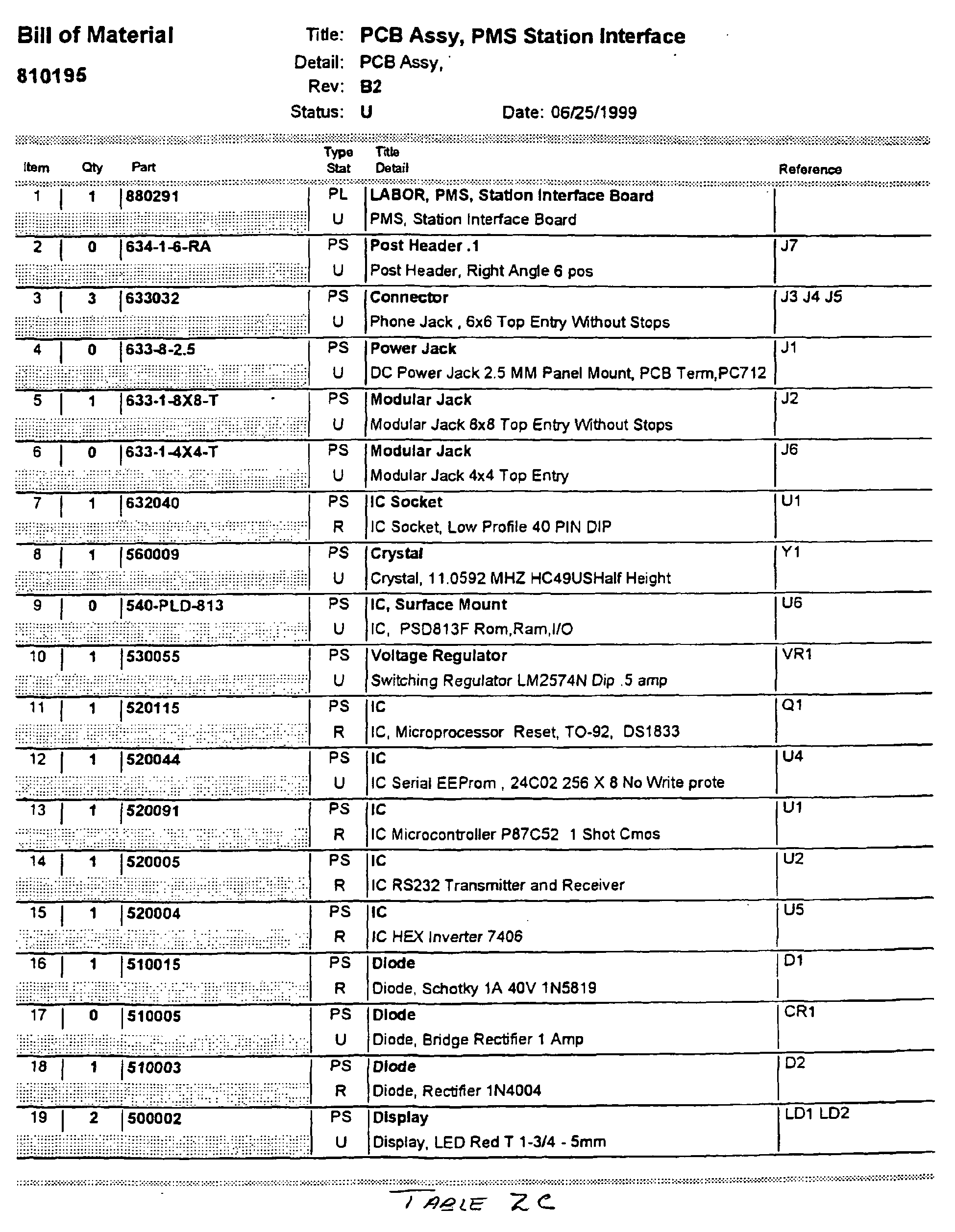

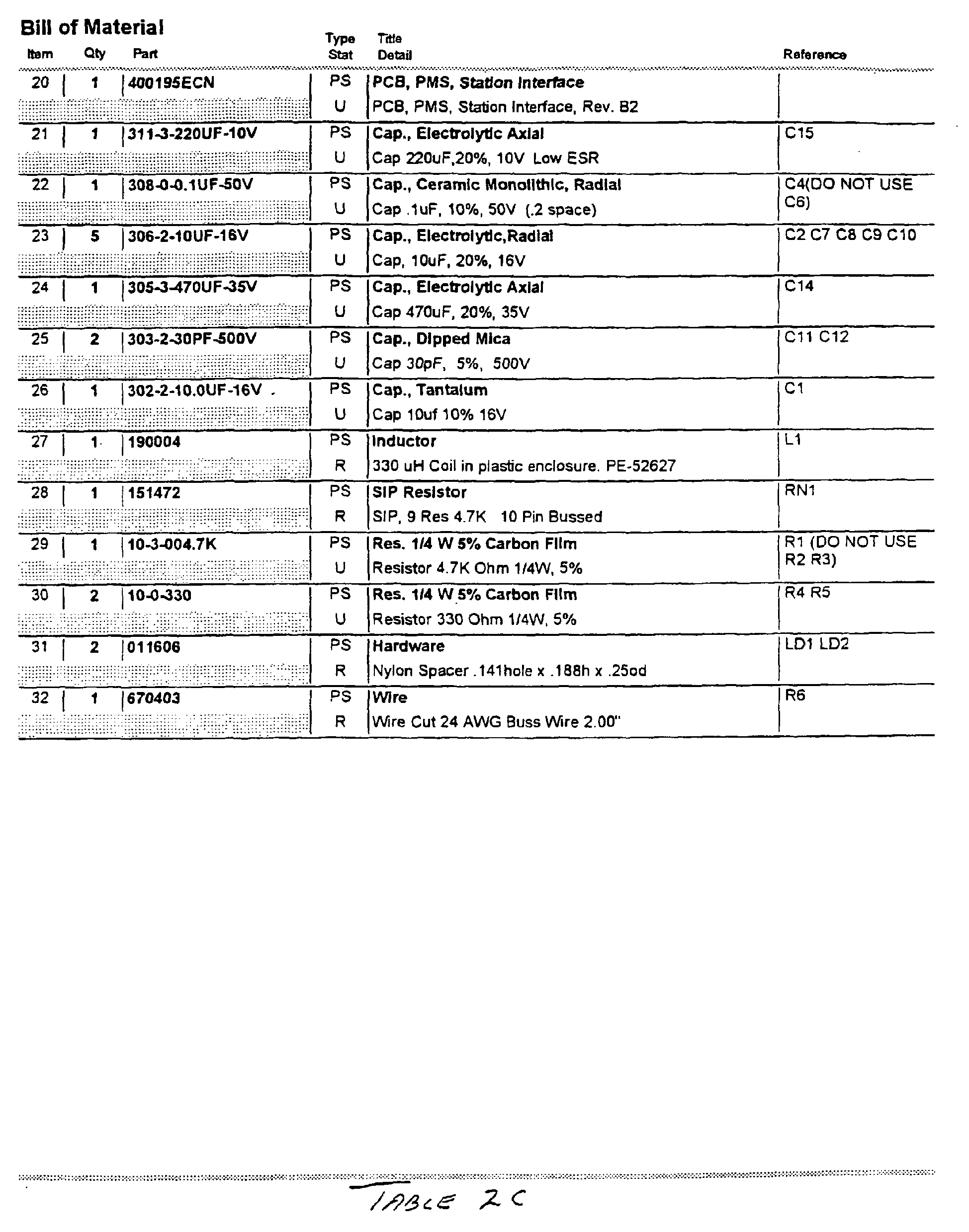

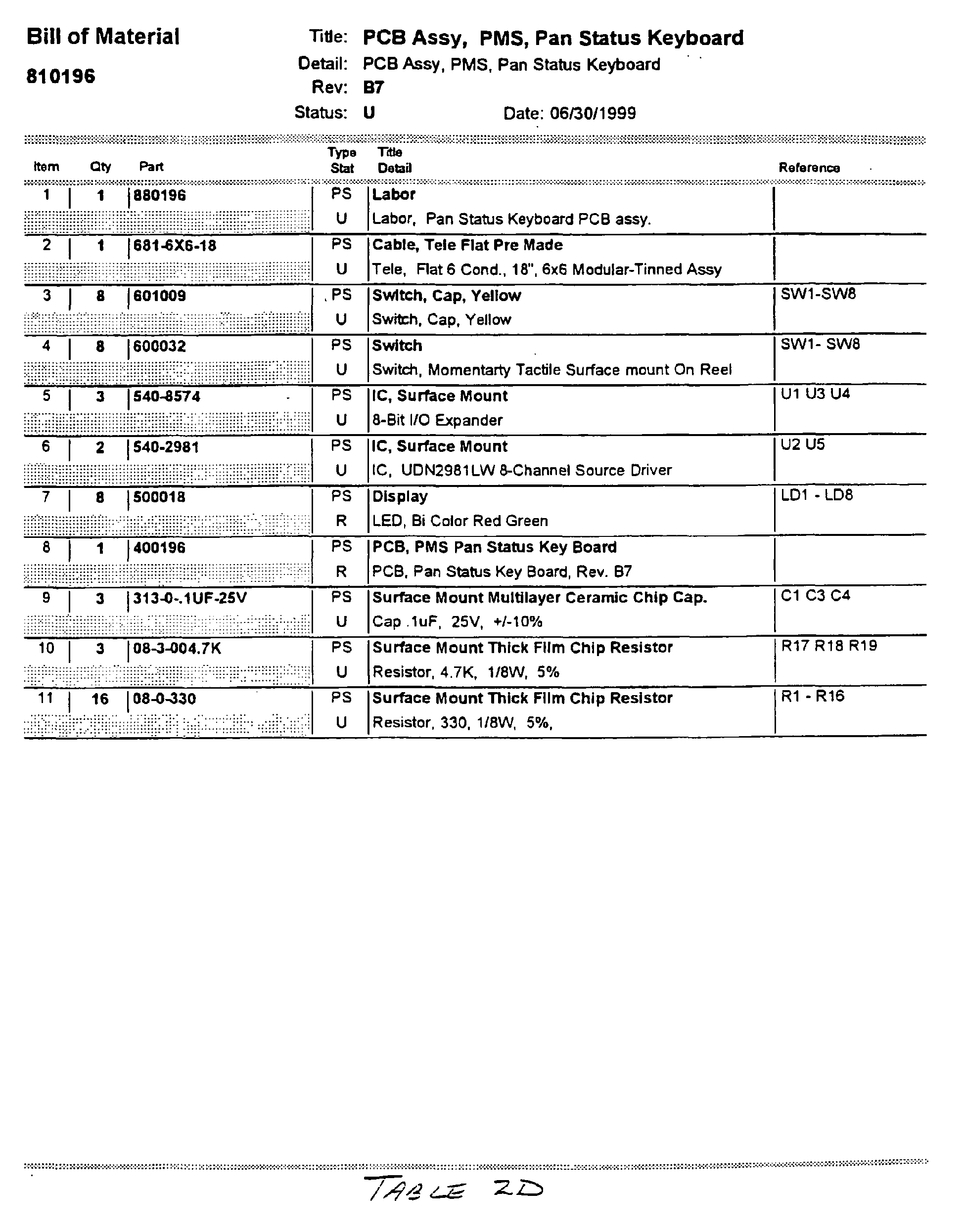

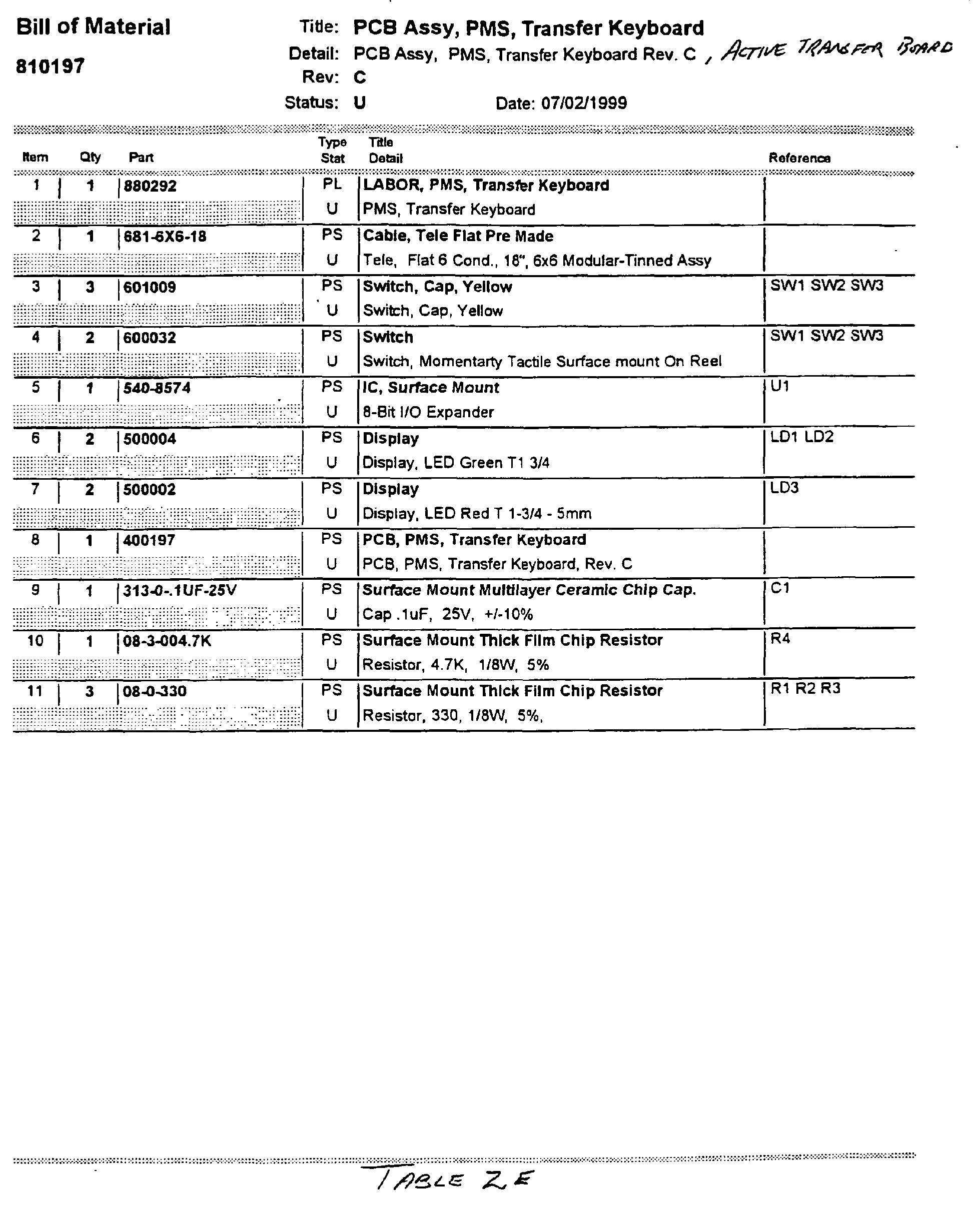

**TABLE 3A**

| | | | | | |
|---|---|---|---|---|---|
| net NET00118 | | | U13-1 | | U5-22 |
| | U1-37 | | C13-B | | U5-16 |
| | DS1-10 | | U8-28 | | U5-31 |
| | DS2-10 | | C8-B | | C5-B |
| | DS4-10 | | U7-28 | | U6-22 |
| | DS3-10 | | C7-B | | U6-16 |
| | | | U10-28 | | U6-31 |
| net GND | | | C10-B | | C6-B |
| | U15-10 | | U9-28 | | |
| | U15-1 | | C9-B | Net D1 | |
| | U14-10 | | U12-28 | | U15-3 |
| | C15-B | | U11-28 | | U14-17 |
| | C14-B | | C12-B | | VFD1-8 |
| | VFD1-1 | | C11-B | | J2-5 |
| | C19-2 | | U1-22 | | U13-3 |
| | CR1-2 | | U1-16 | | U8-11 |
| | VR1-3 | | U1-31 | | U7-11 |
| | VR1-5 | | C1-B | | U10-11 |
| | C21-MINUS | | U2-22 | | U9-11 |
| | J3-2 | | U2-16 | | U12-11 |
| | Q1-1 | | U2-31 | | U11-11 |
| | U17-8 | | C2-B | | U1-9 |
| | C18-B | | U3-22 | | U2-9 |
| | U 18-8 | | U3-16 | | U3-9 |
| | U16-8 | | U3-31 | | U4-9 |
| | C16-B | | C3-B | | U5-9 |
| | C17-B | | U4-22 | | U6-9 |
| | U13-10 | | U4-16 | | |
| | | | U4-31 | Net D3 | |
| | | | C4-B | | U15-5 |
| | U14-15 | | U2-12 | | U11-5 |
| | VFD1-10 | | U3-12 | | |
| | J2-6 | | U4-12 | Net D5 | |
| | U13-5 | | U5-12 | | U15-7 |
| | U8-14 | | U6-12 | | U14-13 |
| | U7-14 | | | | VFD1-12 |
| | U10-14 | net D7 | | | J2-7 |
| | U9-14 | | U15-9 | | U13-7 |
| | U12-14 | | U14-11 | | U8-6 |
| | U11-14 | | VFD1-14 | | U7-6 |
| | U1-11 | | J2-8 | | U10-6 |
| | U2-11 | | U13-9 | | U9-6 |
| | U3-11 | | U8-7 | | U12-6 |
| | U4-11 | | U7-7 | | U11-6 |
| | U5-11 | | U10-7 | | U1-13 |
| | U6-11 | | U9-7 | | U2-13 |
| | | | U12-7 | | U3-13 |
| net D4 | | | U11-7 | | U4-13 |
| | U15-6 | | | | U5-13 |
| | U14-14 | net D6 | | | U6-13 |
| | VFD1-11 | | U 15-8 | | |
| | J2-15 | | U14-12 | Net D2 | |
| | U13-6 | | VFD1-13 | | U15-4 |
| | U8-10 | | J2-14 | | U14-16 |
| | U7-10 | | U13-8 | | VFD1-9 |
| | U10-10 | | U8-5 | | J2-16 |
| | U9-10 | | U7-5 | | U13-4 |
| | U12-10 | | U10-5 | | U8-13 |
| | U11-10 | | U9-5 | | U7-13 |
| | U1-12 | | U12-5 | | U10-13 |
| | U9-13 | | U15-18 | net NET00064 | |
| | U12-13 | | J1-8 | | U 14-2 |
| | U11-13 | | | | RN1-2 |
| | U1-10 | | Net VFD_RS | | J1-1 |
| | U2-10 | | VFD1-4 | | |
| | U3-10 | | J2-9 | net NET00069 | |
| | U4-10 | | | | U14-4 |
| | U5-10 | | Net VFD-RW | | RN1-4 |
| | U6-10 | | VFD1-5 | | J1-3 |
| | | | J2-12 | | |
| net D0 | | | | net NET00070 | |
| | U15-2 | Net VFD_ENABLE | | | U14-5 |
| | U14-18 | | VFD1-6 | | RN1-5 |
| | VFD1-7 | | Q1-3 | | J1-4 |
| | J2-17 | | R3-B | | |
| | U13-2 | | | net NET00071 | |
| | U8-12 | Net NET00004 | | | U 14-6 |
| | U7-12 | | U15-19 | | RN1-6 |
| | U10-12 | | J1-7 | | J1-5 |
| | U9-12 | | | | |
| | U12-12 | Net EARTH | | net NET00072 | |
| | U11-12 | | U14-3 | | U14-7 |
| | U1-8 | | RN1-3 | | RN1-7 |
| | U2-8 | | J1-2 | | |
| | U3-8 | | | net NET00095 | |
| | U4-8 | Net READ_KEY_ROW | | | U14-8 |
| | U5-8 | | U14-19 | | RN1-8 |
| | U6-8 | | U14-1 | | |
| | | | U18-15 | net NET00096 | |
| net NET00020 | | | | | U14-9 |
| | RN1-9 | | U12-9 | net ALPHA_DISP_A0 | |
| | | | U11-9 | | U13-19 |
| net NET00019 | | | | | U1-30 |
| | U11-15 | net A1 | | | U2-30 |
| | DS33-14 | | J2-20 | | U3-30 |
| | LD85-A | | U17-1 U18-1 | | U4-30 U5-30 |
| net WRITE_KEYCOL | | | U16-1 | | U6-30 |
| | U15-11 | | | | |
| | U 17-7 | net A2 | | net NET00001 | |
| | | | J2-2 | | Q1-2 |
| Net SEL_WRITELATCH1 | | | U 17-2 | | U 17-9 |
| | J2-10 | | U18-2 | | |
| | U16-6 | | U16-2 | net ALPHA_DISP_A1 | |
| | | | | | U13-18 |
| Net SEL_WRITELATCH2 | | | net A3 | | U1-29 |
| | J2-11 | | J2-19 | | U2-29 |
| | U17-6 | | U17-3 U18-3 | | U3-29 U4-29 |
| net WRITE_PORT | | | U16-3 | | U5-29 |
| | J2-18 | | | | U6-29 |
| | U 17-4 | net READ_PORT | | | |
| | U16-4 | | J2-13 | net ALPHA_DISP_A2 | |
| | | | U18-4 | | U13-17 |
| net A0 | | | | | U1-28 |
| | J2-1 | Net | | | U2-28 |
| | U8-9 | IO\\FLASH_SELECT | | | U3-28 |
| | U7-9 | | J2-4 | | U4-28 |
| | U10-9 | | U17-5 | | U5-28 |
| | U9-9 | | U18-5 U16-5 | | |
| | U6-28 | net 7SEG_DISP5 | | | U15-20 |
| | | | U17-11 | | U 14-20 |
| Net NET00104 | | | U11-8 | | C15-A |
| | U16-7 | | | | RN1-1 |
| | U13-11 | net 7SEG_DISP6 | | | C14-A |
| | | | U17-10 | | VFD1-2 |
| Net ALPHA_DISP1_WR | | | U12-8 | | L2-1 |
| | | | | | VR1-4 |
| | U16-15 | net ALPHA_DISP2_WR | | | C21-PLUS |
| | U1-17 | | U16-14 | | U17-16 |
| | | | U2-17 | | C18-A |
| Net NET00036 | | | | | U18-6 |
| | U11-22 | net ALPHA_DISP3_WR | | | U18-16 |
| | DS34-13 | | U16-13 | | U16-16 |
| | LD88-A | | U3-17 | | C16-A |
| | | | | | R3-A |
| Net 7SEG_DISP1 | | net ALPHA_DISP4_WR | | | C17-A |
| | U17-15 | | U16-12 | | U13-20 |
| | U7-8 | | U4-17 | | C13-A |
| | | | | | U8-19 |
| Net 7SEG_DISP2 | | net ALPHA_DISP5_WR | | | C8-A |
| | U17-14 | | U16-11 | | U7-19 |
| | U8-8 | | U5-17 | | C7-A |
| | | | | | U10-19 |
| Net 7SEG_DISP3 | | net ALPHA_DISP6_WR | | | C10-A |
| | U17-13 | | U16-10 | | U9-19 |
| | U9-8 | | U6-17 | | C9-A |
| | | | | | U12-19 |
| Net 7SEG_DISP4 | | net +5V | | | U11-19 |
| | U17-12 | | | | C12-A |
| | U10-8 | | | | |
| | C11-A | net NET00080 | | net NET00117 | |
| | U1-1 | | L2-2 | | U1-7 |
| | U1-15 | | CR1-1 | | DS1-12 |
| | U1-14 | | VR1-2 | | DS2-12 |
| | C1-A | | | | DS4-12 |
| | U2-1 | net NET00000 | | | DS3-12 |
| | U2-15 | | U9-21 | | |
| | U2-14 | | LD40-R | net NET00272 | |
| | C2-A | | LD41-R | | U7-20 |
| | U3-1 | | LD39-R | | LD1-G |
| | U3-15 | | LD36-R | | LD2-G |
| | U3-14 | | LD37-R | | LD3-G |
| | C3-A | | LD38-R | | LD4-G |
| | U4-1 | | LD92-R | | LD5-G |
| | U4-15 | | LD42-R | | LD6-G |
| | U4-14 | | | | LD7-G |
| | C4-A | net +12V | | | LD89-G |
| | U5-1 | | C19-1 | | |
| | U5-15 | | VR1-1 | net NET00157 | |
| | U5-14 | | J3-1 | | U7-23 |
| | C5-A | | | | LD1-R |
| | U6-1 | net NET00003 | | | LD2-R |
| | U6-15 | | U9-4 | | LD3-R |
| | U6-14 | | LD91-C | | LD4-R |
| | C6-A | | LD92-C | | LD5-R |
| | | | LD103-C | | LD6-R |
| net NET00016 | | | LD102-C | | LD7-R |
| | U11-17 | | LD101-C | | LD89-R |
| | DS34-14 | | LD104-C | | |
| | LD87-A | | | | |
| net NET00351 | | | LD11-R | | LD2-C |
| | U7-15 | | LD10-R | | DS26-18 |
| | DS25-14 | | LD9-R | | DS26-12 |
| | | | LD8-R | | LD9-C |
| net NET00352 | | | LD90-R | | |
| | U7-16 | | | net NET00394 | |
| | DS25-13 | net NET00309 | | | U7-26 |
| | | | U7-18 | | DS25-17 |
| net NET00372 | | | LD12-G | | DS25-7 |
| | U7-17 | | LD14-G | | LD3-C |
| | DS26-14 | | LD13-G | | DS26-17 |
| | | | LD11-G | | DS26-7 |
| net NET00353 | | | LD10-G | | LD10-C |
| | U7-4 | | LD9-G | | |
| | DS25-4 | | LD8-G | net NET00395 | |
| | DS25-9 | | LD90-G | | U7-2 |
| | DS26-4 | | | | DS25-1 |
| | DS26-9 | net NET00392 | | | DS25-5 |
| | LD89-C | | U7-25 | | LD4-C |
| | LD90-C | | DS25-2 | | DS26-1 |
| | | | DS25-6 | | DS26-5 |
| net NET00373 | | | LD1-C | | LD11-C |
| | U7-22 | | DS26-2 | | |
| | DS26-13 | | DS26-6 | net NET00396 | |
| | | | LD8-C | | U7-1 |
| net NET00308 | | | | | DS25-3 |
| | U7-21 | net NET00393 | | | DS25-8 |
| | LD12-R | | U7-24 | | LD5-C |
| | LD14-R | | DS25-18 | | DS26-3 |
| | LD13-R | | DS25-12 | | DS26-8 |
| | LD 12-C | | DS28-14 | | DS28-10 |
| | | | | | LD27-C |
| net NET00397 | | net NET00404 | | | |
| | U7-3 | | U8-22 | Net NET00426 | |
| | DS25-15 | | DS28-13 | | U8-27 |
| | DS25-10 | | | | DS27-16 |
| | LD6-C | net NET00416 | | | DS27-11 |
| | DS26-15 | | U8-2 | | LD21-C |
| | DS26-10 | | DS27-1 | | DS28-16 |
| | LD13-C | | DS27-5 | | DS28-11 |
| | | | LD18-C | | LD28-C |
| net NET00398 | | | DS28-1 | | |
| | U7-27 | | DS28-5 | Net NET00427 | |
| | DS25-16 | | LD25-C | | U8-20 |
| | DS25-11 | | | | LD15-G |
| | DS26-16 | net NET00418 | | | LD16-G |
| | DS26-11 | | U8-1 | | LD95-G |
| | LD7-C | | DS27-3 | | LD21-G |
| | LD 14-C | | DS27-8 | | LD17-G |
| | | | LD19-C | | LD18-G |
| net NET00399 | | | DS28-3 | | LD20-G |
| | U8-15 | | DS28-8 | | LD19-G |
| | DS27-14 | | LD26-C | | |
| | | | | Net NET00428 | |
| net NET00400 | | net NET00425 | | | U8-23 |
| | U8-16 | | U8-3 | | LD 15-R |
| | DS27-13 | | DS27-15 | | LD16-R |
| | | | DS27-10 | | LD95-R |
| net NET00403 | | | LD20-C | | LD21-R |
| | U8-17 | | DS28-15 | | LD17-R |
| | LD18-R | | LD15-C | | LD96-C |
| | LD20-R | | DS28-2 | | |
| | LD 19-R | | DS28-6 | net NET00006 | |
| | | | LD22-C | | U9-23 |
| Net NET00037 | | | | | LD29-R |
| | U8-21 | net NET00432 | | | LD30-R |
| | LD22-R | | U8-24 | | LD33-R |
| | LD23-R | | DS27-18 | | LD34-R |
| | LD24-R | | DS27-12 | | LD31-R |
| | LD25-R | | LD 16-C | | LD32-R |
| | LD26-R | | DS28-18 | | LD91-R |
| | LD27-R | | DS28-12 | | LD35-R |
| | LD28-R | | LD23-C | | |
| | LD96-R | | | net NET00021 | |
| | | net NET00433 | | | U9-15 |
| Net NET00430 | | | U8-26 | | DS29-14 |
| | U8-18 | | DS27-17 | | LD101-A |
| | LD22-G | | DS27-7 | | |
| | LD23-G | | LD17-C | net NET00435 | |
| | LD24-G | | DS28-17 | | U9-16 |
| | LD25-G | | DS28-7 | | DS29-13 |
| | LD26-G | | LD24-C | | LD102-A |
| | LD27-G | | | | |
| | LD28-G | net NET00023 | | net NET0043 8 | |
| | LD96-G | | U8-4 | | U9-17 |
| | | | DS27-4 | | DS30-14 |
| Net NET00431 | | | DS27-9 | | LD103-A |
| | U8-25 | | LD95-C | | |
| | DS27-2 | | DS28-4 | net NET00439 | |
| | DS27-6 | | DS28-9 | | U9-22 |
| | DS30-13 | | DS30-8 | | |
| | LD 104-A | | | net NET00465 | |
| | | Net NET00460 | | | U9-18 |
| net NET00002 | | | U9-3 | | LD40-G |
| | U11-21 | | DS29-15 | | LD41-G |
| | LD67-R | | DS29-10 | | LD39-G |
| | LD66-R | | LD34-C | | LD36-G |
| | LD65-R | | LD41-C | | LD37-G |
| | LD64-R | | DS30-15 | | LD38-G |
| | LD68-R | | DS30-10 | | LD92-G |
| | LD69-R | | | | LD42-G |
| | LD70-R | Net NET00461 | | | |
| | LD94-R | | U9-27 | net NET00466 | |
| | | | DS29-16 | | U9-25 |
| net NET00451 | | | DS29-11 | | DS29-2 |
| | U9-2 | | LD35-C | | DS29-6 |
| | DS29-1 | | DS30-16 | | LD29-C |
| | DS29-5 | | DS30-11 | | LD36-C |
| | LD32-C | | LD42-C | | DS30-2 |
| | LD39-C | | | | DS30-6 |
| | DS30-1 | Net NET00462 | | | |
| | DS30-5 | | U9-20 | net NET00467 | |
| | | | LD29-G | | U9-24 |
| net NET00453 | | | LD30-G | | DS29-18 |
| | U9-1 | | LD33-G | | DS29-12 |
| | DS29-3 | | LD34-G | | LD30-C |
| | DS29-8 | | LD31-G | | LD37-C |
| | LD33-C | | LD32-G | | DS30-18 |
| | LD40-C | | LD91-G | | DS30-12 |
| | DS30-3 | | LD35-G | | |
| net NET00468 | | | DS31-6 | net NET00484 | |
| | U9-26 | | LD43-C | | U10-2 |
| | DS29-17 | | DS32-2 | | DS31-1 |
| | DS29-7 | | DS32-6 | | DS31-5 |
| | LD31-C | | LD50-C | | LD46-C |
| | LD38-C | | | | DS32-1 |
| | DS30-17 | net NET00478 | | | DS32-5 |
| | DS30-7 | | U10-15 | | LD53-C |
| | | | DS31-14 | | |
| net NET00475 | | | | net NET00486 | |
| | U 10-26 | net NET00479 | | | U10-1 |
| | DS31-17 | | U10-16 | | DS31-3 |
| | DS31-7 | | DS31-13 | | DS31-8 |
| | LD45-C | | | | LD47-C |
| | DS32-17 | net NET00480 | | | DS32-3 |
| | DS32-7 | | U10-17 | | DS32-8 |
| | LD52-C | | DS32-14 | | LD54-C |
| | | | | | |
| net NET00476 | | net NET00481 | | net NET00489 | |
| | U10-24 | | U10-22 | | U10-23 |
| | DS31-18 | | DS32-13 | | LD44-R |
| | DS31-12 | | | | LD43-R |
| | LD44-C | net NET00482 | | | LD97-R |
| | DS32-18 | | U10-4 | | LD47-R |
| | DS32-12 | | DS31-4 | | LD49-R |
| | LD51-C | | DS31-9 | | LD48-R |
| | | | LD97-C | | LD46-R |
| net NET00477 | | | DS32-4 | | LD45-R |
| | U 10-25 | | DS32-9 | | |
| | DS31-2 | | LD98-C | | |
| net NET00490 | | | U10-18 | net NET00498 | |
| | U10-20 | | LD53-G | | U11-24 |
| | LD44-G | | LD52-G | | DS33-18 |
| | LD43-G | | LD51-G | | DS33-12 |
| | LD97-G | | LD50-G | | LD58-C |
| | LD47-G | | LD55-G | | DS34-18 |
| | LD49-G | | LD54-G | | DS34-12 |
| | LD48-G | | LD98-G | | LD65-C |
| | LD46-G | | LD56-G | | |
| | LD45-G | | | net NET00499 | |
| | | net NET00496 | | | U11-25 |
| net NET00491 | | | U10-21 | | DS33-2 |
| | U10-27 | | LD53-R | | DS33-6 |
| | DS31-16 | | LD52-R | | LD57-C |
| | DS31-11 | | LD51-R | | DS34-2 |
| | LD49-C | | LD50-R | | DS34-6 |
| | DS32-16 | | LD55-R | | LD64-C |
| | DS32-11 | | LD54-R | | |
| | LD56-C | | LD98-R | net NET00018 | |
| | | | LD56-R | | U11-16 |
| net NET00492 | | | | | DS33-13 |
| | U10-3 | net NET00497 | | | LD86-A |
| | DS31-15 | | U11-26 | | |
| | DS31-10 | | DS33-17 | net NET00506 | |
| | LD48-C | | DS33-7 | | U11-2 |
| | DS32-15 | | LD59-C | | DS33-1 |
| | DS32-10 | | DS34-17 | | DS33-5 |
| | LD55-C | | DS34-7 | | DS34-1 |
| | | | LD66-C | | DS34-5 |
| net NET00017 | | | | | LD60-C |
| | LD67-C | net NET00517 | | net NET00119 | |
| | | | U11-27 | | U1-5 |
| net NET00508 | | | DS33-16 | | DS1-9 |
| | U11-1 | | DS33-11 | | DS2-9 |
| | DS33-3 | | DS34-16 | | DS4-9 |
| | DS33-8 | | DS34-11 | | DS3-9 |
| | DS34-3 | | LD63-C | | |
| | DS34-8 | | LD70-C | net NET00536 | |
| | LD61-C | | | | U12-24 |
| | LD68-C | net NET00518 | | | DS35-18 |
| | | | U11-3 | | DS35-12 |
| net NET00535 | | | DS33-15 | | LD72-C |
| | U12-26 | | DS33-10 | | DS36-18 |
| | DS35-17 | | DS34-15 | | DS36-12 |
| | DS35-7 | | DS34-10 | | LD79-C |
| | LD73-C | | LD62-C | | |
| | DS36-17 | | LD69-C | net NET00537 | |
| | DS36-7 | | | | U12-25 |
| | LD80-C | net NET00015 | | | DS35-2 |
| | | | U11-23 | | DS35-6 |
| net NET00516 | | | LD59-R | | LD71-C |
| | U11-20 | | LD58-R | | DS36-2 |
| | LD59-G | | LD57-R | | DS36-6 |
| | LD58-G | | LD63-R | | LD78-C |
| | LD57-G | | LD93-R | | |
| | LD63-G | | LD61-R | net NET00538 | |
| | LD93-G | | LD62-R | | U12-15 |
| | LD61-G | | LD60-R | | DS35-14 |
| | LD62-G | | | | |
| | LD60-G | | | net NET00539 | |
| | U12-16 | | U12-1 | | DS35-15 |
| | DS35-13 | | DS35-3 | | DS35-10 |
| | | | DS35-8 | | LD76-C |
| Net NET00540 | | | LD75-C | | DS36-15 |
| | U12-17 | | DS36-3 | | DS36-10 |
| | DS36-14 | | DS36-8 | | LD83-C |
| | | | LD82-C | | |
| Net NET00541 | | | | net NET00555 | |
| | U 12-22 | net NET00550 | | | U12-20 |
| | DS36-13 | | U12-23 | | LD71-G |
| | | | LD71-R | | LD72-G |
| Net NET00542 | | | LD72-R | | LD73-G |
| | U12-4 | | LD73-R | | LD74-G |
| | DS35-4 | | LD74-R | | LD75-G |
| | DS35-9 | | LD75-R | | LD76-G |
| | LD99-C | | LD76-R | | LD77-G |
| | DS36-4 | | LD77-R | | LD99-G |
| | DS36-9 | | LD99-R | | |
| | LD100-C | | | net NET00563 | |
| | | net NET00552 | | | U12-21 |
| Net NET00544 | | | U12-27 | | LD78-R |
| | U12-2 | | DS35-16 | | LD79-R |
| | DS35-1 | | DS35-11 | | LD80-R |
| | DS35-5 | | LD77-C | | LD81-R |
| | LD74-C | | DS36-16 | | LD82-R |
| | DS36-1 | | PS36-11 | | LD83-R |
| | DS36-5 | | LD84-C | | LD84-R |
| | LD81-C | | | | LD100-R |
| | | net NET00554 | | | |
| Net NET00546 | | | U12-3 | net NET00572 | |
| | U12-18 | | DS1-1 | | DS4-17 |
| | LD78-G | | DS2-1 | | DS3-17 |
| | LD79-G | | DS4-1 | | |
| | LD80-G | | DS3-1 | Net NET00126 | |
| | LD81-G | | | | U1-36 |
| | LD82-G | netNET00122 | | | DS1-15 |
| | LD83-G | | U1-35 | | DS2-15 |
| | LD84-G | | DS1-18 | | DS4-15 |
| | LD100-G | | DS2-18 | | DS3-15 |
| | | | DS4-18 | | |
| net NET00120 | | | DS3-18 | | Net NET00127 |
| | U1-6 | | | | U1-32 |
| | DS1-7 | net NET00123 | | | DS1-14 |
| | DS2-7 | | U1-3 | | DS2-14 |
| | DS4-7 | | DS1-13 | | DS4-14 |
| | DS3-7 | | DS2-13 | | DS3-14 |
| | | | DS4-13 | | |
| net NET00014 | | | DS3-13 | Net NET00128 | |
| | U11-18 | | | | U1-4 |
| | LD67-G | net NET00124 | | | DS1-5 |
| | LD66-G | | U1-38 | | DS2-5 |
| | LD65-G | | DS1-6 | | DS4-5 |
| | LD64-G | | DS2-6 | | DS3-5 |
| | LD68-G | | DS4-6 | | |
| | LD69-G | | DS3-6 | Net NET00129 | |
| | LD70-G | | | | U1-39 |
| | LD94-G | net NET00125 | | | DS1-4 |
| | | | U1-33 | | DS2-4 |
| net NET00121 | | | DS1-17 | | DS4-4 |
| | U1-2 | | DS2-17 | | DS3-4 |
| net NET00130 | | net NET00136 | | net NET00141 | |
| | U1-40 | | U1-21 | | U2-19 |
| | DS1-2 | | DS3-16 | | DS8-16 |
| | DS2-2 | | | | |
| | DS4-2 | net NET00137 | | net NET00142 | |
| | DS3-2 | | U1-20 | | U2-20 |
| | | | DS3-11 | | DS7-11 |
| net NET00131 | | | | | |
| | U-34 | net NET00138 | | net NET00143 | |
| | DS1-8 | | U1-19 | | U2-21 |
| | DS2-8 | | DS4-16 | | DS7-16 |
| | DS4-8 | | | | |
| | DS3-8 | net NET00139 | | net NET00146 | |
| | | | U1-18 | | U2-23 |
| net NET00132 | | | DS4-11 | | DS6-11 |
| | U1-26 | | | | |
| | DS1-16 | net NET00012 | | net NET00147 | |
| | | | U11-4 | | U2-24 |
| net NET00133 | | | LD93-C | | DS6-16 |
| | U1-25 | | LD94-C | | |
| | DS1-11 | | LD87-C | net NET00148 | |
| | | | LD86-C | | U2-25 |
| net NET00134 | | | LD85-C | | DS5-11 |
| | U1-24 | | LD88-C | | |
| | DS2-16 | | | net NET00149 | |
| | | net NET00140 | | | U2-26 |
| net NET00135 | | | U2-18 | | DS5-16 |
| | U1-23 | | DS8-11 | | |
| | DS2-11 | | | net NET00165 | |
| | | | | | U2-7 |
| | DS5-12 | | DS8-1 | net NET00174 | |
| | DS6-12 | | DS7-1 | | U2-36 |
| | DS8-12 | | | | DS5-15 |
| | DS7-12 | net NET00170 | | | DS6-15 |
| | | | U2-35 | | DS8-15 |
| net NET00166 | | | DS5-18 | | DS7-15 |
| | U2-37 | | DS6-18 | | |
| | DS5-10 | | DS8-18 | net NET00175 | |
| | DS6-10 | | DS7-18 | | U2-32 |
| | DS8-10 | | | | DS5-14 |
| | DS7-10 | net NET00171 | | | DS6-14 |
| | | | U2-3 | | DS8-14 |
| net NET00167 | | | DS5-13 | | DS7-14 |
| | U2-5 | | DS6-13 | | |
| | DS5-9 | | DS8-13 | net NET00176 | |
| | DS6-9 | | DS7-13 | | U2-4 |
| | DS8-9 | | | | DS5-5 |
| | DS7-9 | net NET00172 | | | DS6-5 |
| | | | U2-38 | | DS8-5 |
| net NET00168 | | | DS5-6 | | DS7-5 |
| | U2-6 | | DS6-6 | | |
| | DS5-7 | | DS8-6 | net NET00177 | |
| | DS6-7 | | DS7-6 | | U2-34 |
| | DS8-7 | | | | DS5-8 |
| | DS7-7 | net NET00173 | | | DS6-8 |
| | | | U2-3 | | DS8-8 |
| net NET00169 | | | DS5-17 | | DS7-8 |
| | U2-2 | | DS6-17 | | |
| | DS5-1 | | DS8-17 | net NET00178 | |
| | DS6-1 | | DS7-17 | | |
| | U2-40 | | U3-21 | | U3-7 |
| | DS5-2 | | DS11-16 | | DS9-12 |
| | DS6-2 | | | | DS10-12 |
| | DS8-2 | net NET00185 | | | DS12-12 |
| | DS7-2 | | U3-20 | | DS11-12 |
| | | | DS11-11 | | |
| Net NET00179 | | | | net NET00191 | |
| | U2-39 | net NET00186 | | | U3-6 |
| | DS5-4 | | U3-19 | | DS9-7 |
| | DS6-4 | | DS12-16 | | DS10-7 |
| | DS8-4 | | | | DS12-7 |
| | DS7-4 | net NET00187 | | | DS11-7 |
| | | | U3-18 | | |
| Net NET00180 | | | DS12-11 | net NET00192 | |
| | U3-26 | | | | U3-2 |
| | DS9-16 | net NET00188 | | | DS9-1 |
| | | | U3-37 | | DS10-1 |
| Net NET00181 | | | DS9-10 | | DS12-1 |
| | U3-25 | | DS 10-10 | | DS11-1 |
| | DS9-11 | | DS12-10 | | |
| | | | DS11-10 | net NET00193 | |
| Net NET00182 | | | | | U3-35 |
| | U3-24 | net NET00189 | | | DS9-18 |
| | DS10-16 | | U3-5 | | DS10-18 |
| | | | DS9-9 | | DS12-18 |
| Net NET00183 | | | DS10-9 | | DS11-18 |
| | U3-23 | | DS12-9 | | |
| | DS10-11 | | DS11-9 | net NET00194 | |
| | | | | | U3-3 |
| Net NET00184 | | net NET00190 | | | DS9-13 |
| | DS10-13 | | DS11-14 | net NET00203 | |
| | DS12-13 | | | | U4-26 |
| | DS11-13 | net NET00199 | | | DS13-16 |
| | | | U3-4 | | |
| net NET00195 | | | DS9-5 | net NET00204 | |
| | U3-38 | | DS 10-5 | | U4-25 |
| | DS9-6 | | DS12-5 | | DS13-11 |
| | DS10-6 | | DS11-5 | | |
| | DS12-6 | | | net NET00205 | |
| | DS11-6 | net NET00200 | | | U4-24 |
| | | | U3-34 | | DS14-16 |
| net NET00196 | | | DS9-8 | | |
| | U3-33 | | DS10-8 | net NET00206 | |
| | DS9-17 | | DS12-8 | | U4-23 |
| | DS10-17 | | DS11-8 | | DS14-11 |
| | DS12-17 | | | | |
| | DS11-17 | net NET00201 | | net NET00207 | |
| | | | U3-40 | | U4-21 |
| net NET00197 | | | DS9-2 | | DS15-16 |
| | U3-36 | | DS10-2 | | |
| | DS9-15 | | DS12-2 | net NET00208 | |
| | DS10-15 | | DS11-2 | | U4-20 |
| | DS12-15 | | | | DS15-11 |
| | DS11-15 | net NET00202 | | | |
| | | | U3-39 | net NET00209 | |
| net NET00198 | | | DS9-4 | | U4-19 |
| | U3-32 | | DS 10-4 | | DS16-16 |
| | DS9-14 | | DS12-4 | | |
| | DS10-14 | | DS11-4 | net NET00210 | |
| | DS12-14 | | | | U4-18 |
| | DS16-11 | net NET00215 | | | DS13-17 |
| | | | U4-2 | | DS14-17 |
| Net NET00211 | | | DS13-1 | | DS16-17 |
| | U4-37 | | DS14-1 | | DS15-17 |
| | DS13-10 | | DS16-1 | | |
| | DS 14-10 | | DS15-1 | net NET00220 | |
| | DS16-10 | | | | U4-36 |
| | DS15-10 | net NET00216 | | | DS13-15 |
| | | | U4-35 | | DS14-15 |
| Net NET00212 | | | DS13-18 | | DS16-15 |
| | U4-5 | | DS 14-18 | | DS15-15 |
| | DS13-9 | | DS16-18 | | |
| | DS 14-9 | | DS15-18 | net NET00221 | |
| | DS16-9 | | | | U4-32 |
| | DS15-9 | net NET00217 | | | DS13-14 |
| | | | U4-3 | | DS14-14 |
| Net NET00213 | | | DS13-13 | | DS16-14 |
| | U4-7 | | DS14-13 | | DS15-14 |
| | DS13-12 | | DS16-13 | | |
| | DS 14-12 | | DS15-13 | net NET00222 | |
| | DS16-12 | | | | U4-4 |
| | DS15-12 | net NET00218 | | | DS13-5 |
| | | | U4-38 | | DS14-5 |
| Net NET00214 | | | DS13-6 | | DS16-5 |
| | U4-6 | | DS 14-6 | | DS 15-5 |
| | DS 13-7 | | DS16-6 | | |
| | DS 14-7 | | DS15-6 | net NET00223 | |
| | DS16-7 | | | | U4-34 |
| | DS 15-7 | net NET00219 | | | DS13-8 |
| | | | U4-33 | | DS 14-8 |
| | DS16-8 | | U5-23 | | DS20-9 |
| | DS15-8 | | DS18-11 | | DS 19-9 |
| | | | | | |
| net NET00224 | | net NET00230 | | Net NET00236 | |
| | U4-40 | | US-21 | | U5-7 |
| | DS13-2 | | DS19-16 | | DS17-12 |
| | DS14-2 | | | | DS18-12 |
| | DS16-2 | net NET00231 | | | DS20-12 |
| | DS15-2 | | U5-20 | | DS 19-12 |
| | | | DS19-11 | | |
| net NET00225 | | | | Net NET00237 | |
| | U4-39 | net NET00232 | | | U5-6 |
| | DS13-4 | | US-19 | | DS 17-7 |
| | DS14-4 | | DS20-16 | | DS18-7 |
| | DS16-4 | | | | DS20-7 |
| | DS15-4 | net NET00233 | | | DS19-7 |
| | | | US-18 | | |
| net NET00226 | | | DS20-11 | Net NET00238 | |
| | U5-26 | | | | U5-2 |
| | DS17-16 | net NET00234 | | | DS17-1 |
| | | | US-37 | | DS18-1 |
| net NET00227 | | | DS17-10 | | DS20-1 |
| | U5-25 | | DS18-10 | | DS19-1 |
| | DS17-11 | | DS20-10 | Net NET00239 | |
| | | | DS19-10 | | U5-35 |
| net NET00228 | | | | | DS17-18 |
| | U5-24 | net NET00235 | | | DS18-18 |
| | DS18-16 | | U5-5 | | DS20-18 |
| | | | DS 17-9 | | DS19-18 |
| net NET00229 | | | DS 18-9 | | |
| net NET00240 | | | DS17-14 | | DS20-4 |
| | U5-3 | | DS18-14 | | DS 19-4 |
| | DS17-13 | | DS20-14 | | |
| | DS18-13 | | DS19-14 | net NET00249 | |
| | DS20-13 | | | | U6-26 |
| | DS19-13 | net NET00245 | | | DS21-16 |
| | | | U5-4 | | |
| net NET00241 | | | DS17-5 | net NET00250 | |
| | U5-38 | | DS18-5 | | U6-25 |
| | DS 17-6 | | DS20-5 | | DS21-11 |
| | DS 18-6 | | DS19-5 | | |
| | DS20-6 | | | net NET00251 | |
| | DS 19-6 | net NET00246 | | | U6-24 |
| | | | U5-34 | | DS22-16 |
| net NET00242 | | | DS17-8 | | |
| | U5-33 | | DS18-8 | net NET00252 | |
| | DS17-17 | | DS20-8 | | U6-23 |
| | DS18-17 | | DS19-8 | | DS22-11 |
| | DS20-17 | | | | |
| | DS19-17 | net NET00247 | | net NET00253 | |
| | | | U5-40 | | U6-21 |
| net NET00243 | | | DS17-2 | | DS23-16 |
| | U5-36 | | DS 18-2 | | |
| | DS17-15 | | DS20-2 | net NET00254 | |
| | DS 18-15 | | DS19-2 | | U6-20 |
| | DS20-15 | | | | DS23-11 |
| | DS19-15 | net NET00248 | | | |
| | | | U5-39 | net NET00255 | |
| net NET00244 | | | DS 17-4 | | U6-19 |
| | U5-32 | | DS18-4 | | DS24-16 |
| net NET00256 | | | DS24-7 | net NET00265 | |
| | U6-18 | | DS23-7 | | U6-33 |
| | DS24-11 | | | | DS21-17 |
| | | net NET00261 | | | DS22-17 |
| net NET00257 | | | U6-2 | | DS24-17 |
| | U6-37 | | DS21-1 | | DS23-17 |
| | DS21-10 | | DS22-1 | | |
| | DS22-10 | | DS24-1 | net NET00266 | |
| | DS24-10 | | DS23-1 | | U6-36 |
| | DS23-10 | | | | DS21-15 |
| | | net NET00262 | | | DS22-15 |
| net NET00258 | | | U6-35 | | DS24-15 |
| | U6-5 | | DS21-18 | | DS23-15 |
| | DS21-9 | | DS22-18 | | |
| | DS22-9 | | DS24-18 | net NET00267 | |
| | DS24-9 | | DS23-18 | | U6-32 |
| | DS23-9 | | | | DS21-14 |
| | | net NET00263 | | | DS22-14 |
| net NET00259 | | | U6-3 | | DS24-14 |
| | U6-7 | | DS21-13 | | DS23-14 |
| | DS21-12 | | DS22-13 | | |
| | DS22-12 | | DS24-13 | net NET00268 | |
| | DS24-12 | | DS23-13 | | U6-4 |
| | DS23-12 | | | | DS21-5 |
| | | net NET00264 | | | DS22-5 |
| net NET00260 | | | U6-38 | | DS24-5 |
| | U6-6 | | DS21-6 | | DS23-5 |
| | DS21-7 | | DS22-6 | | |
| | DS22-7 | | DS24-6 | net NET00269 | |
| | | | DS23-6 | | |
| | U6-34 | net NET00032 | | | |
| | DS21-8 | | J1-8 | | |
| | DS22-8 | | S4-2 | | |
| | DS24-8 | | S5-2 | | |
| | DS23-8 | | S6-2 | | |
| | | | S7-2 | | |
| Net NET00270 | | | S8-2 | | |
| | U6-40 | | | | |
| | DS21-2 | net NET00054 | | | |
| | DS22-2 | | J1-1 | | |
| | DS24-2 | | S4-1 | | |
| | DS23-2 | | | | |
| | | net EARTH | | | |
| Net NET00271 | | | J1-2 | | |
| | U6-39 | | S1-1 | | |
| | DS21-4 | | S5-1 | | |
| | DS22-4 | | | | |
| | DS24-4 | net NET00003 | | | |
| | DS23-4 | | J1-7 | | |
| | | | S1-2 | | |
| Net NET00052 | | | S2-2 | | |
| | J1-3 | | S3-2 | | |
| | S2-1 | | | | |
| | S6-1 | net NET00034 | | | |
| | | | J1-5 | | |
| Net NET00051 | | | S8-1 | | |
| | J1-4 | | | | |
| | S7-1 | | | | |
| | S3-1 | | | | |

**TABLE 3B**

| | | | | | |
|---|---|---|---|---|---|
| net VCC | | | C31-1 | | U1-20 |
| | C15-A | | U18-16 | | C22-B |
| | U15-1 | | C18-A | | C23-B |
| | U 15-8 | | U17-6 | | U3-1 |
| | R4-B | | C17-A | | U3-16 |
| | R3-B | | C19-A | | U3-26 |
| | U7-1 | | U19-16 | | Q2-1 |
| | U7-2 | | C34-2 | | C26-2 |
| | CR6-2 | | C35-1 | | U6-1 |
| | U1-31 | | C20-A | | U6-3 |
| | U1-40 | | C39-2 | | U6-7 |
| | U3-38 | | C40-1 | | C45-2 |
| | U3-15 | | U17-16 | | C1-B |
| | Q2-3 | | U5-14 | | C3-B |
| | C26-1 | | U2-20 | | U2-1 |
| | U6-2 | | U6-8 | | C2-B |
| | C45-1 | | U7-8 | | CR1-3 |
| | C1-A | | | | U20-15 |
| | C3-A | net GND | | | C21-B |
| | C2-A | | C14-B | | U21-15 |
| | RN1-1 | | U14-3 | | C46-2 |
| | R7-B | | U14-4 | | C47-1 |
| | U20-16 | | C29-2 | | C27-MINUS |
| | C21-A | | C15-B | | VR1-2 |
| | U21-16 | | U15-2 | | C28-MINUS |
| | C44-2 | | U15-3 | | C31-2 |
| | C46-1 | | U15-7 | | R2-A |
| | VR1-3 | | U15-4 | | U18-8 |
| | | | U7-3 | | C18-B |
| | | | U7-7 | | C17-B |
| | C19-B | | J8-7 | | U18-7 |
| | U19-15 | | J9-2 | | U17-5 |
| | C35-2 | | U17-8 | | |
| | C36-1 | | U5-7 | net NET00159 | |
| | C20-B | | U2-10 | | U20-14 |
| | C40-2 | | U6-4 | | J5-6 |
| | C41-1 | | U7-4 | | |
| | J5-3 | | | net NET00160 | |
| | J5-1 | net RS232_ADDRO | | | U21-13 |
| | J5-5 | | U1-1 | | J7-2 |
| | J5-7 | | U18-11 | | |
| | J4-3 | | U17-1 | net TXD | |
| | J4-1 | | | | U1-11 |
| | J4-5 | net RS232_ADDR1 | | | U17-4 |
| | J4-7 | | U1-2 | | |
| | J3-3 | | U18-10 | net NET00073 | |
| | J3-1 | | U17-2 | | U 19-6 |
| | J3-5 | | | | C36-2 |
| | J3-7 | net RS232_ADDR2 | | | |
| | J6-3 | | U1-3 | net NET00074 | |
| | J6-1 | | U18-9 | | C32-2 |
| | J6-5 | | U17-3 | | U19-3 |
| | J6-7 | | | | |
| | J7-3 | net WRITE_LATCH_1 | | net NET00076 | |
| | J7-1 | | R7-A | | C33-1 |
| | J7-5 | | U5-6 | | U19-4 |
| | J7-7 | | J11-10 | | |
| | J8-3 | | | net +12V | |
| | J8-1 | net RS232_CE | | | CR1-4 |
| | J8-5 | | U1-4 | | C27-PLUS |
| | VR1-1 | | U19-14 | net NET00047 | |
| | C28-PLUS | | J3-6 | | U20-4 |
| | LD1-A | | | | C38-1 |
| | J5-4 | net NET00009 | | | |
| | J5-8 | | U19-13 | net NET00145 | |
| | J4-4 | | J3-2 | | U17-15 |
| | J4-8 | | | | U19-11 |
| | J3-4 | net NET00016 | | | |
| | J3-8 | | U19-7 | net NET00049 | |
| | J6-4 | | J4-6 | | U20-1 |
| | J6-8 | | | | C37-1 |
| | J7-4 | net NET00029 | | | |
| | J7-8 | | U20-11 | net NET00050 | |
| | J8-4 | | U17-13 | | U20-5 |
| | J8-8 | | | | C38-2 |
| | J9-1 | net NET00030 | | | |
| | | | U20-12 | net NET00051 | |
| net NET00005 | | | U18-2 | | U20-2 |
| | C32-1 | | | | C39-1 |
| | U19-1 | net NET00044 | | | |
| | | | U20-6 | net NET00150 | |
| net NET00006 | | | C41-2 | | U18-4 |
| | U19-2 | | | | U19-12 |
| | C34-1 | net NET00028 | | | |
| | | | U19-8 | net NET00112 | |
| net NET00007 | | | J4-2 | | U20-10 |
| | C33-2 | | | | U17-12 |
| | U19-5 | net NET00045 | | | |
| | | | U20-3 | net NET00054 | |
| net NET00008 | | | C37-2 | | |
| | U20-7 | net NET00098 | | | U21-5 |
| | J6-6 | | U21-14 | | C43-2 |
| | | | J7-6 | | |
| Net NET00062 | | | | net NEXT00108 | |
| | U20-8 | net NET00114 | | | U21-1 |
| | J6-2 | | U21-12 | | C42-1 |
| | | | U18-15 | | |
| Net NET00063 | | | | net NEXT00109 | |
| | U20-13 | net NET00116 | | | U21-4 |
| | J5-2 | | U21-10 | | C43-1 |
| | | | U17-10 | | |
| Net RXD | | | | net NEXT00110 | |
| | U1-10 | net NET00144 | | | U21-3 |
| | U18-5 | | U21-9 | | C42-2 |
| | | | U18-14 | | |
| Net NET00092 | | | | net NET00111 | |
| | U21-7 | net NET00151 | | | U21-6 |
| | J8-6 | | U17-14 | | C47-2 |
| | | | U19-10 | | |
| Net NET00093 | | | | net I/O SELECT | |
| | U21-8 | net NET00152 | | | U1-5 |
| | J8-2 | | U18-3 | | J11-4 |
| | | | U 19-9 | | |
| Net NET00048 | | | | net NET00065 | |
| | U20-9 | net NET00106 | | | U3-14 |
| | U18-1 | | U21-2 | | J10-3 |
| | | | C44-1 | | |
| Net NET00113 | | | | net NET00066 | |
| | U21-11 | net NET00107 | | | U3-13 |
| | U17-11 | | | | J10-2 |
| net NET00037 | | | U1-36 | | U2-7 |
| | CR1-1 | | U3-33 | | RN1-7 |
| | FB2-2 | | U2-5 | | J11-7 |
| | FB2-3 | | RN1-5 | | |
| | | | J11-6 | Net D2 | |
| net NET00072 | | | | | U1-37 |
| | FB1-2 | net D4 | | | U3-32 |
| | FB1-3 | | U1-35 | | U2-4 |
| | S1-2 | | U3-34 | | RN1-4 |
| | S1-5 | | U2-6 | | J11-16 |
| | | | RN1-6 | | |
| net NET00011 | | | J11-15 | Net D0 | |
| | FB1-1 | | | | U1-39 |
| | FB1-4 | net D7 | | | U3-30 |
| | J2-1 | | U1-32 | | U2-2 |
| | | | U3-37 | | RN1-2 |
| net NET00012 | | | U2-9 | | J11-17 |
| | FB2-1 | | RN1-9 | | |
| | FB2-4 | | J11-8 | Net A0 | |
| | J2-3 | | | | U3-29 |
| | | net D6 | | | U2-19 |
| net D I | | | U1-33 | | J11-1 |
| | U1-38 | | U3-36 | | |
| | U3-31 | | U2-8 | Net NET00064 | |
| | U2-3 | | RN1-8 | | U 14-6 |
| | RN1-3 | | J11-14 | | U15-6 |
| | J11-5 | | | | R3-A |
| | | net D5 | | | U7-6 |
| net D3 | | | U1-34 | | U1-14 |
| | | | U3-35 | | U6-6 |
| net NET00035 | | | R4-A | net WRITE_LATCH_2 | |
| | U1-21 | | U7-5 | | U1-12 |
| | U3-39 | | U1-15 | | U5-5 |
| | | | U6-5 | | J11-11 |
| net WRITE_PORT | | | | | |
| | U1-16 | net A1 | | net NET00002 | |
| | U3-47 | | U3-28 | | U1-9 |
| | J11-18 | | U2-18 | | U5-3 |
| | | | J11-20 | | Q2-2 |
| net VFD_RS | | | | | |
| | U1-6 | net READ_PORT | | net A2 | |
| | J11-9 | | U1-17 | | U3-27 |
| | | | U3-50 | | U2-17 |
| net VFD_RW | | | J11-13 | | J11-2 |
| | U1-7 | | | | |
| | J11-12 | net NET00067 | | net NET00032 | |
| | | | U3-12 | | U3-20 |
| net NET00013 | | | J10-1 | | J10-6 |
| | R2-B | | | | |
| | LD1-C | net NET00025 | | net A3 | |
| | | | U3-19 | | U3-25 |
| net NET00001 | | | J10-5 | | U2-16 |
| | CR1-2 | | | | J11-19 |
| | S1-1 | net NET00026 | | | |
| | S1-4 | | U3-17 | net ~RESET | |
| | | | J10-4 | | U3-48 |
| net NET00061 | | | | | U5-4 |
| | U14-5 | net NET00003 | | | |
| | U15-5 | | U1-27 | net NET00004 | |
| | | | U3-45 | | |
| | U1-26 | | Y2-1 | | |
| | U3-44 | | C25-B | | |
| | | | U14-1 | | |
| net NET00010 | | | | | |
| | U1-25 | Net NET00019 | | | |
| | U3-43 | | U1-22 | | |
| | | | U3-40 | | |
| net NET00017 | | | | | |
| | U1-24 | Net NET00000 | | | |
| | U3-42 | | C25-A C 14-A | | |
| net NET00018 | | | U 14-8 | | |
| | U1-23 | | C29-1 | | |
| | U3-41 | | CR6-1 | | |
| net NET00274 | | | Net NET00031 | | |
| | U1-18 | | U1-28 | | |
| | Y1-2 | | U3-46 | | |
| | C23-A | | | | |
| | | Net ALE | | | |
| net NET00041 | | | U1-30 | | |
| | U 1-29 | | U3-10 | | |
| | U3-49 | | U2-11 | | |
| | | | | | |
| net NET00277 | | Net NET00043 | | | |
| | U-19 | | Y2-2 | | |
| | C22-A | | U14-2 | | |
| | Y1-1 | | | | |
| | | | | | |
| net NET00033 | | | | | |

**TABLE 3C**

| | | | | | |
|---|---|---|---|---|---|
| net GND | | | U6-26 | | U1-2 |
| | CR1-3 | | C6-B | | RN1-3 |
| | SW1-2 | | J3-5 | | J3-4 |
| | U4-1 | | J3-6 | | |
| | U4-3 | | J4-5 | Net SDATA | |
| | U4-7 | | J4-6 | | U4-5 |
| | Q1-1 | | J5-5 | | U1-8 |
| | U1-20 | | J5-6 | | RN1-9 |
| | VR1-4 | | J6-4 | | |
| | VR1-2 | | U5-7 | Net NET00028 | |
| | VR1-3 | | U4-4 | | CR1-1 |
| | D1-2 | | | | J1-1 |
| | C15-2 | net NET00000 | | | |
| | C14-MINUS | | SW1-1 | Net NET00032 | |
| | C4-B | | R1-B | | U1-15 |
| | J2-3 | | U5-11 | | U5-5 |
| | J2-1 | | | | U5-1 |
| | J2-5 | net NET00001 | | | |
| | J2-7 | | U5-10 | Net NET00036 | |
| | U2-10 | | U1-14 | | U5-12 |
| | U2-8 | | | | U6-48 |
| | U2-15 | net NET00002 | | | |
| | C7-1 | | LD2-C | Net NET00037 | |
| | C2-2 | | U5-4 | | U1-11 |
| | C1-2 | | | | U2-11 |
| | C11-B | net NET00003 | | | |
| | C12-B | | J2-6 | Net VCC | |
| | U6-1 | | U2-13 | | R1-A |
| | U6-16 | | | | U4-2 |
| | | net NET00043 | | | Q1-3 |
| | U1-31 | | J4-4 | | U6-30 |
| | U1-40 | | | | |
| | VR1-1 | net EE_SCLK | | net NET00040 | |
| | L1-2 | | U4-6 | | U1-38 |
| | L1-4 | | U1-7 | | U6-31 |
| | C15-1 | | RN1-8 | | |
| | C4-A | | | net NET00041 | |
| | U2-16 | net NET00005 | | | U1-37 |
| | C8-2 | | U1-1 | | U6-32 |
| | C2-1 | | RN1-2 | | |
| | C1-1 | | J3-3 | net NET00044 | |
| | U6-38 | | | | U1-36 |
| | U6-15 | net NET00008 | | | U6-33 |
| | C6-A | | CR1-4 | | |
| | RN1-1 | | VR1-5 | net NET00045 | |
| | R6-B | | D2-1 | | U1-35 |
| | R5-A | | C 14-PLUS | | U6-34 |
| | R4-A | | | | |
| | R3-A | net NET00006 net NET00046 | | | |
| | R2-A | | U1-3 | | U1-34 |
| | U5-14 | | RN1-4 | | U6-35 |
| | U4-8 | | J4-3 | | |
| | | | | net NET00026 | |
| Net NET00038 | | net RESET | | | U1-5 |
| | U1-10 | | Q1-2 | | RN1-6 |
| | U2-12 | | U1-9 | | J5-3 |
| | | | U5-13 | | |
| Net NET00042 | | | | net NET00031 | |
| | U1-4 | net NET00039 | | | U1-6 |
| | RN1-5 | | U1-39 | | RN1-7 |
| | J5-4 | net NET00054 | | | U6-20 |
| | | | U1-26 | | |
| net NET00047 | | | U6-44 | Net NET00062 | |
| | U1-33 | | | | J7-5 |
| | U6-36 | net NET00055 | | | U6-19 |
| | | | U1-27 | | |
| net NET00048 | | | U6-45 | Net NET00064 | |
| | U1-32 | | | | J7-4 |
| | U6-37 | net NET00056 | | | U6-17 |
| | | | U1-28 | | |
| net NET00049 | | | U6-46 | Net NET00065 | |
| | U1-21 | | | | J7-3 |
| | U6-39 | net NET00057 | | | U6-14 |
| | | | U1-16 | | |
| net NET00050 | | | U6-47 | Net NET00066 | |
| | U1-22 | | | | J7-2 |
| | U6-40 | net NET00058 | | | U6-13 |
| | | | U1-17 | | |
| net NET00051 | | | U6-50 | Net NET00067 | |
| | U1-23 | | | | J7-1 |
| | U6-41 | net NET00059 | | | U6-12 |
| | | | U1-29 | | |
| net NET00052 | | | U6-49 | Net NET00009 | |
| | U1-24 | | | | J3-2 |
| | U6-42 | net NET00060 | | | J4-2 |
| | | | U1-30 | | R6-A |
| net NET00053 | | | U6-10 | | J5-2 |
| | U1-25 | | | | |
| | U6-43 | net NET00061 | | Net NET00274 | |
| | | | J7-6 | | U1-18 |
| | Y1-2 | | C9-2 | | R2-B |
| | C12-A | | | | U5-9 |
| | | net NET00076 | | | U5-6 |
| Net NET00277 | | | U2-4 | | J6-1 |
| | U1-19 | | C10-1 | | |
| | Y1-1 | | | net NET00267 | |
| | C11-A | net +12V | | | CR1-2 |
| | | | D2-2 | | J1-3 |
| Net NET00138 | | | J2-4 | | |
| | U2-1 | | J2-8 | net NET00010 | |
| | C9-1 | | | | VR1-6 |
| | | net NET00020 | | | VR1-8 |
| Net NET00143 | | | LD1-C | | |
| | U2-2 | | U5-3 | net NET00013 | |
| | C8-1 | | U5-2 | | VR1-7 |
| | | | | | L1-1 |
| Net NET00069 | | net NET00022 | | | L1-3 |
| | U2-5 | | R4-B | | D1-1 |
| | C 10-2 | | LD1-A | | |
| | | | | | |
| Net NET00070 | | net NET00025 | | | |
| | J2-2 | | R5-B | | |
| | U2-14 | | LD2-A | | |
| | | | | | |
| Net NET00073 | | net NET00027 | | | |
| | U2-6 | | R3-B | | |
| | C7-2 | | U5-8 | | |
| | | | J6-2 | | |
| Net NET00074 | | | | | |
| | U2-3 | net NET00030 | | | |

**TABLE 3D**

| | | | | | |
|---|---|---|---|---|---|
| Net NET00000 | | | LD3-C | | U2-18 |
| | U2-1 | | LD4-C | | R1-B |
| | U1-4 | | J1-1 | | |
| | | | J2-2 | Net NET00009 | |
| net NET00001 | | | | | U2-17 |
| | U2-2 | net NET00002 | | | R2-B |
| | U1-5 | | U2-3 | | |
| | | | U1-6 | Net NET00012 | |
| net GND | | | | | U2-13 |
| | J1-5 | net NET00003 | | | R6-B |
| | U3-1 | | U2-5 | | |
| | U3-8 | | U1-9 | Net NET00015 | |
| | C3-B | | | | R14-A |
| | SW1-3 | net NET00004 | | | LD7-G |
| | SW1-4 | | U2-7 | | |
| | SW2-3 | | U1-11 | Net NET00025 | |
| | SW2-4 | | | | R3-A |
| | SW3-3 | net NET00005 | | | LD2-R |
| | SW3-4 | | U2-4 | | |
| | SW4-3 | | U1-7 | Net NET00027 | |
| | SW4-4 | | | | R7-A |
| | U2-10 | net NET00006 | | | LD4-R |
| | U1-2 | | U2-6 | | |
| | U1-1 | | U1-10 | Net NET00029 | |
| | U1-8 | | | | R11-A |
| | C1-B | net NET00007 | | | LD6-R |
| | LD1-C | | U2-8 | | |
| | LD2-C | | U1-12 | Net NET00031 | |
| | | | | | R16-A |
| | | net NET00008 | | | LD8-G |
| net NET00034 | | | U3-4 | | U4-6 |
| | U5-8 | | SW1-1 | | |
| | U4-12 | | SW1-2 | net NET00049 | |
| | | | | | U5-2 |
| net NET00035 | | | net NET00040 | | U4-5 |
| | U5-6 | | U5-12 | | |
| | U4-10 | | R15-B | net NET00045 | |
| | | | | | U5-17 |
| net NET00036 | | net NET00041 | | | R10-B |
| | U5-7 | | U5-14 | | |
| | U4-11 | | R13-B | net NET00052 | |
| | | | | | U3-5 |
| net NET00037 | | net NET00042 | | | SW2-1 |
| | U5-5 | | U5-18 | | SW2-2 |
| | U4-9 | | R9-B | | |
| | | | | net NET00053 | |
| net NET00033 | | net NET00043 | | | U3-6 |
| | U5-1 | | U2-14 | | SW3-1 |
| | U4-4 | | R5-B | | SW3-2 |
| | | | | | |
| net NET00038 | | net NET00044 | | net NET00054 | |
| | U5-11 | | U5-16 | | U3-7 |
| | R16-B | | R11-B | | SW4-1 |
| | | | | | SW4-2 |
| net NET00039 | | net NET00047 | | | |
| | U5-13 | | U5-4 | net NET00055 | |
| | R14-B | | U4-7 | | U3-9 |
| | | | | | J2-6 |
| net NET00051 | | net NET00048 | | | |
| | | | U5-3 | net NET00056 | |
| | U3-10 | | U5-10 | | R17-A |
| | J2-7 | | U4-2 | | J2-1 |
| | | | U4-8 | | |
| net SCLK | | | C4-B | net NET00016 | |
| | J1-3 | | J4-5 | | R1-A |
| | U3-14 | | SW5-3 | | LD1-R |
| | U1-14 | | SW5-4 | | |
| | R17-B | | SW6-3 | net NET00017 | |
| | J2-4 | | SW6-4 | | R2-A |
| | | | SW7-3 | | LD1-G |
| net NET00068 | | | SW7-4 | | |
| | U3-11 | | SW8-3 | netNET00018 | |
| | J2-8 | | SW8-4 LD5-C | | R5-A LD3-R |
| net SDATA | | | LD6-C | | |
| | J1-4 | | LD7-C | net NET00019 | |
| | R18-B | | LD8-C | | R9-A |
| | U3-15 | | J4-1 | | LD5-R |
| | U1-15 | | J3-2 | | |
| | J2-5 | | | net NET00020 | |
| | | net VCC | | | U2-12 |
| net VCC_1 | | | J1-2 | | R7-B |
| | U5-9 | | R18-A | | |
| | U4-16 | | U3-16 | net NET00021 | |
| | U4-1 | | U3-2 | | R6-A |
| | C4-A | | C3-A | | LD3-G |
| | J4-2 | | U2-9 | | |
| | J3-1 | | U1-16 | net NET00022 | |
| | | | C1-A | | R10-A |
| net GND-COM | | | R19-A | | LD5-G |
| net NET00023 | | | R12-A | | |
| | U2-11 | | LD6-G | | |
| | R8-B | | | | |
| | | net NET00032 | | | |
| net NET00010 | | | R15-A | | |
| | U2-16 | | LD8-R | | |
| | R3-B | | | | |
| | | net NET00014 | | | |
| net NET00011 | | | U5-15 | | |
| | U2-15 | | R12-B | | |
| | R4-B | | | | |
| | | net FRONT/~BACK | | | |
| net NET00013 | | | J1-6 | | |
| | U3-12 | | U3-3 | | |
| | J2-9 | | U1-3 | | |
| | | | R19-B | | |
| net NET00024 | | | J2-3 | | |
| | R13-A | | | | |
| | LD7-R | net NET00050 | | | |
| | | | U4-14 | | |
| net NET00026 | | | J4-3 | | |
| | R4-A | | J3-4 | | |
| | LD2-G | | | | |
| | | net NET00057 | | | |
| net NET00028 | | | U4-3 | | |
| | R8-A | | J4-6 | | |
| | LD4-G | | J3-3 | | |
| | | | | | |
| net NET00030 | | net NET00060 | | | |
| | | | U4-15 | | |

**TABLE 3E**

| |
|---|
| net GND: C1-B, J1-5, J1-1, U1-8, SW1-3, SW1-4, SW2-3, SW2-4, SW3-3, SW3-4. |
| net NET00001: J1-6, R4-B, U1-3 |
| net VCC: R1-A, R3-A, R2-A,C1-A, J1-2, R4-A,U1-16, U1-2, U1-1 |
| net NET00002: J1-4, U1-15 |
| net NET00003 : J1-3,U1-14 |
| net NET00006: U1-4, LD1-C |
| net NET00007: LD2-C, U1-5 |
| net NET00008: LD3-C, U1-6 |
| net NET00009: R1-B, LD1-A |
| net NET00010: R2-B, LD2-A |
| net NET00011: R3-B, LD3-A |
| net NET00012: U1-10, SW3-1, SW3-2 |
| net NET00013: U1-9, SW2-1, SW2-2 |
| net NET00014: U1-7, SW1-1, SW1-2 |

### Station/Worker Interface Board

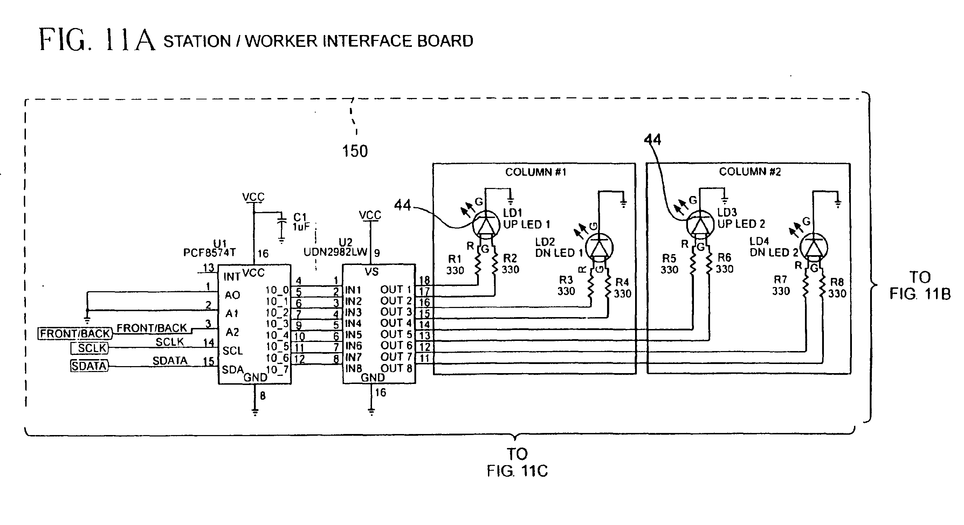

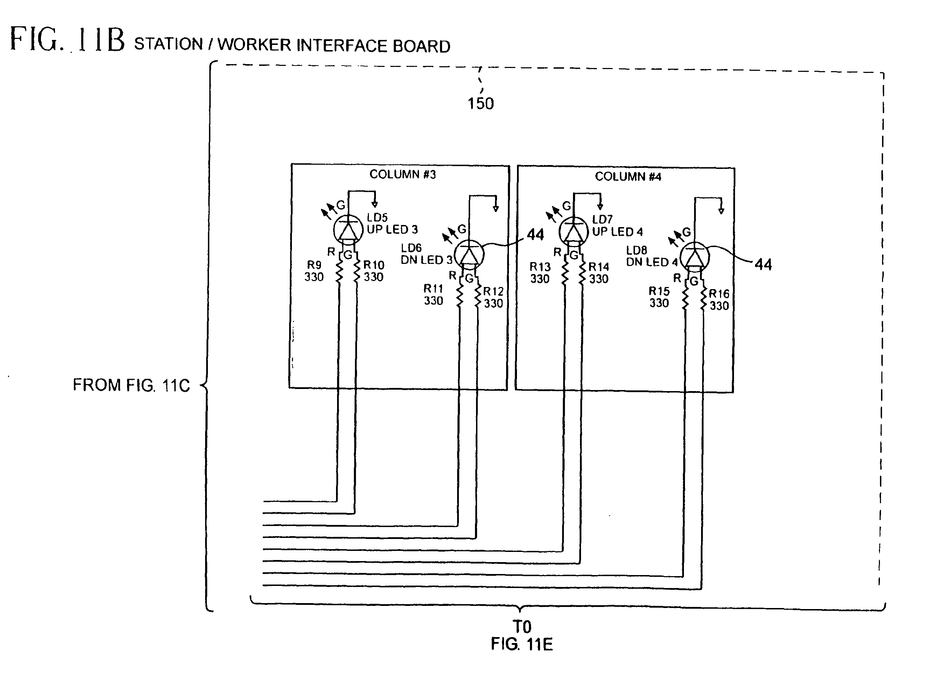

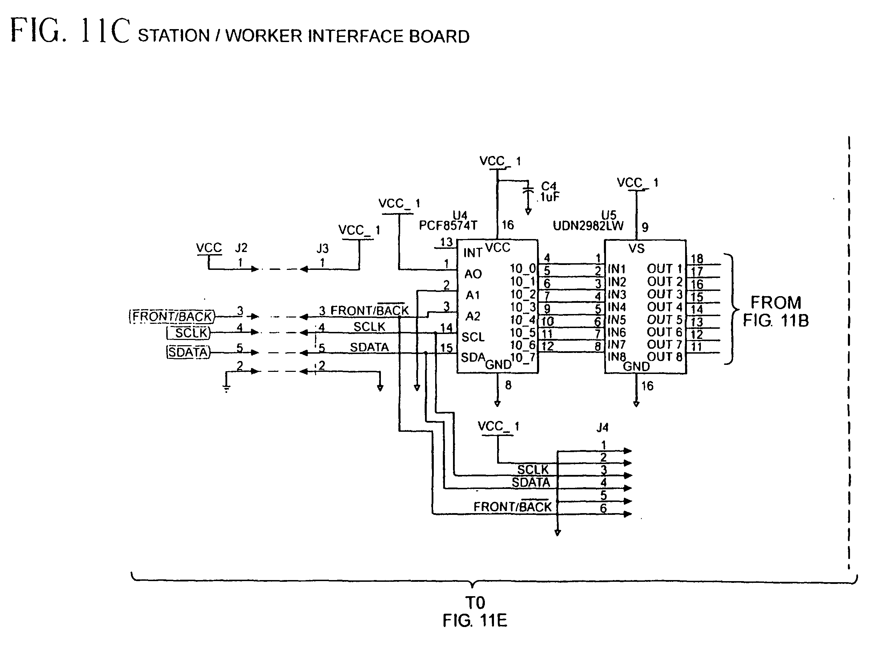

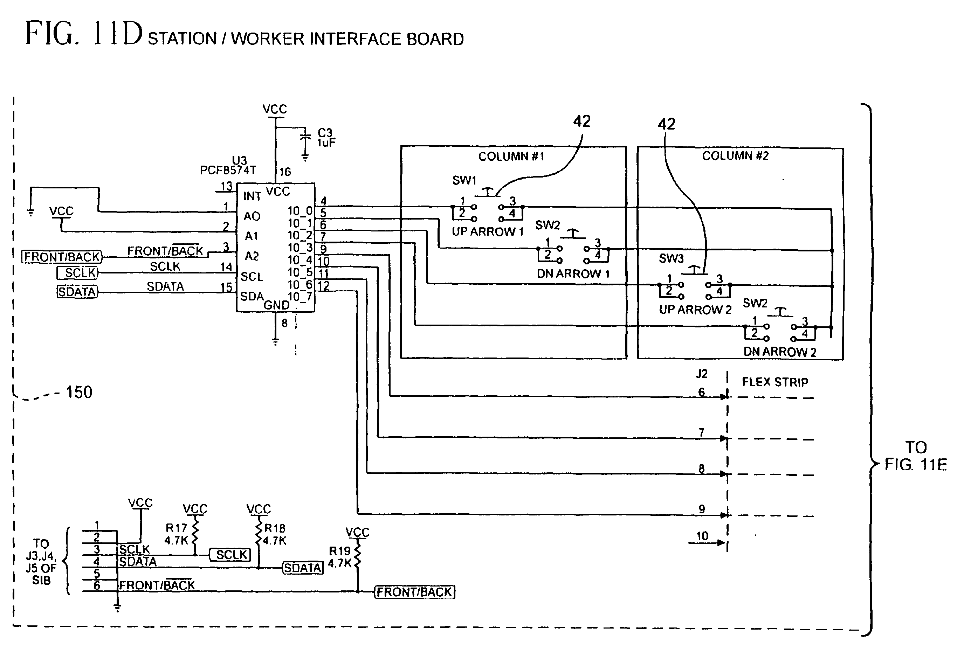

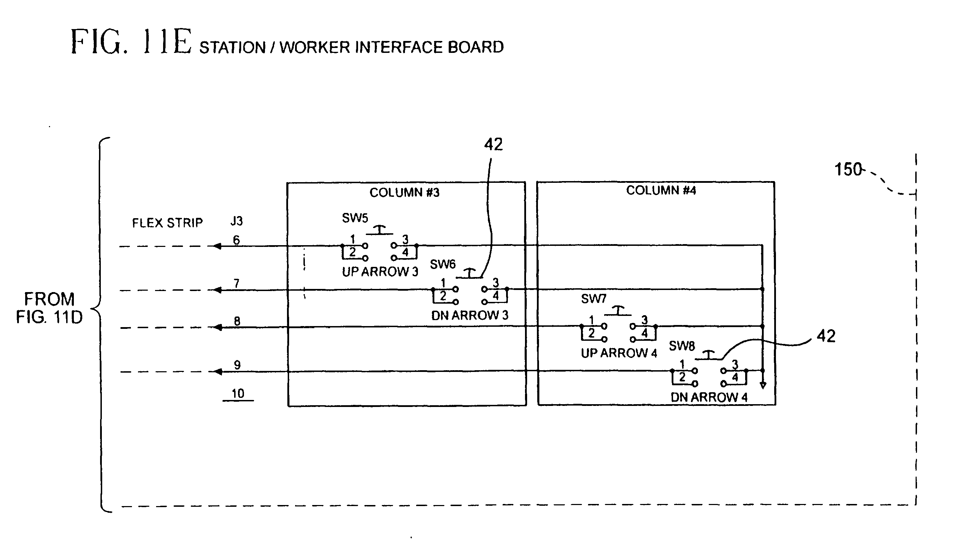

Figures 11 A-11E are schematic diagrams of the station/worker interface board (SWIB) 150 shown in Figure 10. The SWIB 150 includes serially-addressable ports PCF8574T U1, U3, U4, drivers UDN2982LW U2, U5, LED's LD1-LD8, 330 ohm resistors R1-R16, 4.7k ohm resistors R17-R19, 0.1uF capacitor C1, C3, C4 and switches SW1-SW8. The LED's LD1-LD8 correspond to the product status indicators 44 on the SWIB 150, and the switches SW1-SW8 correspond to the product status switches 42 on the SWIB 150.

A connector J1 provides electrical connection between selected signals on the SWIB 150 and the station interface board (SIB) 152. The serially-addressable ports PCF8574T U1, U3, U4 and the drivers UDN2982LW U2, U5 enable control of the product status indicators 44, and monitoring of the product status switches 42 via serialized data to and from the SIB 152. Groups of two LED's and two switches, such as LED's LD1-LD2 and switches SW1-SW2 correspond to one column on one of the Stations 12, 14, 16. The 47k ohm resistors R17, R18 and R19 are used to pull the corresponding signals up to VCC, and the 0.1uF capacitors C1, C3, C4 provide bypass capacitance for the SWIB 150.

The connector J1 for the SWIB 150 corresponding to the front of the station and the connector J1 for the SWIB 150 corresponding to the rear of station are connected to a modular T-connector (not shown), such as those used for telephones. A front/back signal coupled to connector J1 provides a unique address, which determines whether the corresponding SWIB 150 corresponds to the front or rear of the station. In the preferred embodiment, the pin on connector J1 corresponding to the front/back signal on the front SWIB 150 is cut, and since the front/back signal is pulled up to VCC on the SWIB 150, this SWIB 150 corresponds to the front of the station. Similarly, the front/back signal on the SWIB 150 corresponding to the rear of the station is tied to ground, which indicates that this SWIB 150 corresponds to the rear of the station. Thus, the preferred embodiment is advantageous in that the front/back signal is not required for the SWIB 150 corresponding to the front of the station, which results in a significant reduction in the number of wires between the SWIB 150 and the SIB 152.

### Remapping of Product Status Switches

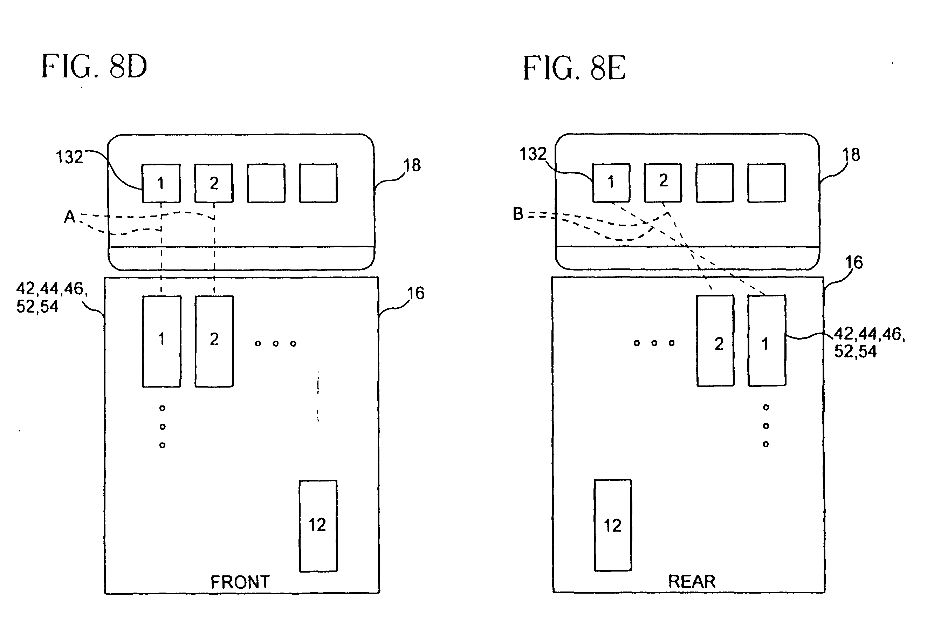

Figures 8D and 8E show the display 18 mounted facing the front of the holding station 16 and the rear of the holding station 16, respectively. It is preferred that the position of a given product type section 132 on the display 18 spatially corresponds to one of the upper and lower tray combinations on the holding station 16 as shown by dashed lines A on Figure 8D. Each of the upper and lower tray combinations includes the product status indicators 42, product status switches 44, product label 46 and upper and lower trays 48. It is sometimes desirable to mount the display 18 facing the rear of the holding station 16 if, for instance, access to an ac outlet can only be obtained by doing so. When this is done, the product type sections 132 on the display no longer correspond spatially to the correct upper and lower tray combinations as shown by dashed lines B on Figure 8E. However, by remapping the addresses of the serially addressable ports PCF8574T U1-U3 the spatial correspondence shown in Figure 8D can again be achieved. This remapping can be achieved through software in the operational program of the SIB 152 or the SCB 156 based upon a switch selected by the user to indicate whether the display 18 is mounted facing the front of the holding station 16 or the rear of the holding station 16.

### Active/Transfer Board

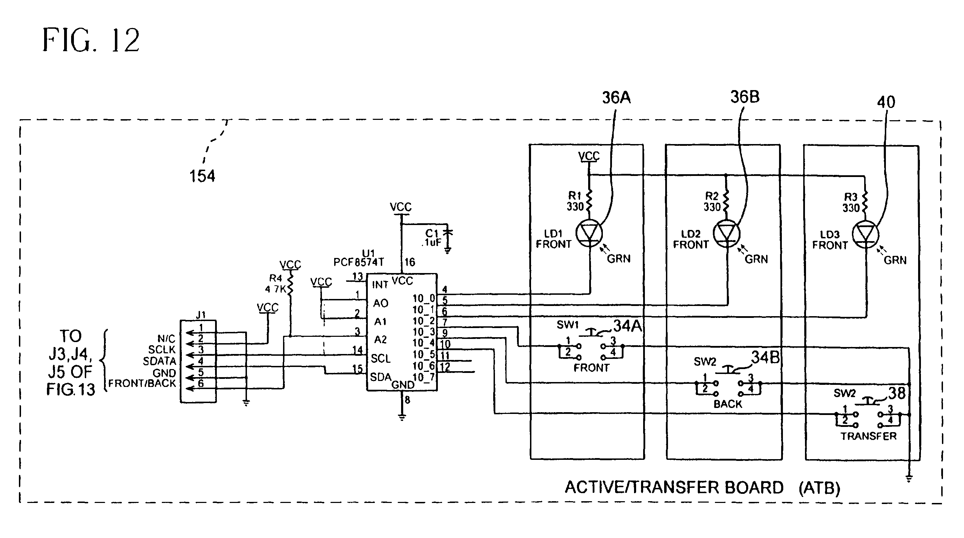

Figure 12 is a schematic diagram of the active/transfer board (ATB) 154. The ATB 154 includes connector J1, LED's LD1-LD3, 330 ohm resistors R1-R3 and switches SW1-SW3. The switches SW1-SW3 correspond to the active switch 34A, for the front of the station, the active switch 34B for the rear of the station and the transfer switch 38, respectively. The LED's LD1-LD3 correspond to the active indicator 36A for the front of the station, the active switch 36B for the rear of the station, and the transfer indicator 40, respectively. The 330 ohm resistors R1-R3 limit the series current seen by the LED's LD1-LD3, and the connector J1 provides electrical connection between the ATB 154 and the SIB 152. A serially-addressable port PCF8574A7 U1 is electrically connected to and disposed between the connector J1 and the switches SW1-SW3 and LED's LD1-LD3. The serially-addressable port PCF85747 U1 enables the SIB 152 to access each of the switches and LED's via a serial data and address stream.

### Station Interface Board

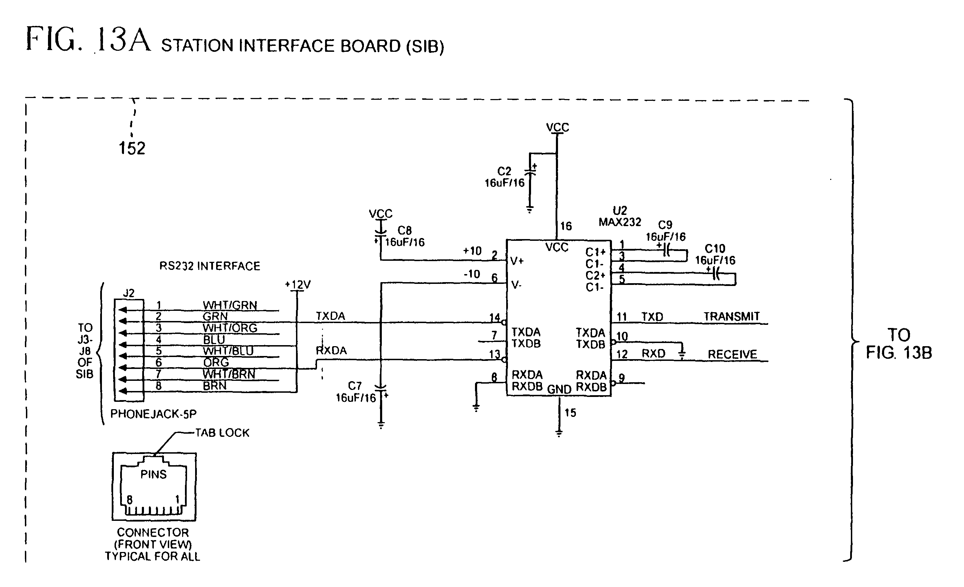

Figures 13A-13E are schematic diagrams of the station interface board (SIB) 152. The SIB 152 includes a microcontroller 80C32A U1, which monitors and controls the SIB 152, the ATB 154 and the SWIB 150. A serial data bus is pulled up to VCC using a 4.7k ohm resistor pack RN1. Three sets of serial ports, which are electrically connected to three connectors J3-J5. enable the microcontroller 80C32A U1 to monitor the product status switches 44 located on the SWIB 150.

The combination of an 11.059MHz crystal Y1 and 30 pF capacitors C11, C12 provide a clock signal to the microcontroller 80C32A U1. A reset circuit DS 1833-10 provides a reset signal having the required rise time, fall time and duration to the microcontroller 80C32A U1. A serial interface MAX 232 U2 and 10uF capacitors C7-C10 in electrical connection thereto, provide an RS-232 bidirectional serial interface between the microcontroller 80C32A U1 on the SIB 152 and components on the station control board 156 via a connector J2.

A set of capacitors C1, C2, C4, C5 provide bypass capacitance, and a 4.7k ohm resistor R1-R3 is used to pull corresponding signals up to VCC. An inverter 7406 U10 is used to logically invert the reset signal before being applied to a memory device PSD813F U8, which provides external RAM and ROM for the microcontroller 80C32A U1. A set ofLED's LD1, LD2 provide a visual indication of the day part, and whether the microcontroller 80C32A U1 is running, which is also provided to an optional warmer daypart temperature select board (not shown) via a connector J6. A set of 330 ohm resistors R4, R5 are used to limit the series current seen by the LED LD1, LD2 and inverters 7405 U5 provide the necessary drive current.

Connectors J3-J5 provide electrical connection between signals on the SIB 152 and those on each of up to six SWIB 150 and two ATB 154. A voltage regulator LM2575T-5.0 VR1, L1, diodes D1, D2, a 470uF capacitor C14, a 220uF capacitor C15, and a bridge rectifier CR1 provide regulation of a 12 volt supply to a 5 volt VCC via a connector J1 on the SIB 152. A programmable read only memory (PROM) 24C164 U4 provides additional permanent memory storage for the microcontroller 80C32A U1.

### Station Control Board

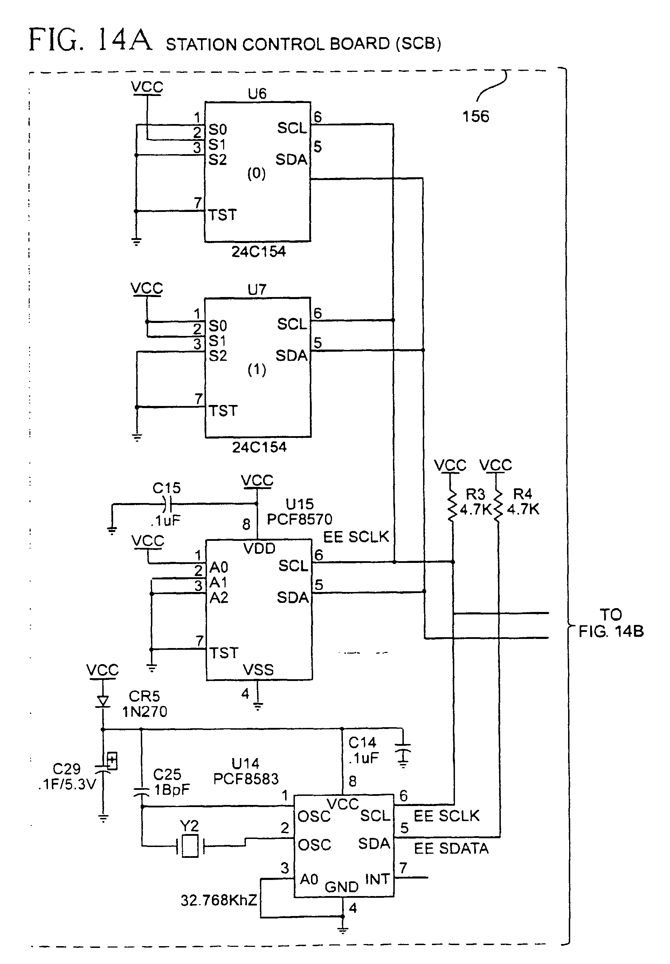

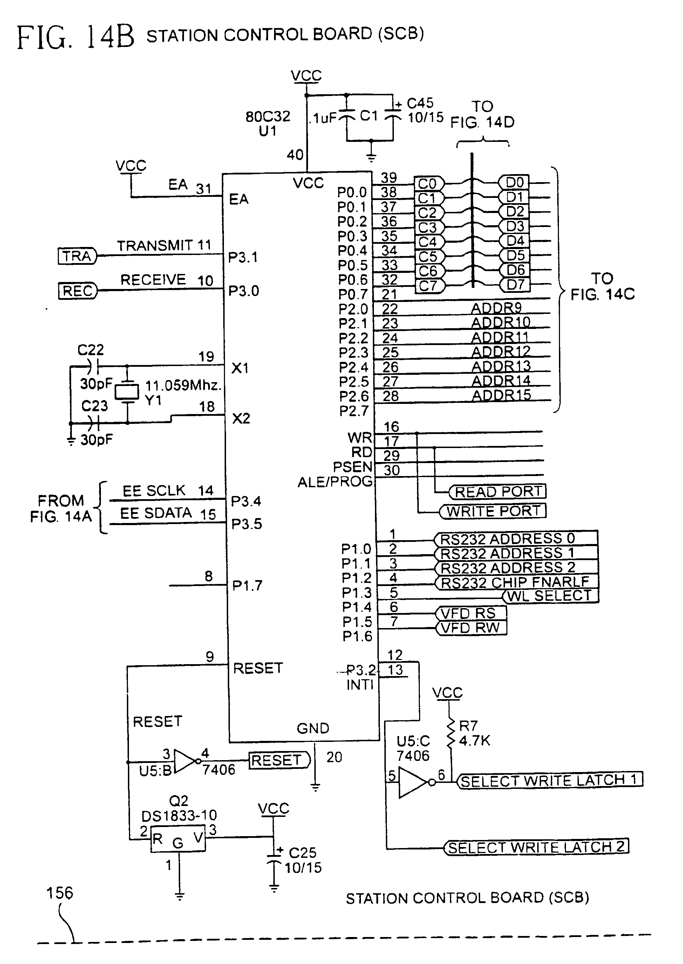

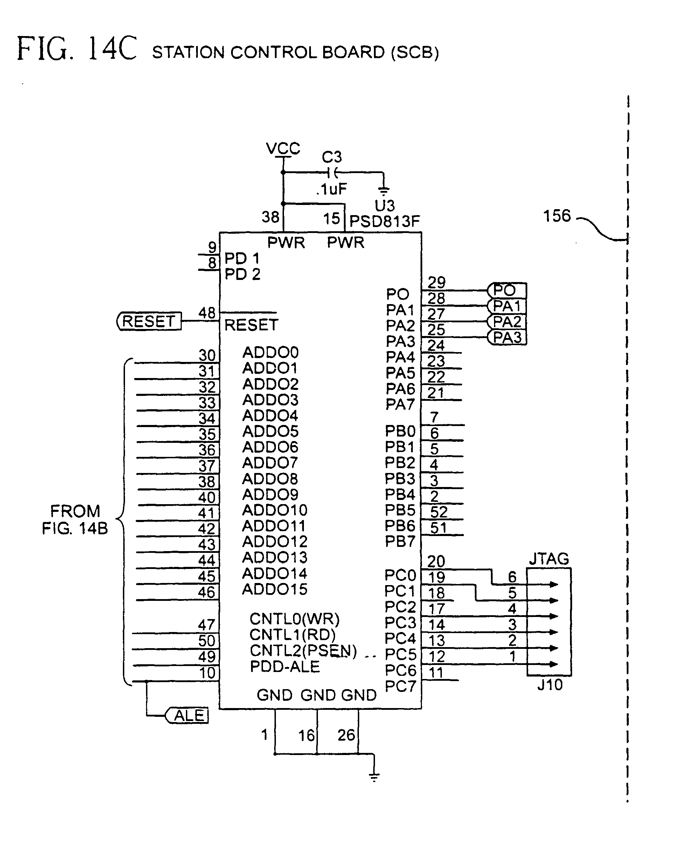

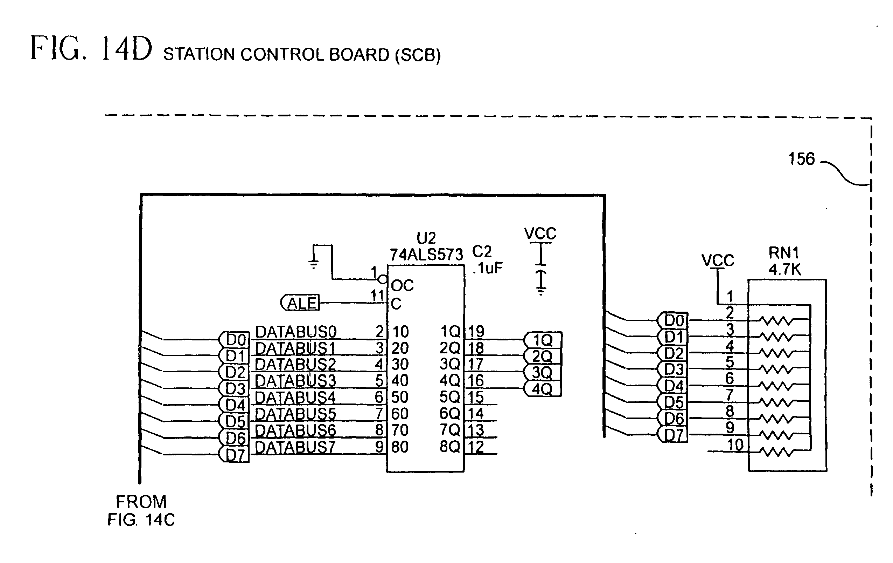

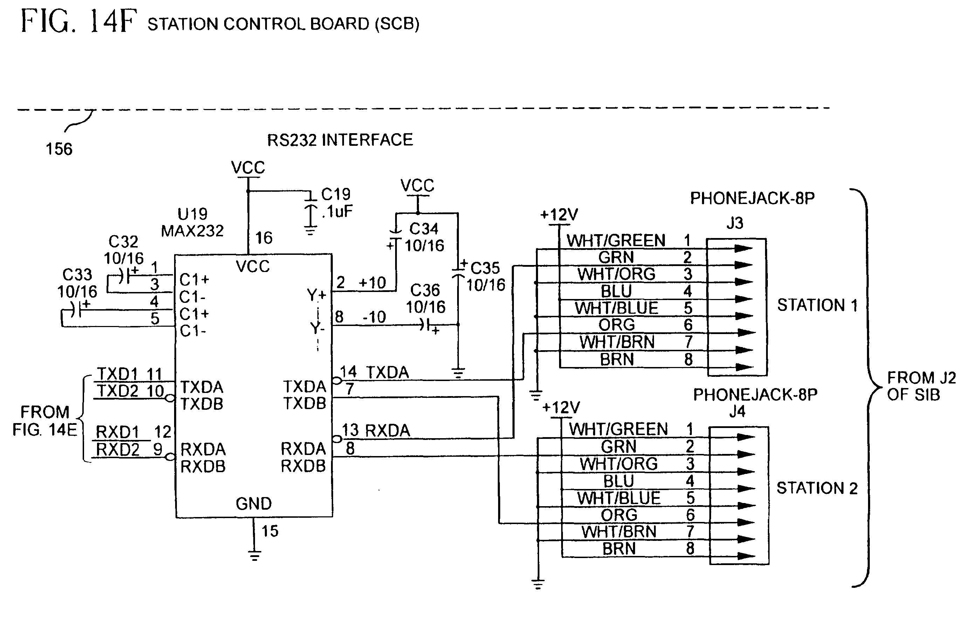

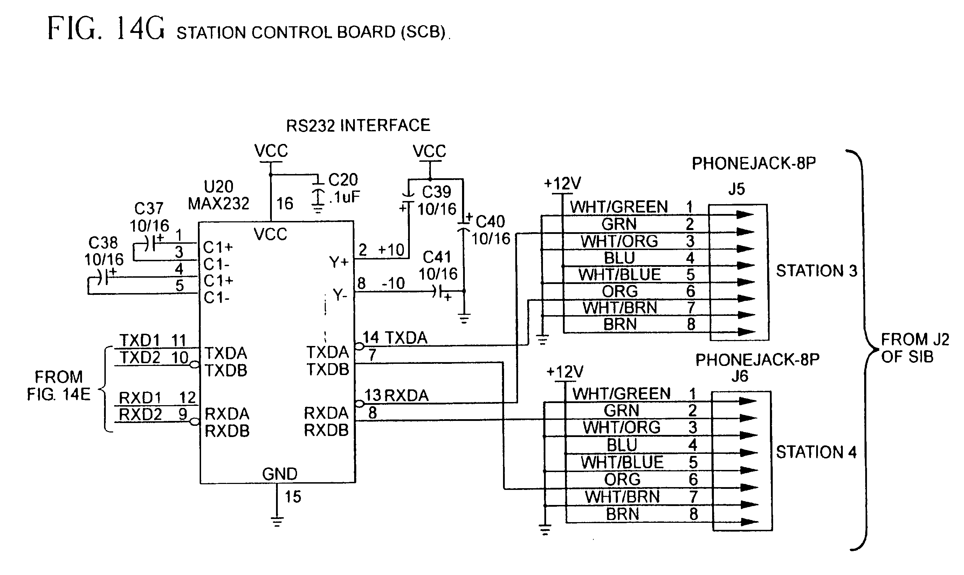

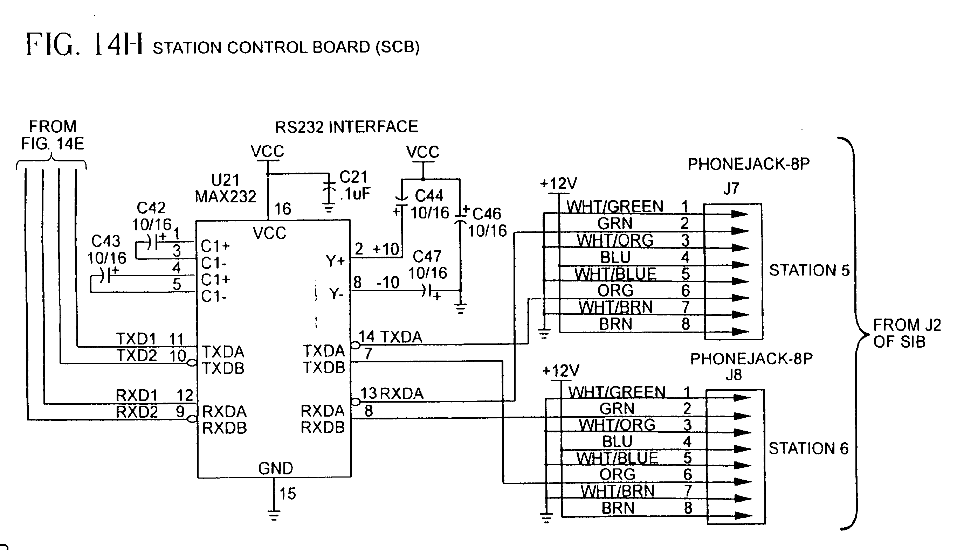

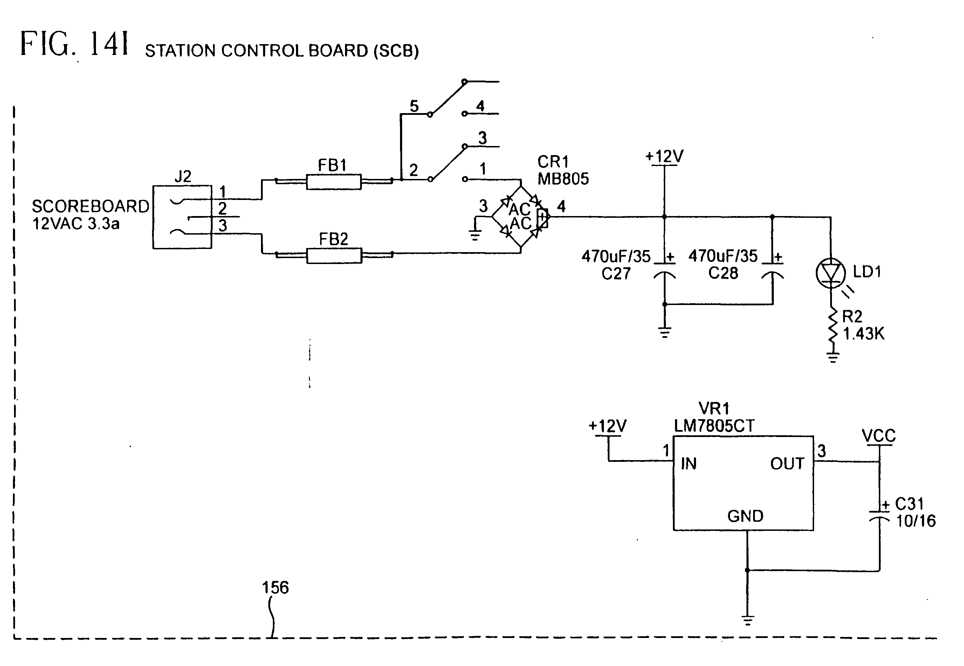

Figures 14A-14J are schematic diagrams for the station control board (SCB) 156. The SCB 156 is substantially similar to the SIB 152 with the exception of an additional bank of serial PROM 24C164 U6, U7 and a serial RAM PCF8570 U15, which provide additional external memory for the microcontroller 80C32 U1. A time-of-day clock PCF8583 U14 in combination with a 32.768KhZ oscillator Y2, a 0.1uF capacitors C29, C14 an 18pF capacitor C25 and a diode 1N270 CR5 provide a battery-backed time of day to the microcontroller 80C32 U1 to permit, for instance, automated control of the day part and the activity level.

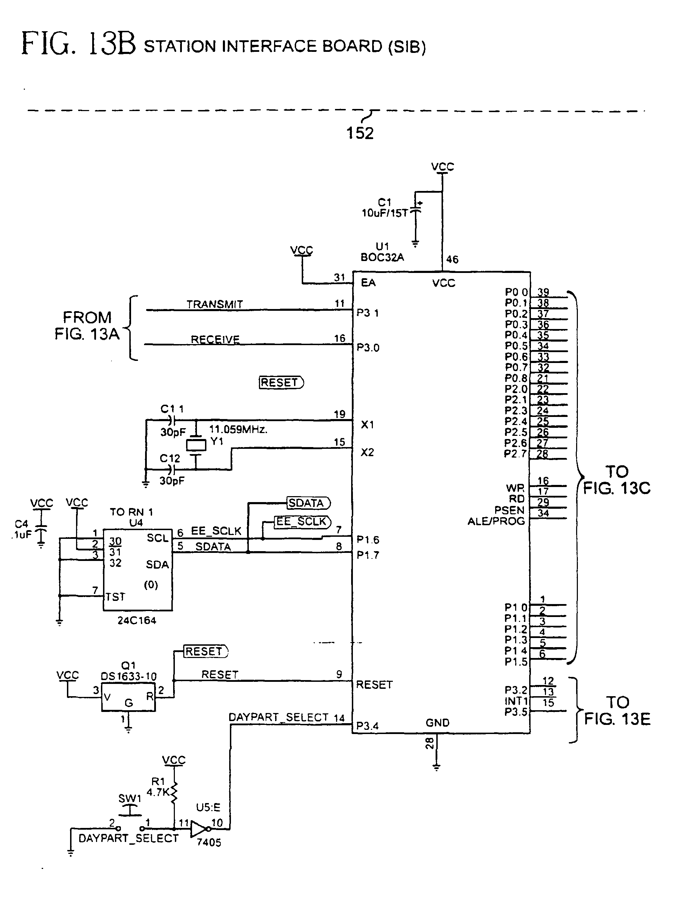

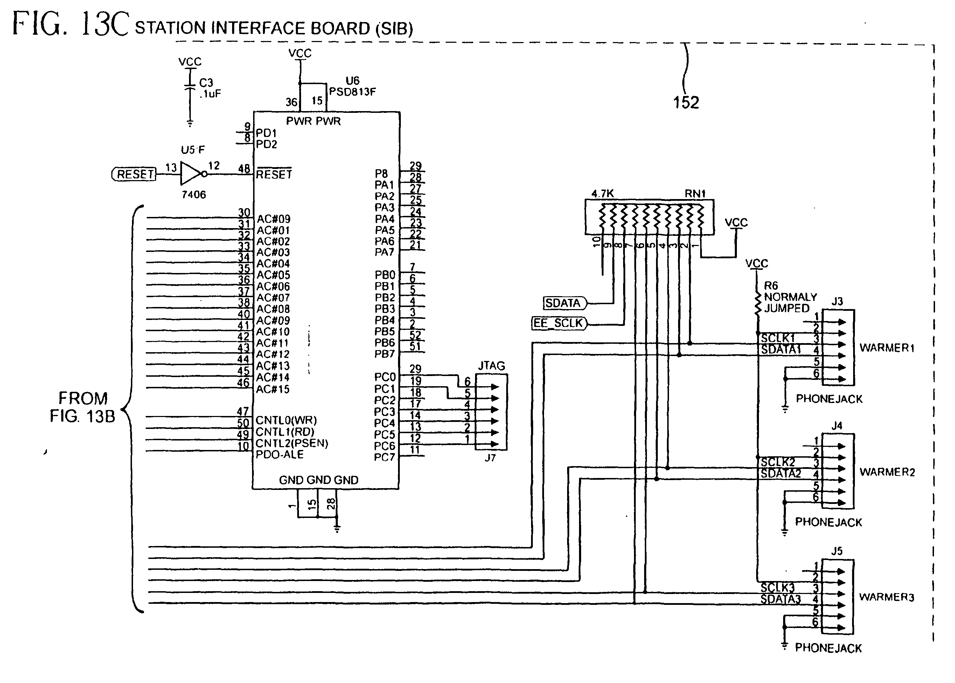

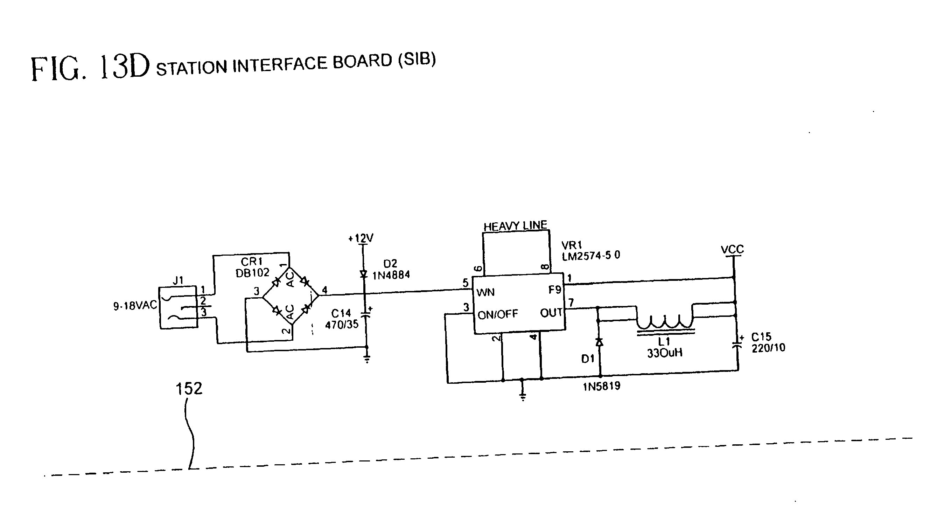

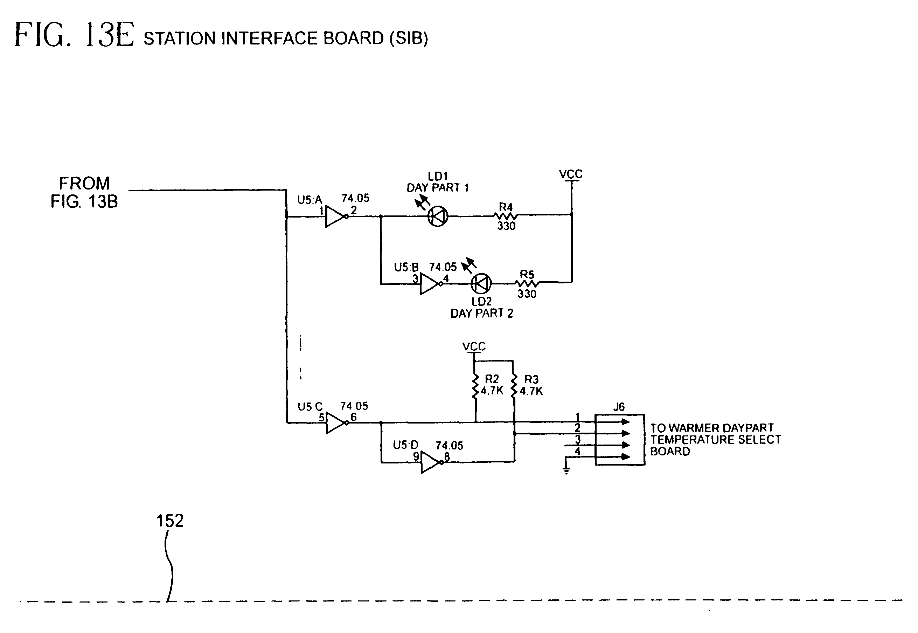

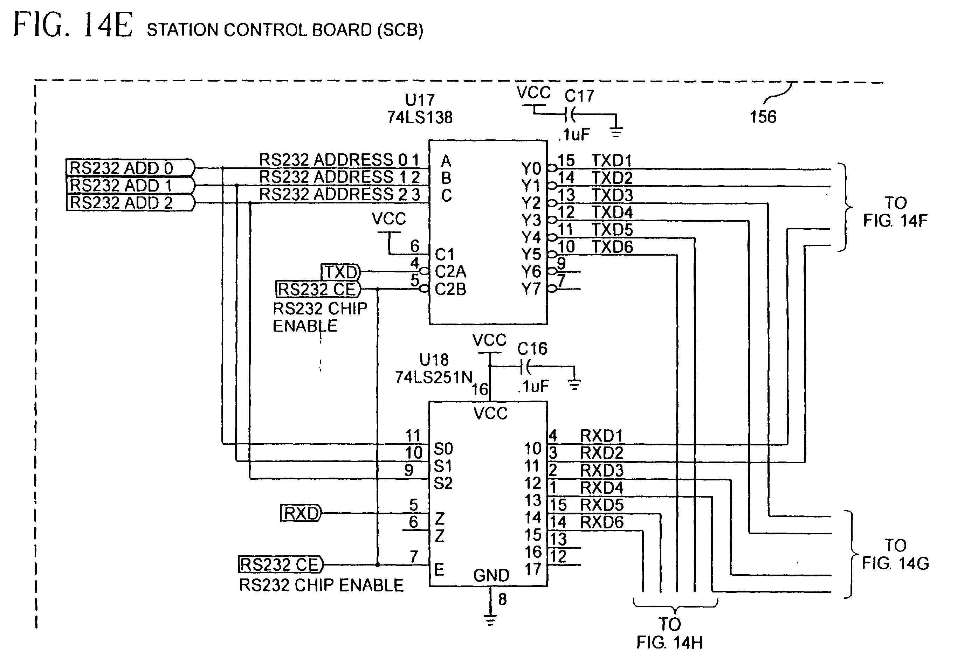

The schematic diagram for the SCB 156 continues on Figure 14E with a decoder 74LS138 U17 and a multiplexer 74LS251N U18, which provide address decoding and data directivity for three bidirectional serial channels provided by a set of serial interfaces MAX232 U19-U21, and 10uF capacitors C32-C47 which are electrically connected to connectors J3-J8. The connectors J3-J8 then connect to J2 on Figure 13 of the SIB 153. A connector J11 on the SCB 156 provides electrical connection between signals such as the data bus on the SCB 156 and the display board 158.

A connector J2 provides a 12v ac power signal from the display board to ferrite beads FB1, FB2, a switch S1, a bridge rectifier CR1, 470µF capacitors C27, C28, an LED LD1 and a 1.43k ohm resistor R2, which convert the 12v ac power signal to a 12v dc power signal. The 12v dc power signal is regulated down to 5v dc by a voltage regulator LM7805CT VR1 and a 10µF capacitor C31. The 12v dc power signal is also provided to the display board via a connector J9. The remaining components shown in Figures 14A-14J and their associated functions and connectivity are substantially similar to those described above for the SIB 152 shown in Figures 13A-13E.

### Display Board

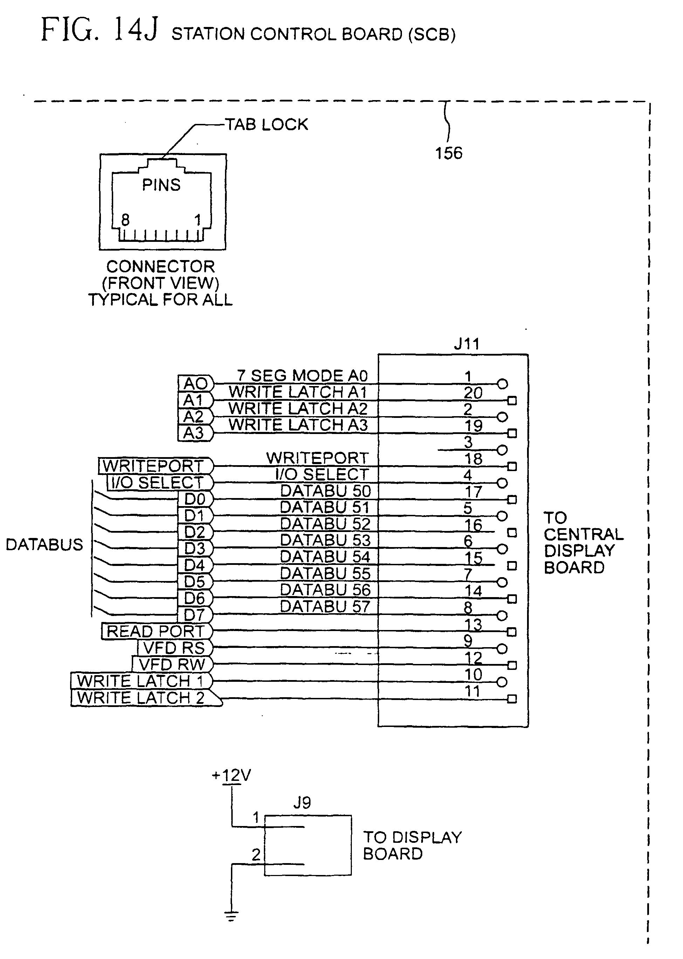

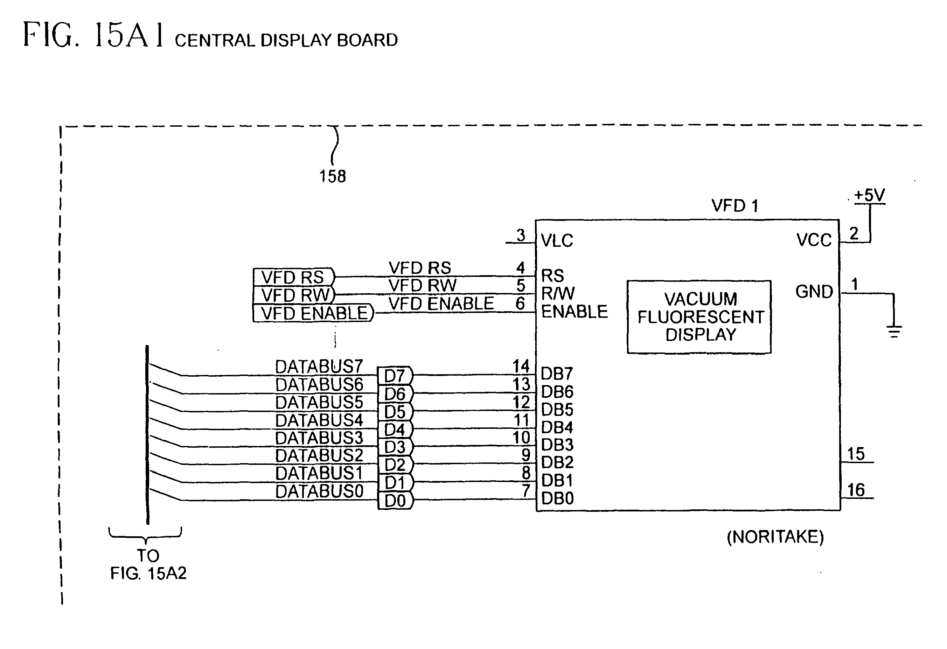

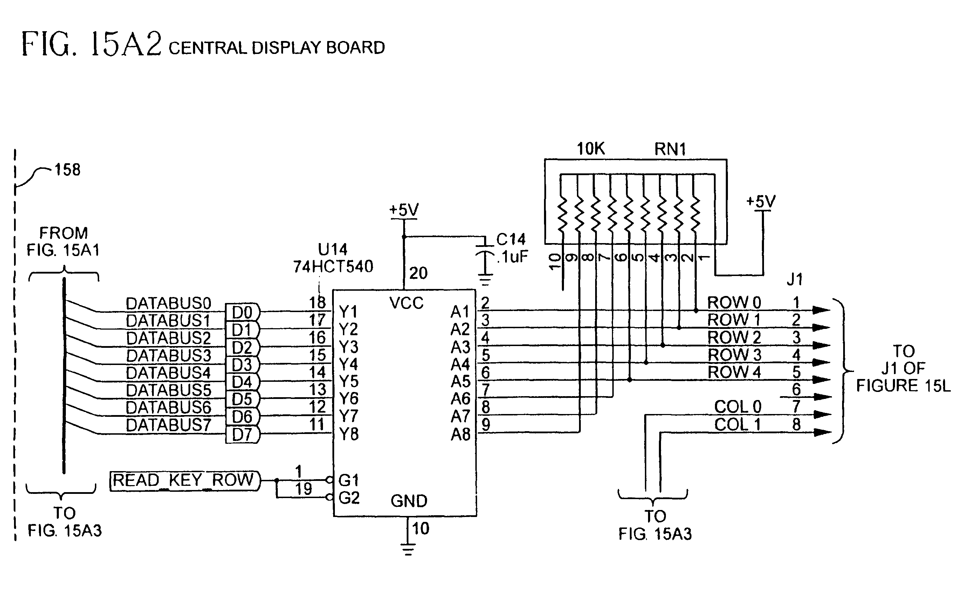

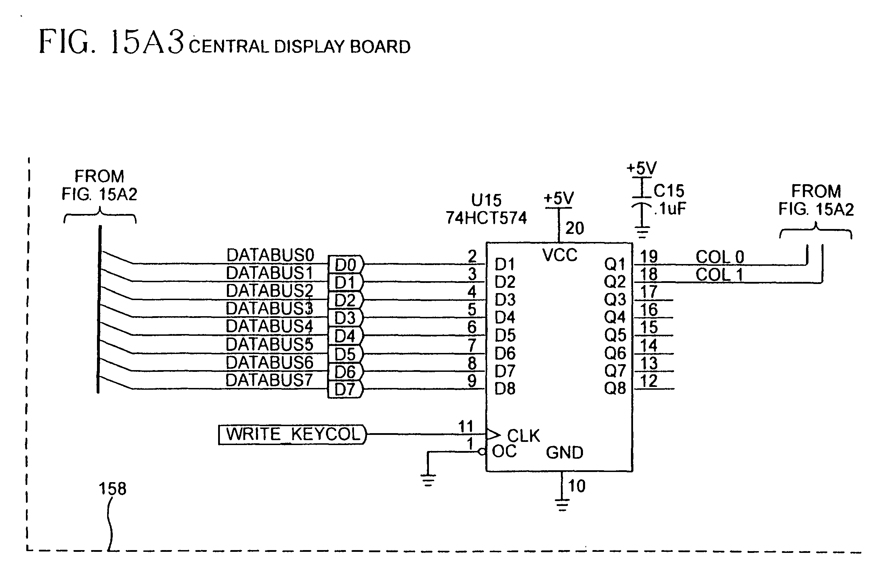

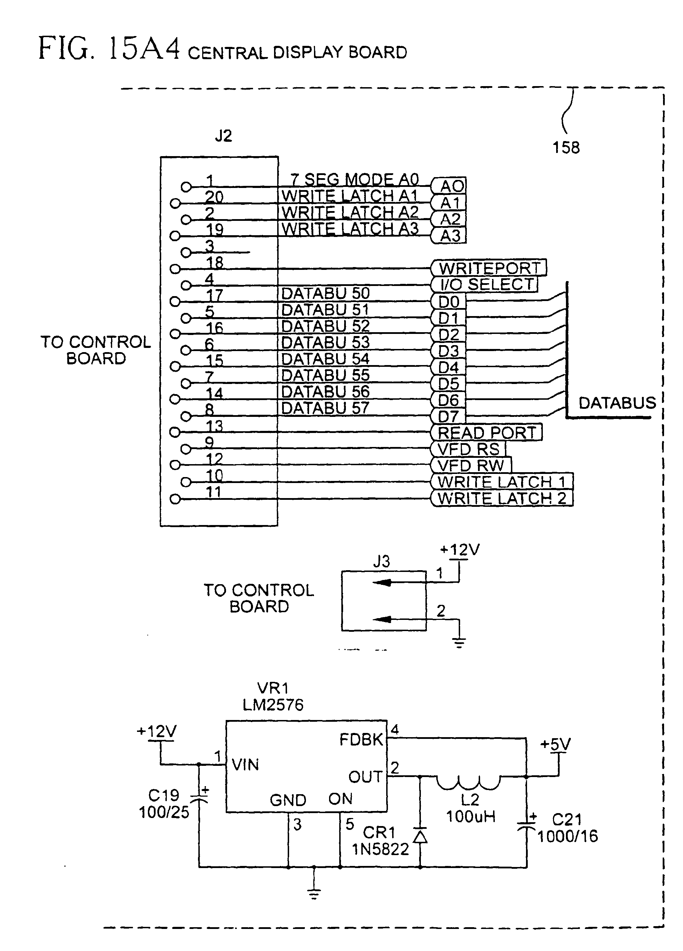

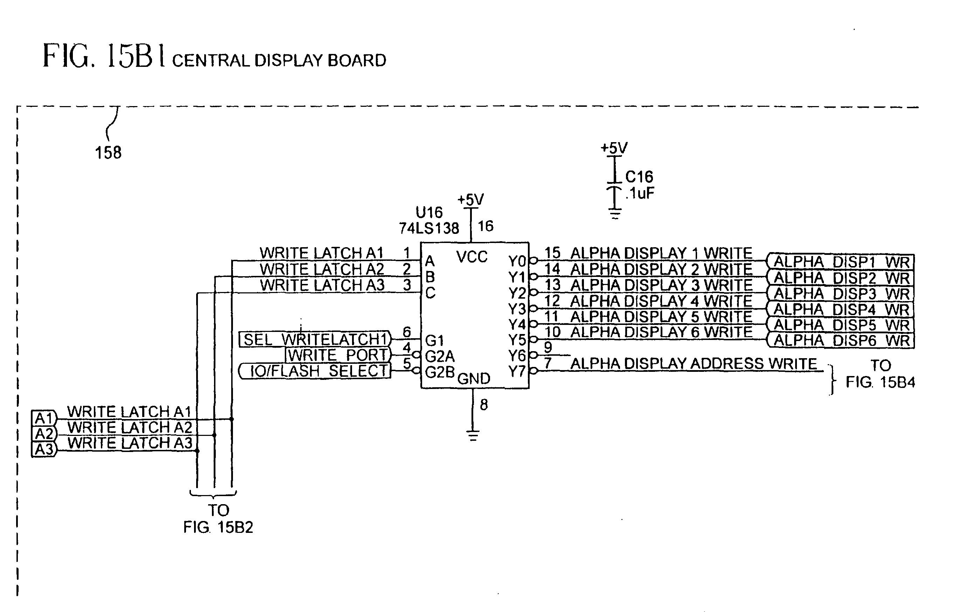

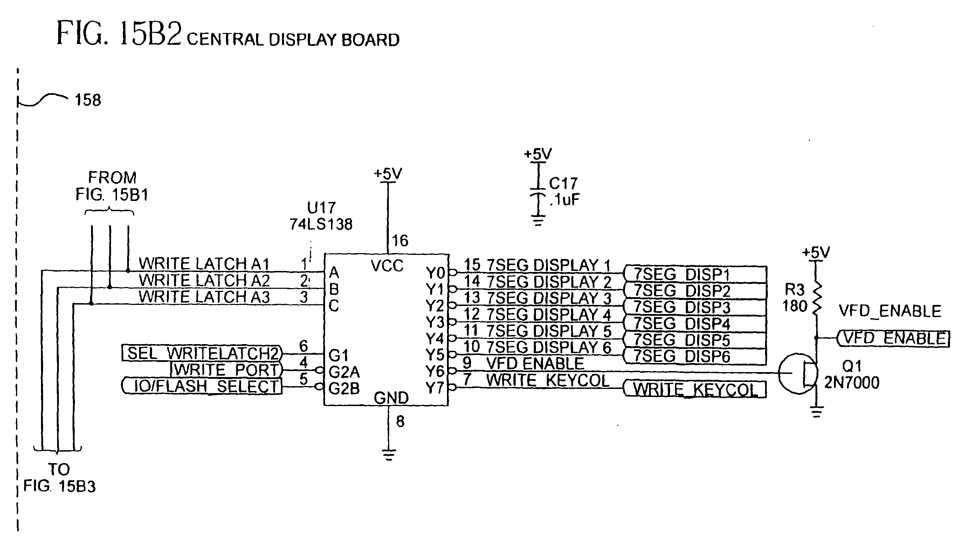

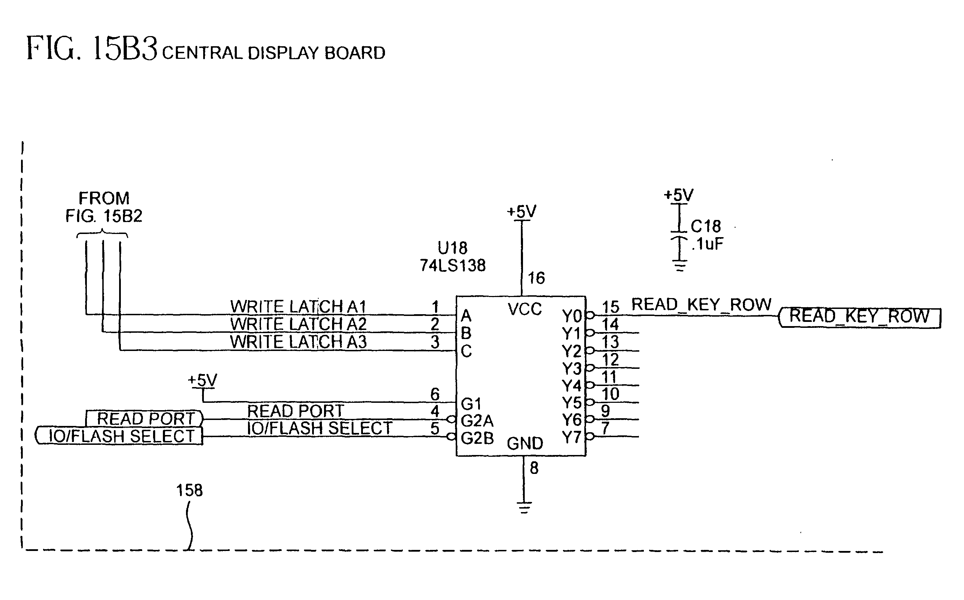

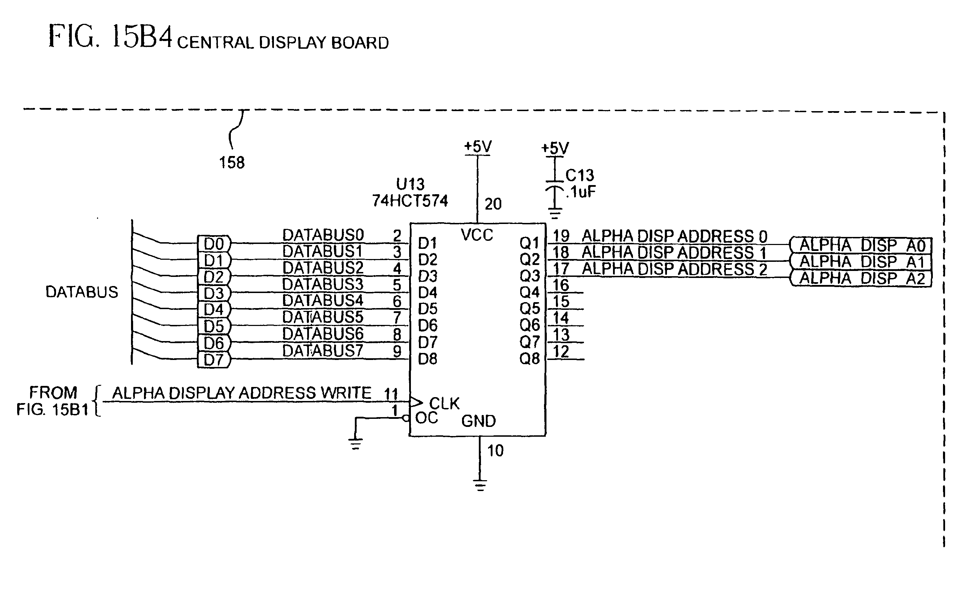

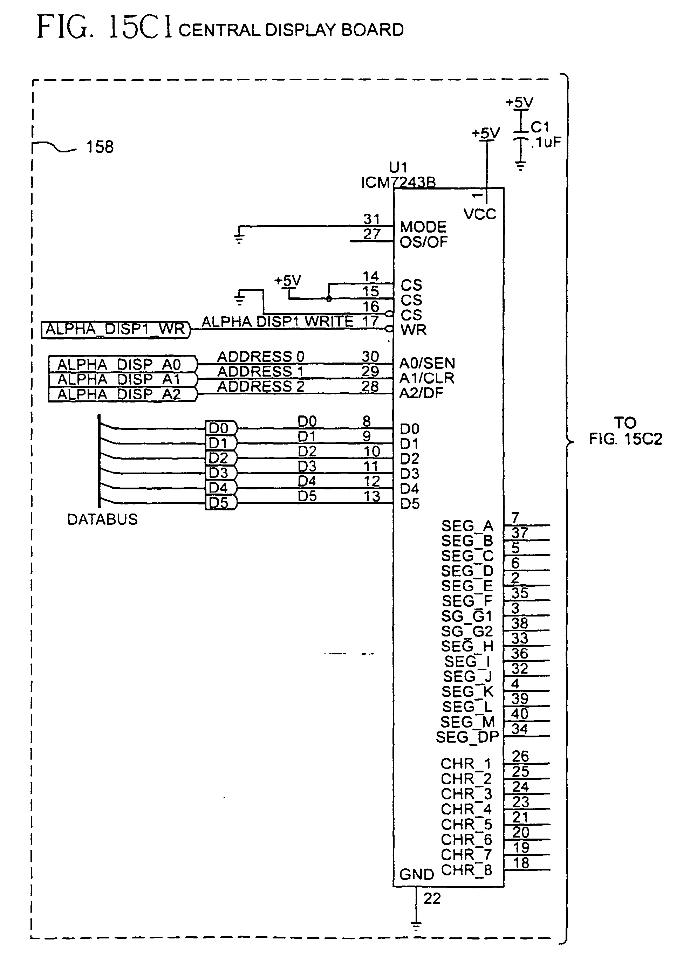

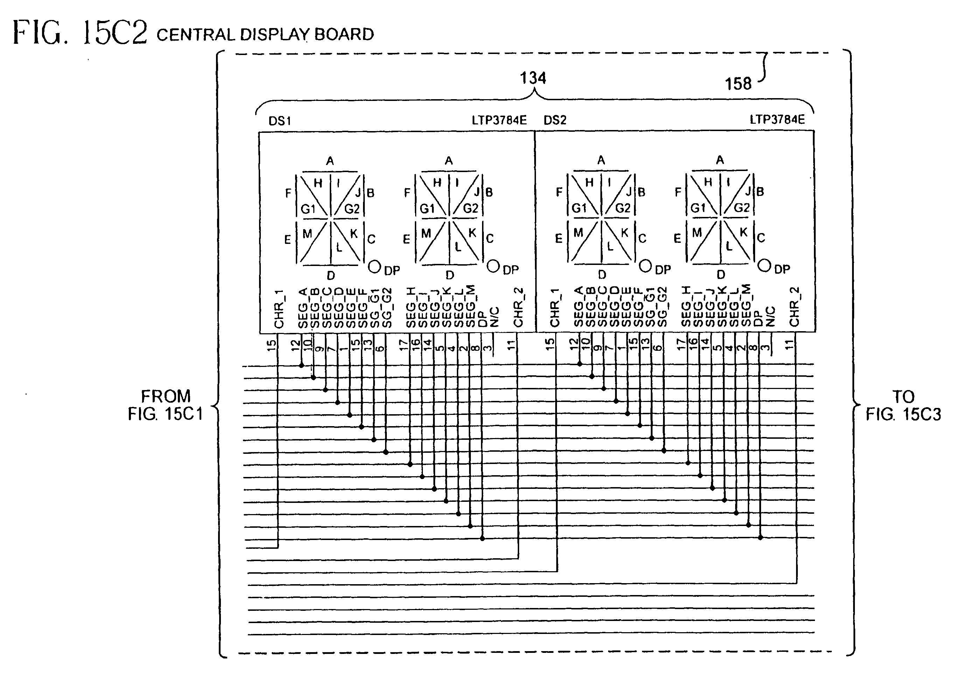

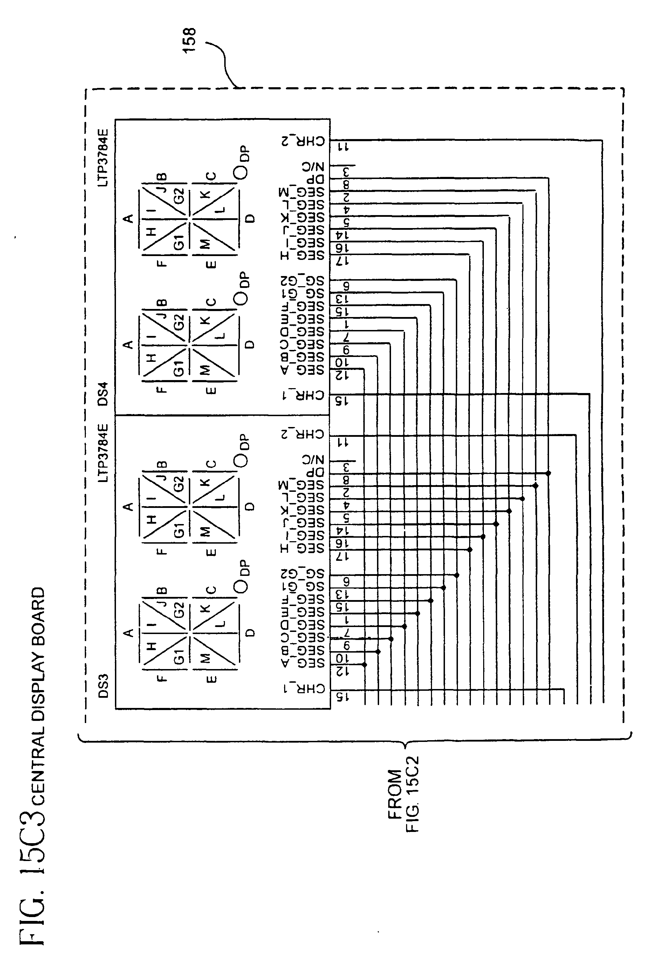

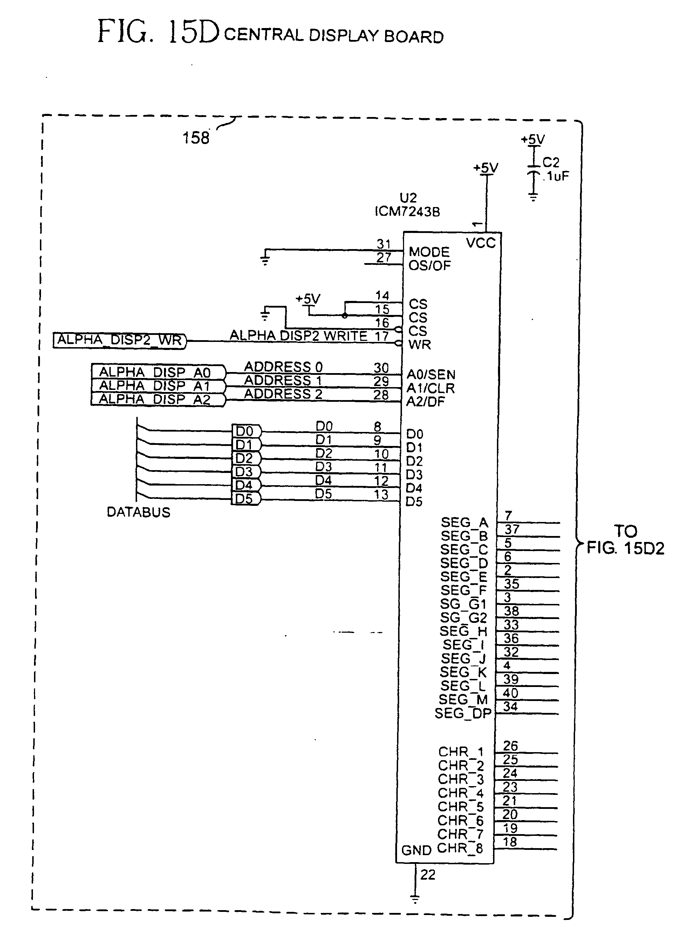

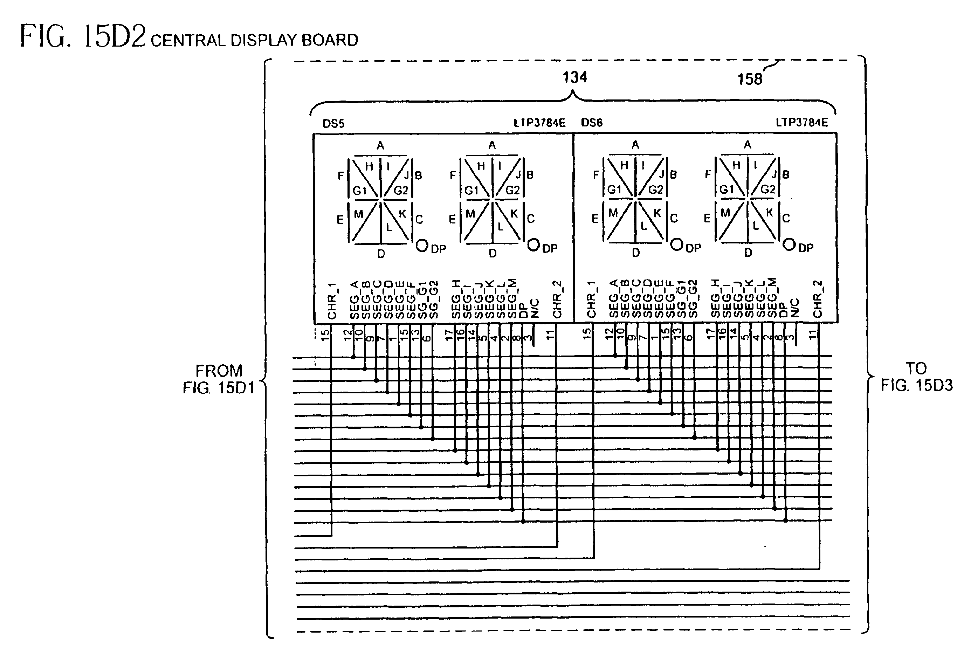

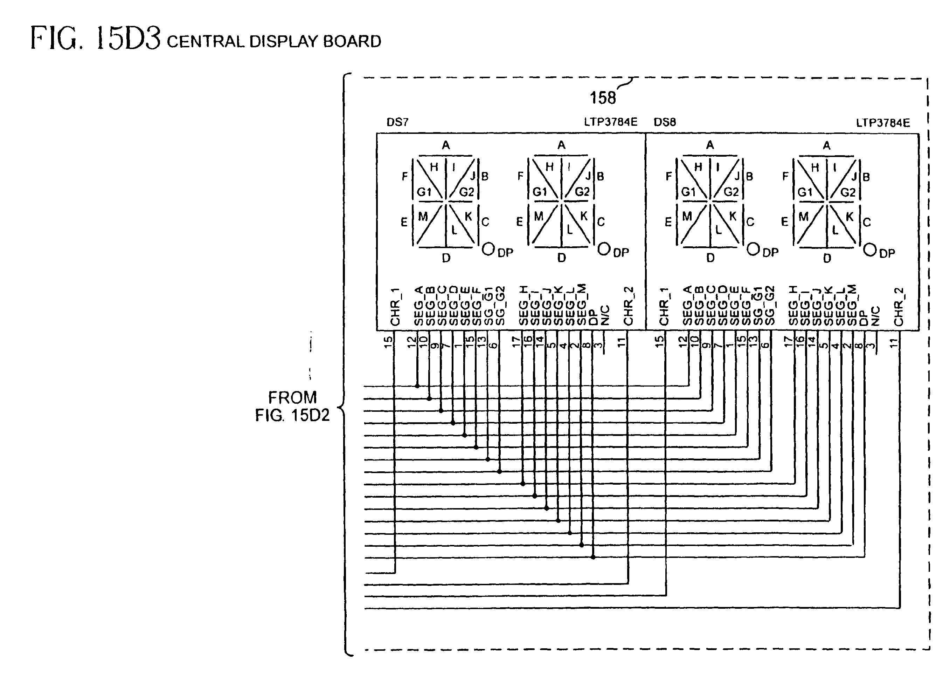

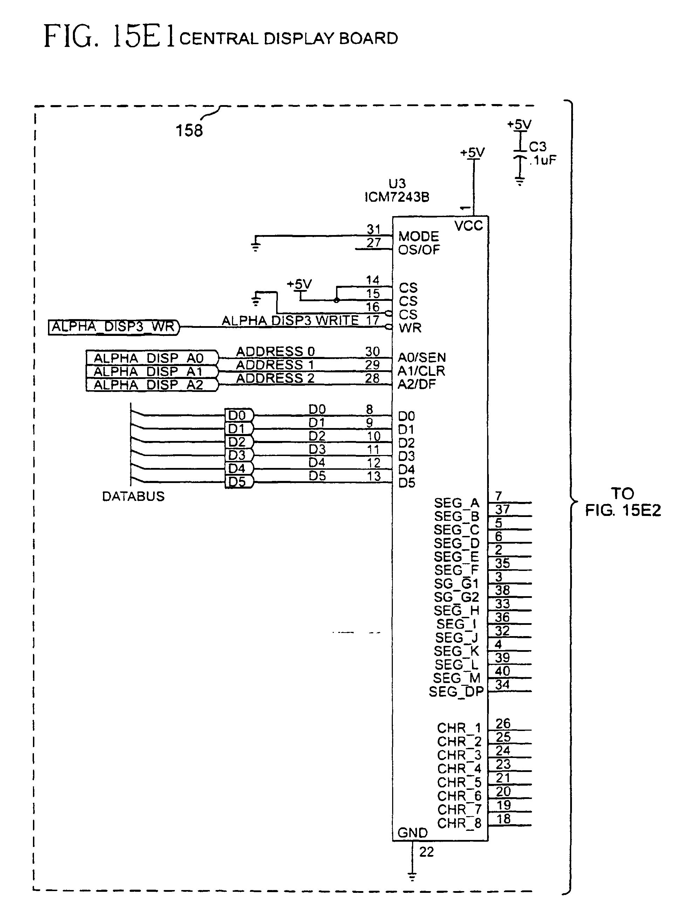

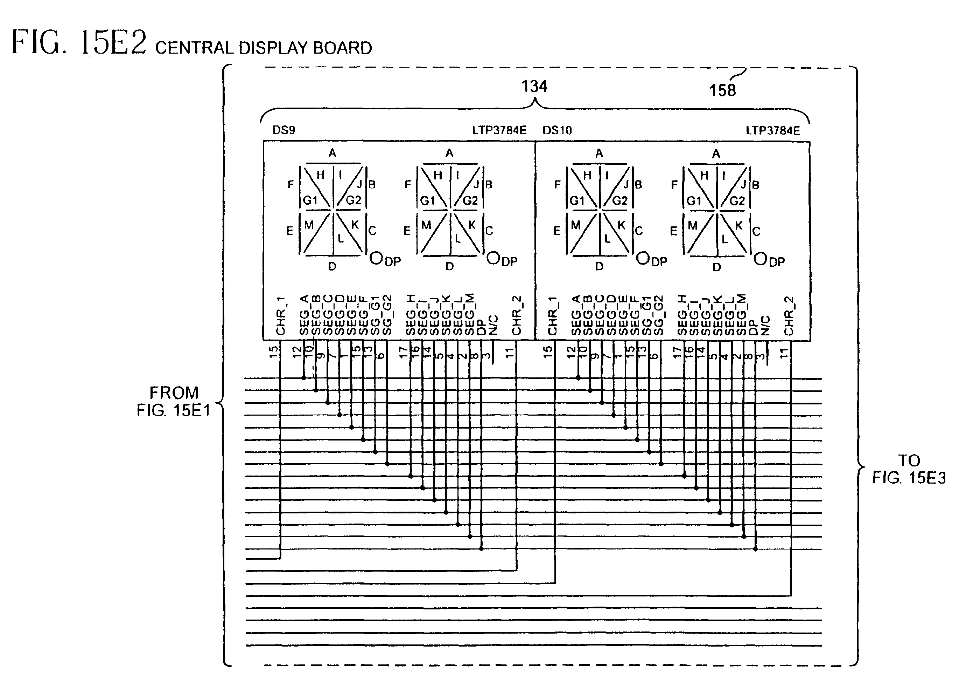

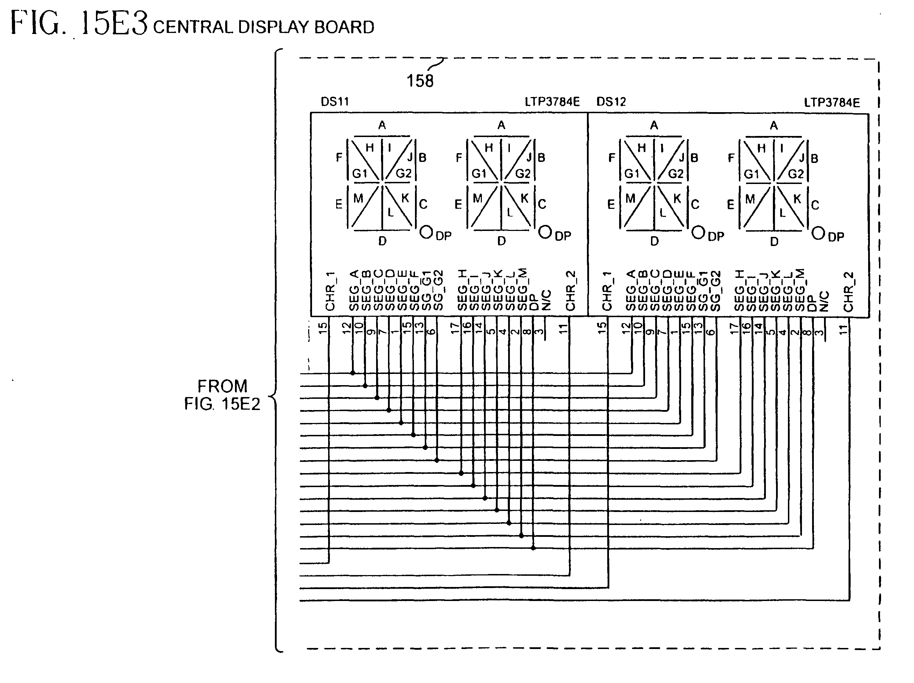

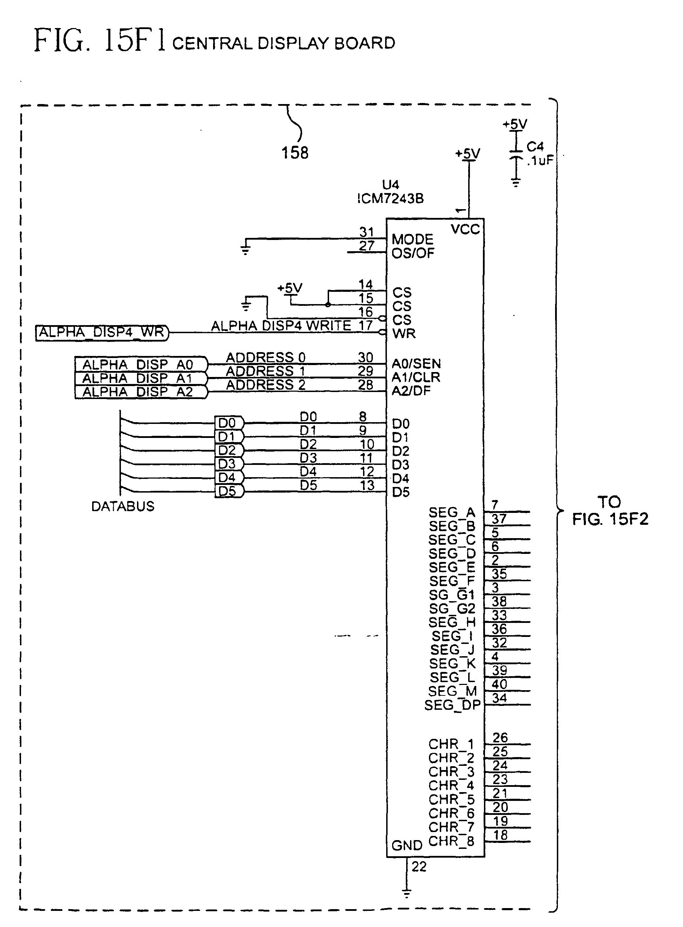

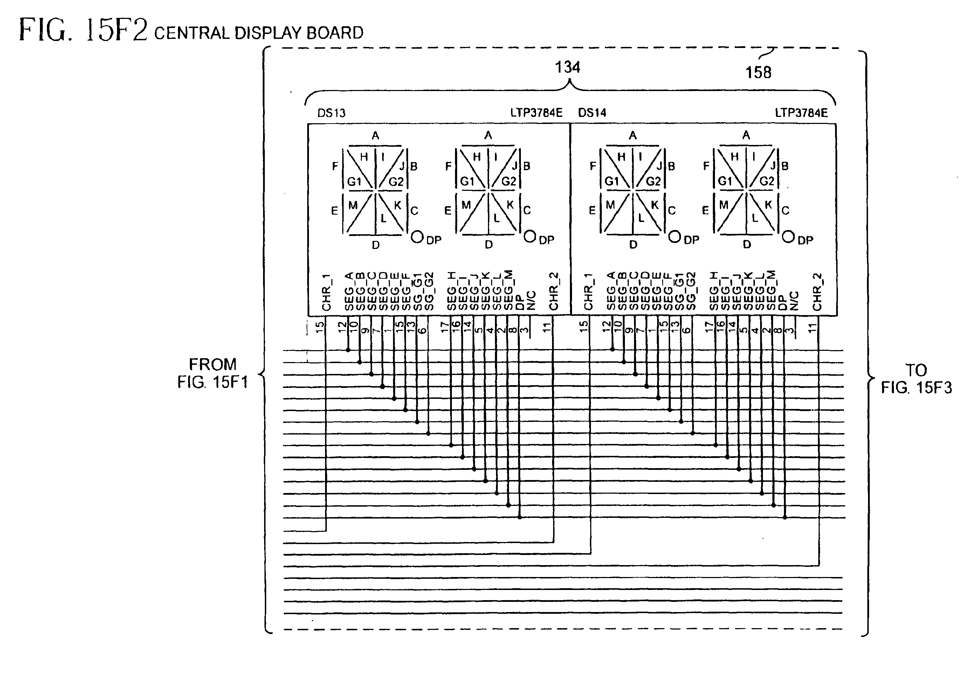

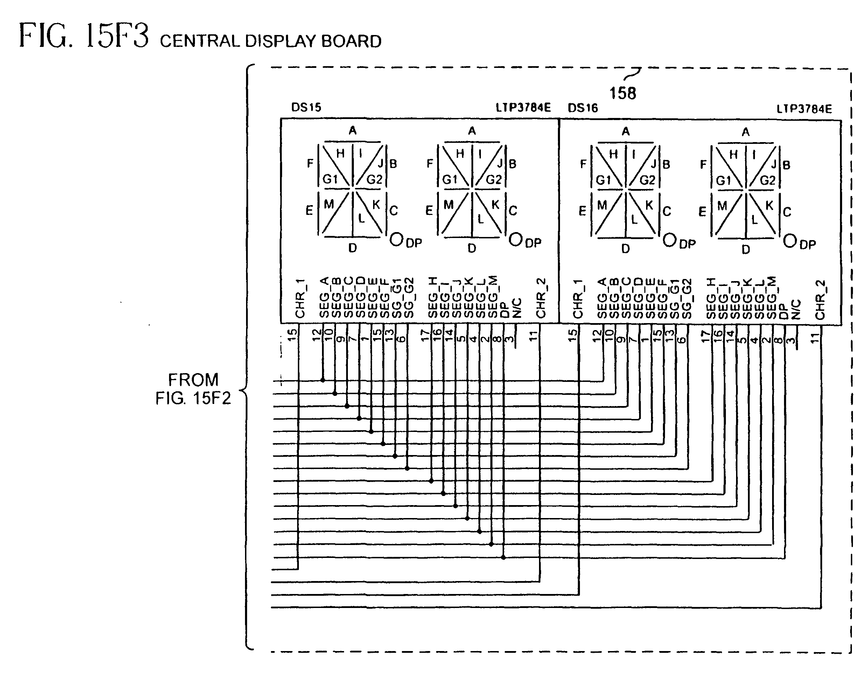

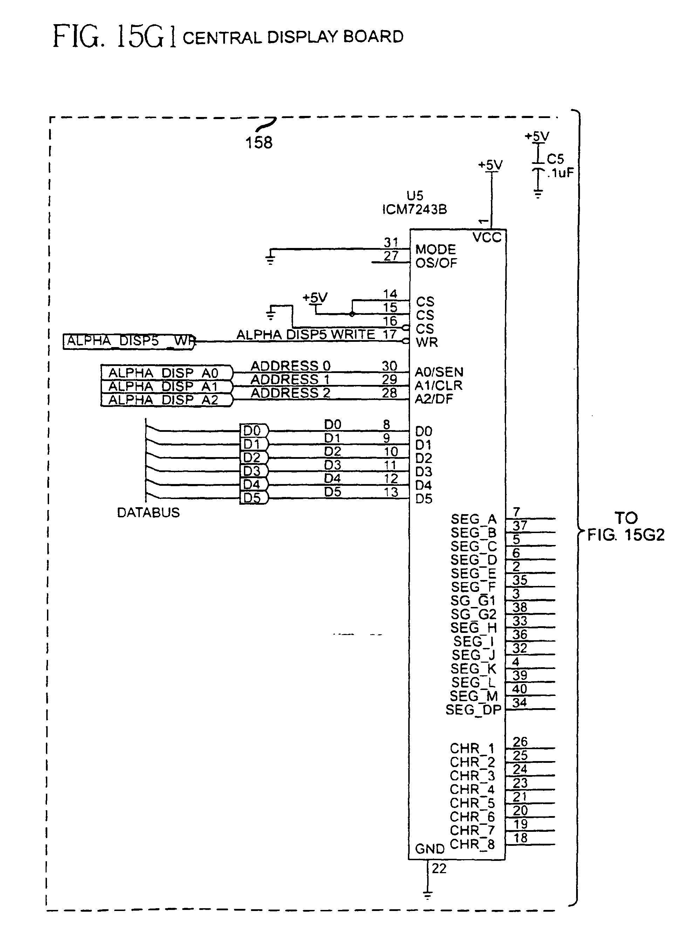

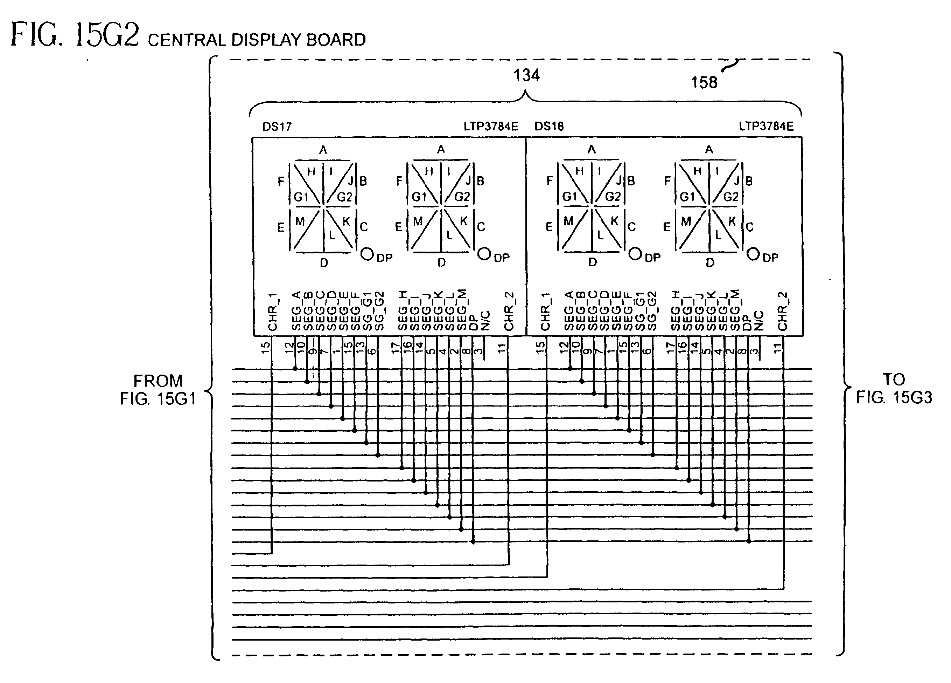

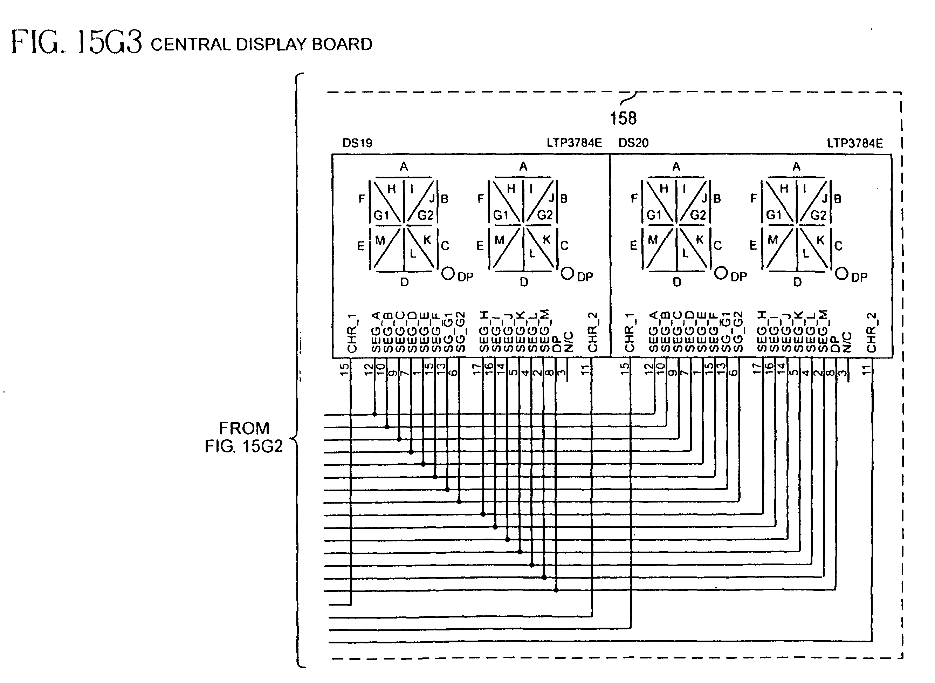

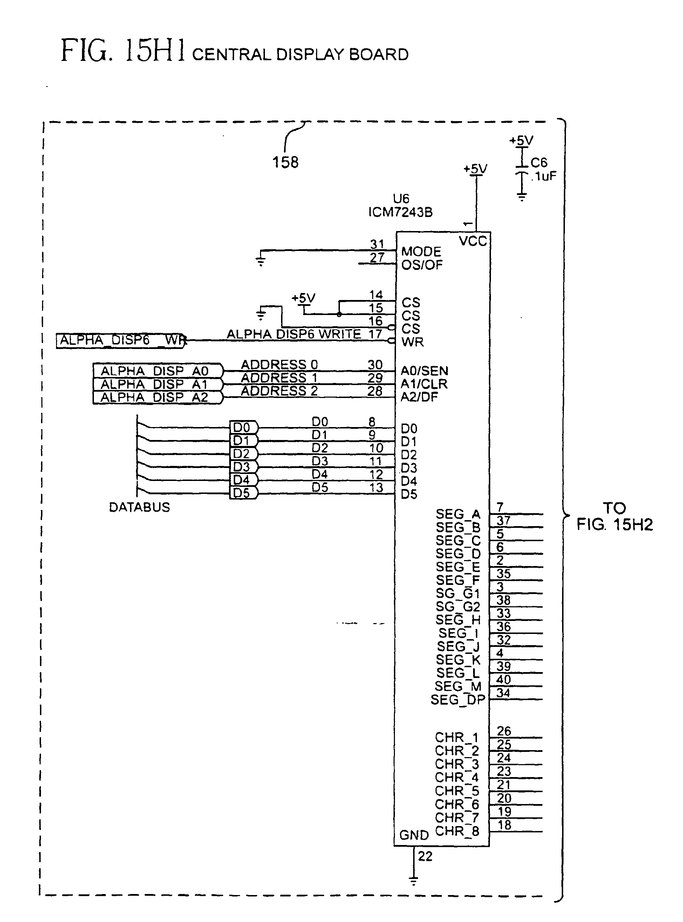

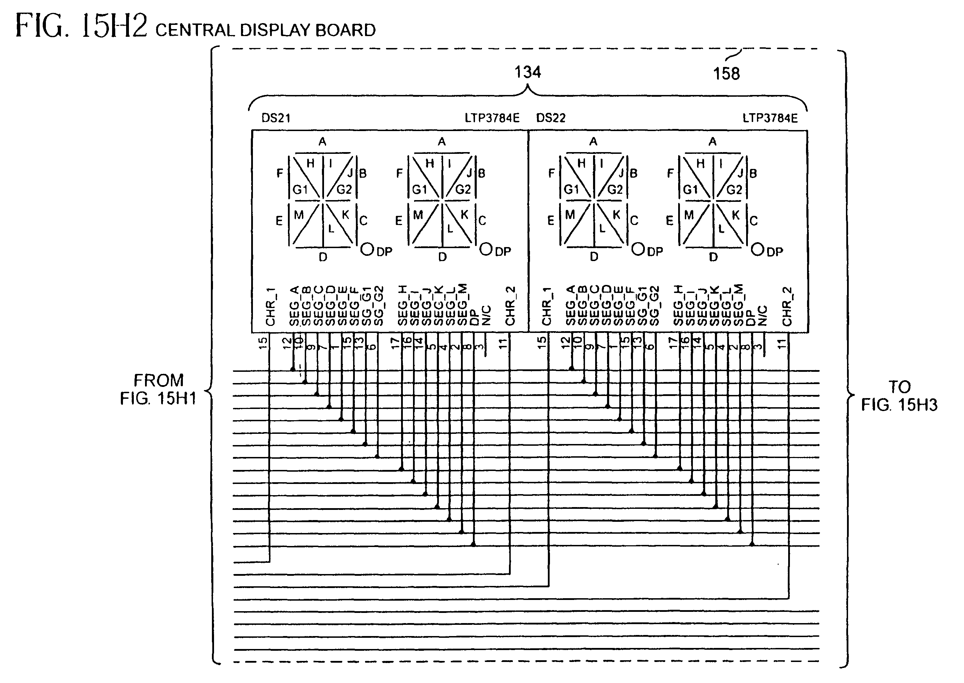

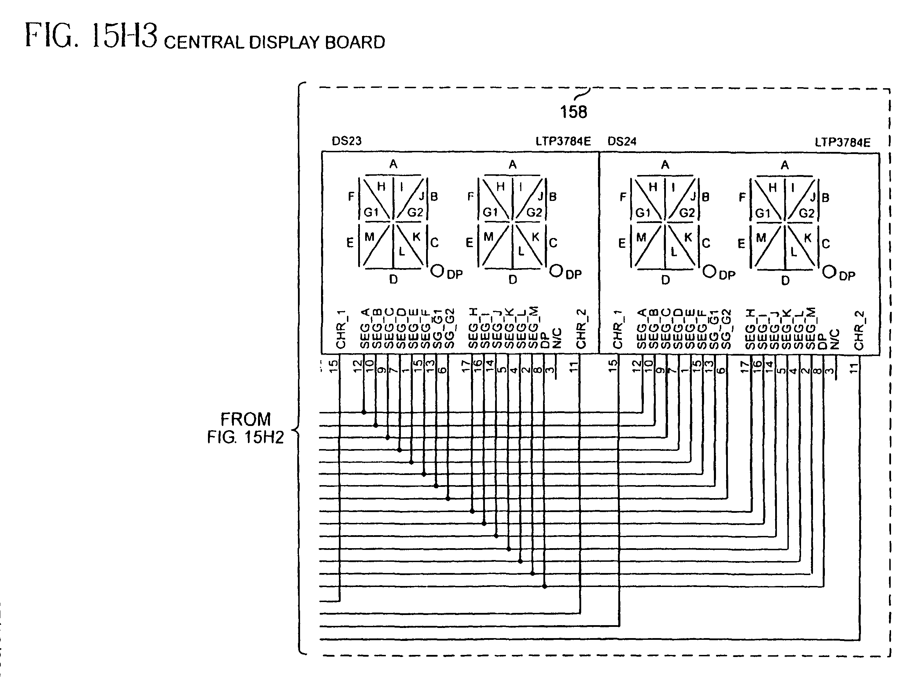

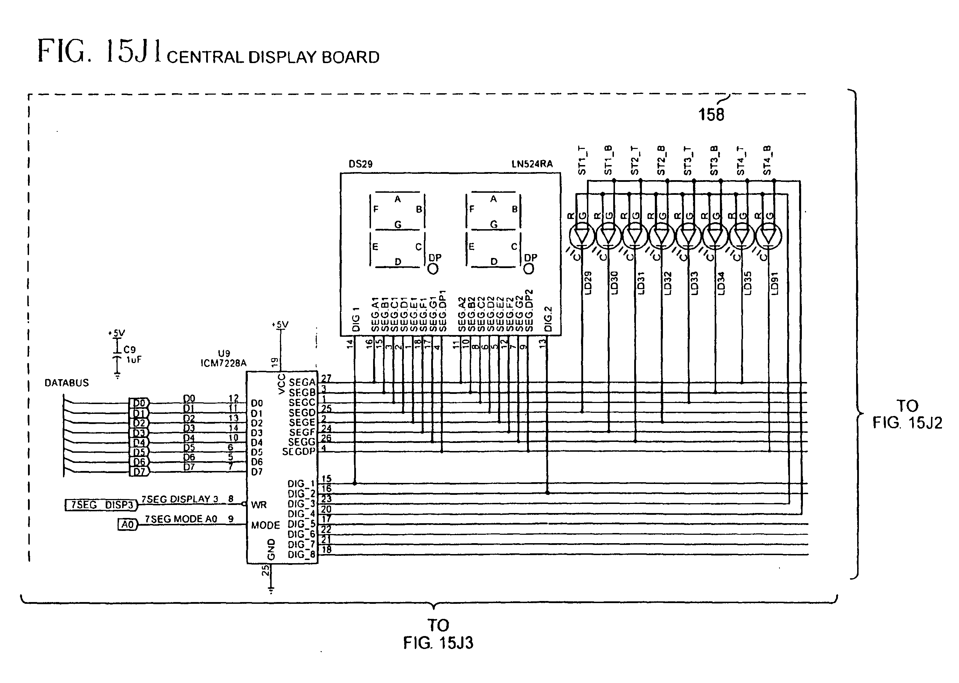

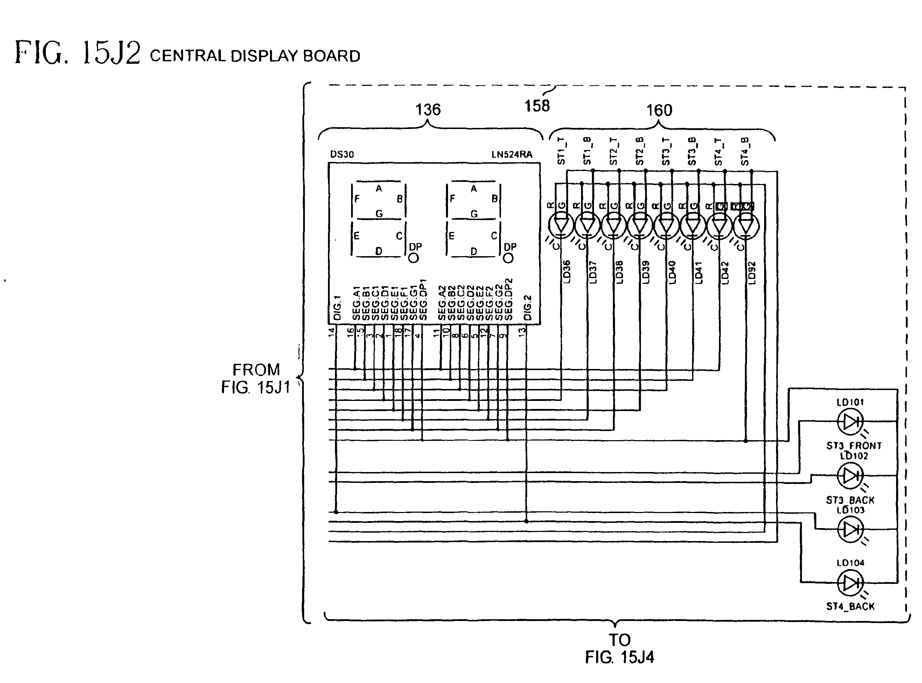

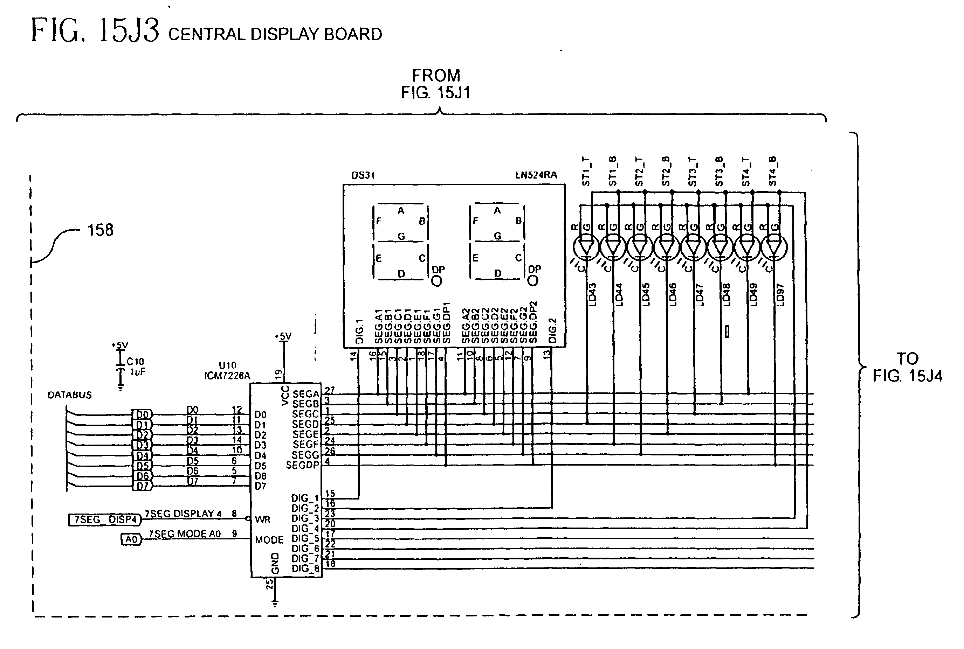

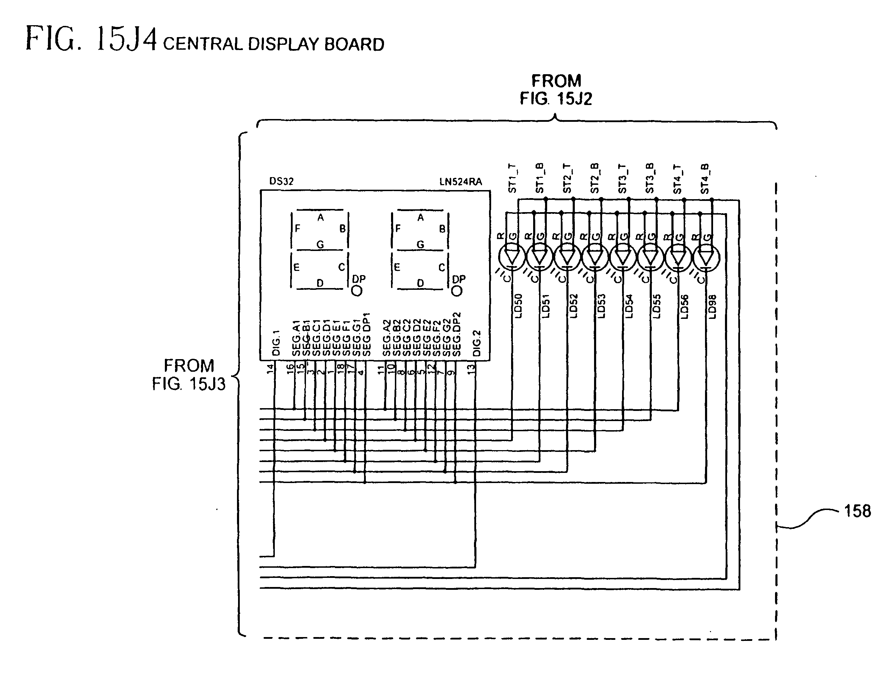

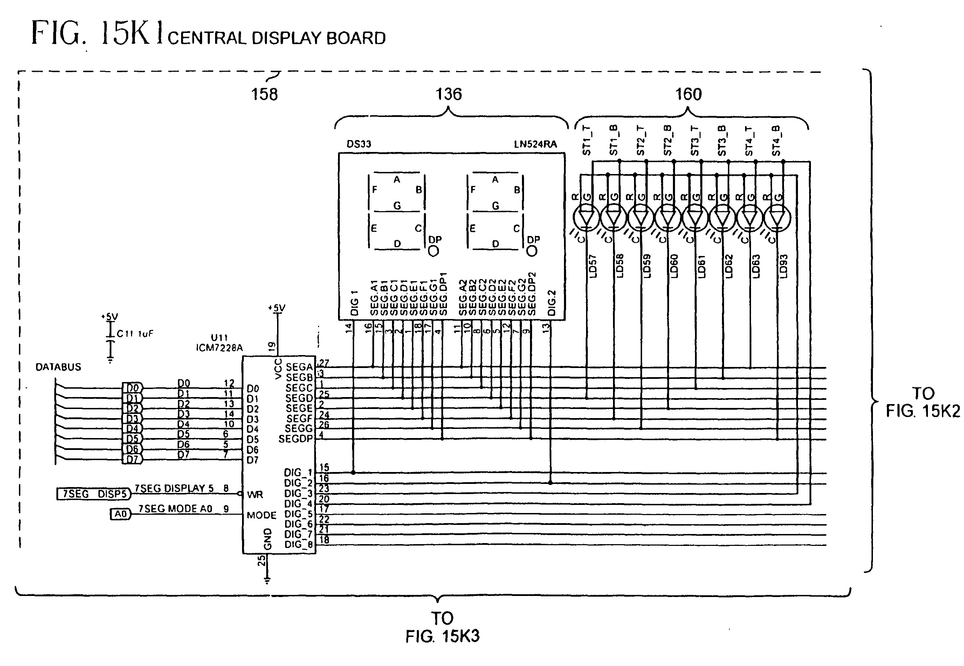

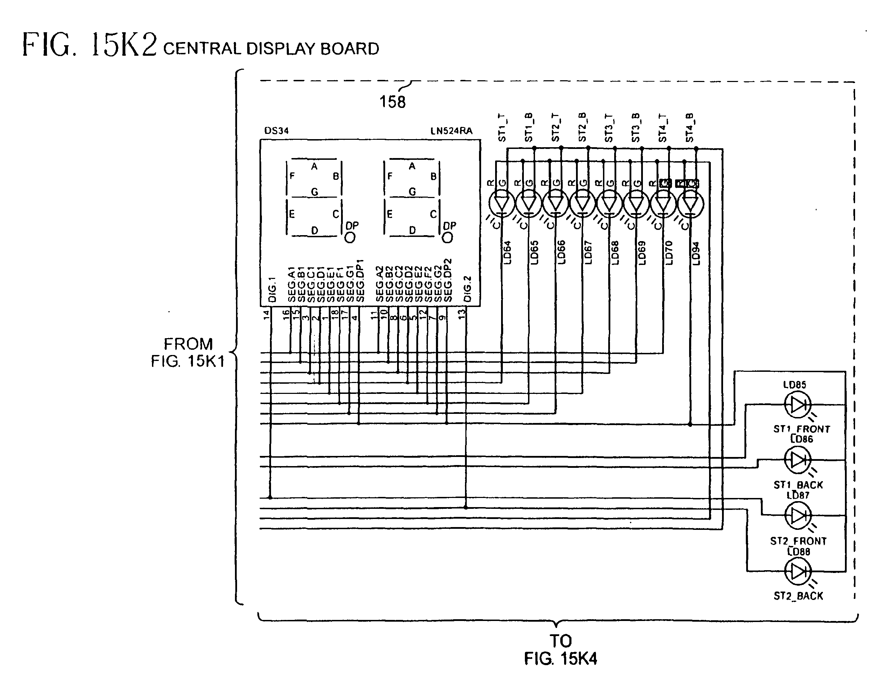

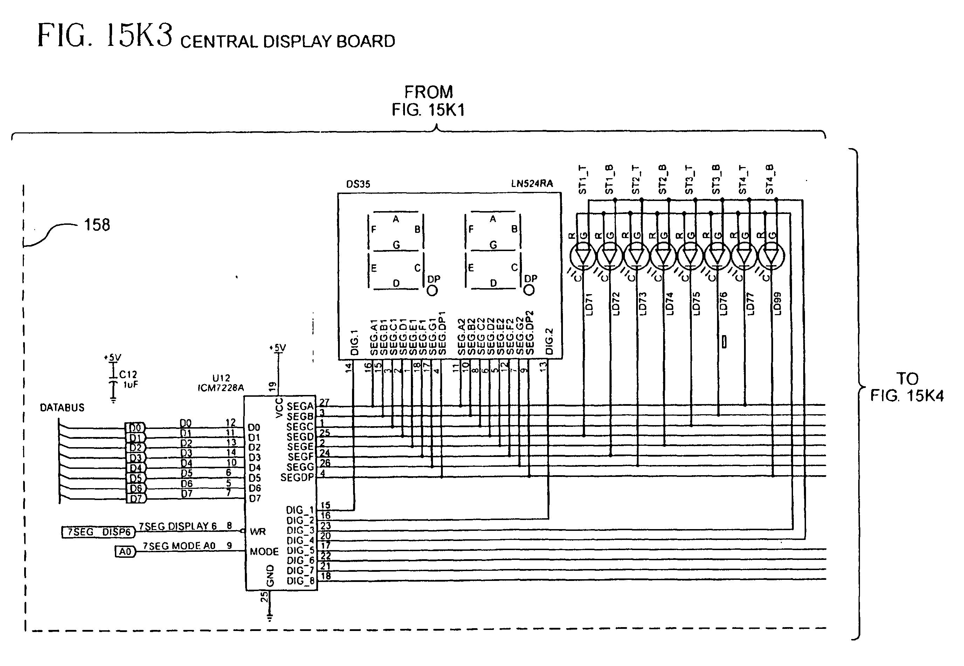

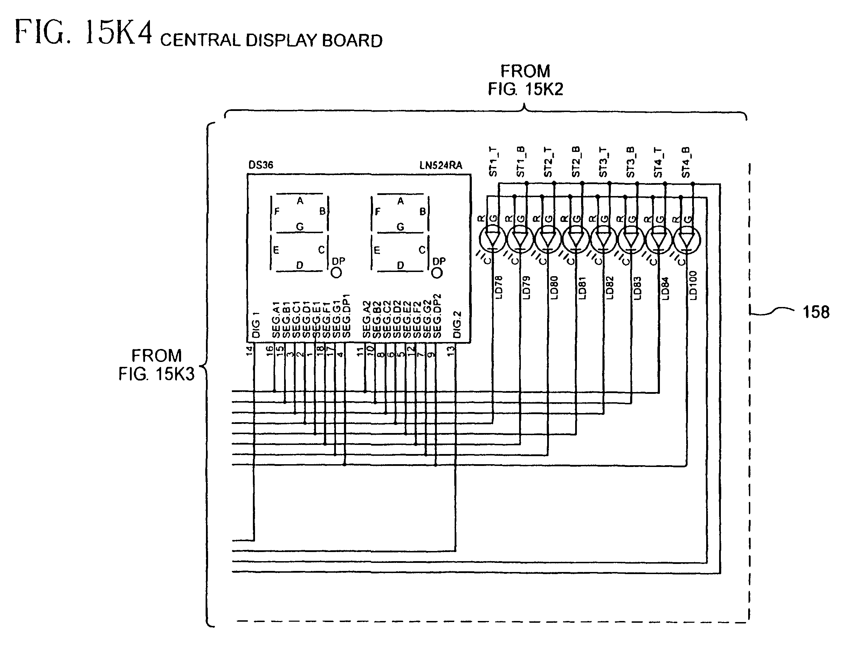

The display board 158 is shown in Figures 15A1-15L. The connector J11 on the station control board 156 shown in Figure 14J is coupled to a connector J2 on the display board 158 shown in Figure 15A4, and provides the multiplexed address and data bus to decoders 74LS138 U16-U18, latches 74HCT574 U 13, U 15 and a buffer 74HCT540 U14. The outputs of the buffer 74HCT540 U14 are pulled up to VCC with a 10K ohm resistor pack RN 1. These devices along with a transistor 2N7000 Q1 and a 180 ohm resistor R3 enable control of the displays and indicators located on the display board 158 shown in Figures 15C1-15K4, as well as a vacuum fluorescent display VFD1 shown in Figure 15A1, by the station control board 156. A set of 0.1µF capacitors C1-C18 provide bypass capacitance for the devices on the display board 158.

The vacuum fluorescent display VFD1 shown in Figure 15A1 corresponds to the alphanumeric display 142 shown in Figure 4. Groups of four 14-segment displays LTP3784E DS1-DS24 shown in Figures 15C1-15H3 correspond to one product name display 134 shown in Figure 4. Each of the 14-segment displays LTP3784E DS1-DS24 is capable of indicating two alphanumeric digits. The decoders, latches and buffer shown in Figures 15A2-15B4 are electrically connected to six 14-segment drivers ICM7243B U1-U6 shown in Figures 15C1-15H3. These drivers provide the signals required by the 14-segment displays LTP3784 DS1-DS24 to display the identities of the different products sold. It is to be noted that there are twelve groups of four 14-segment displays LTP3784E DS1-DS24 shown in Figures 15C1-15H3, which correspond to the twelve product name displays 134 on Figure 4.

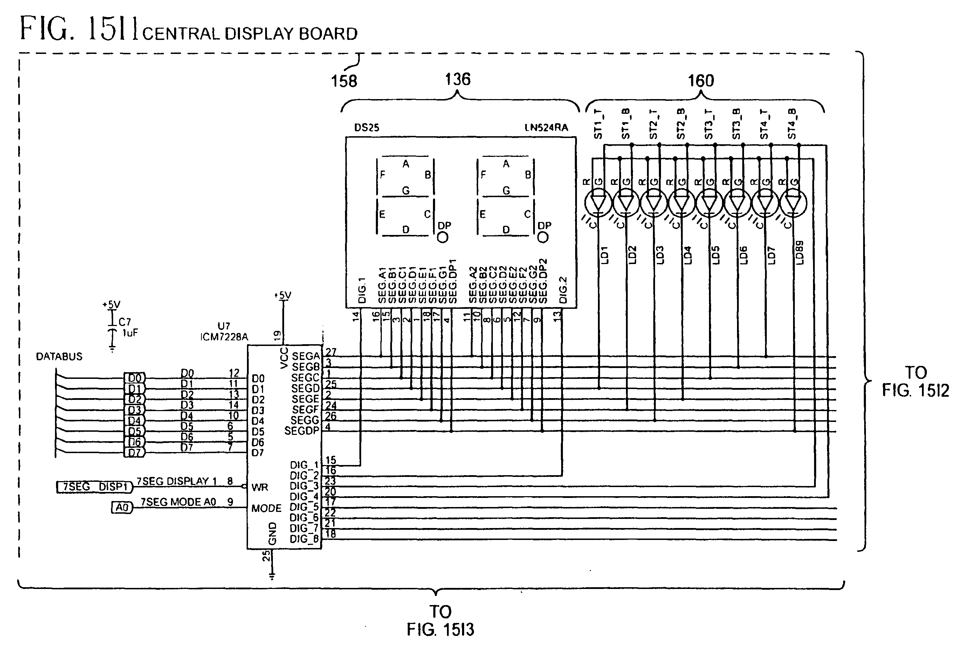

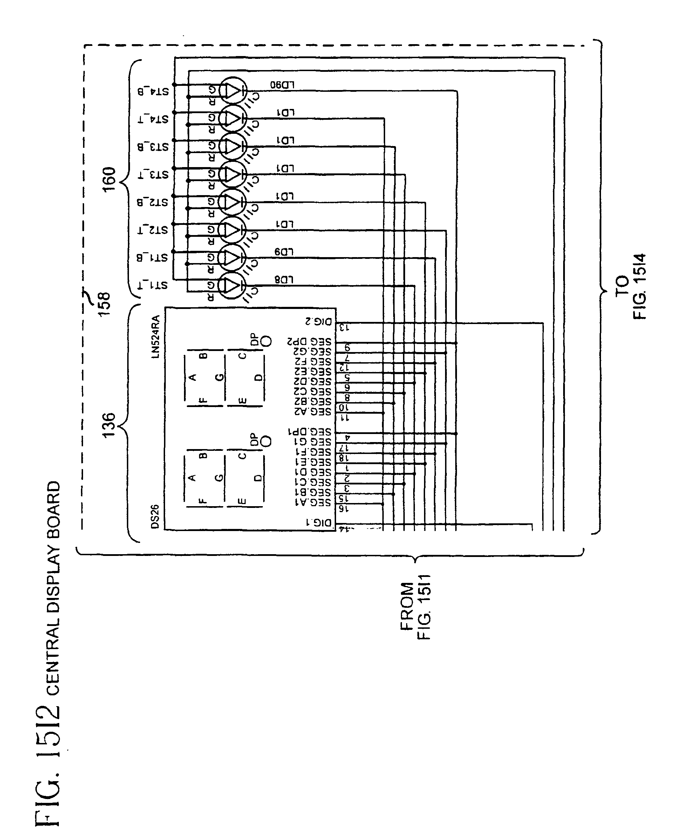

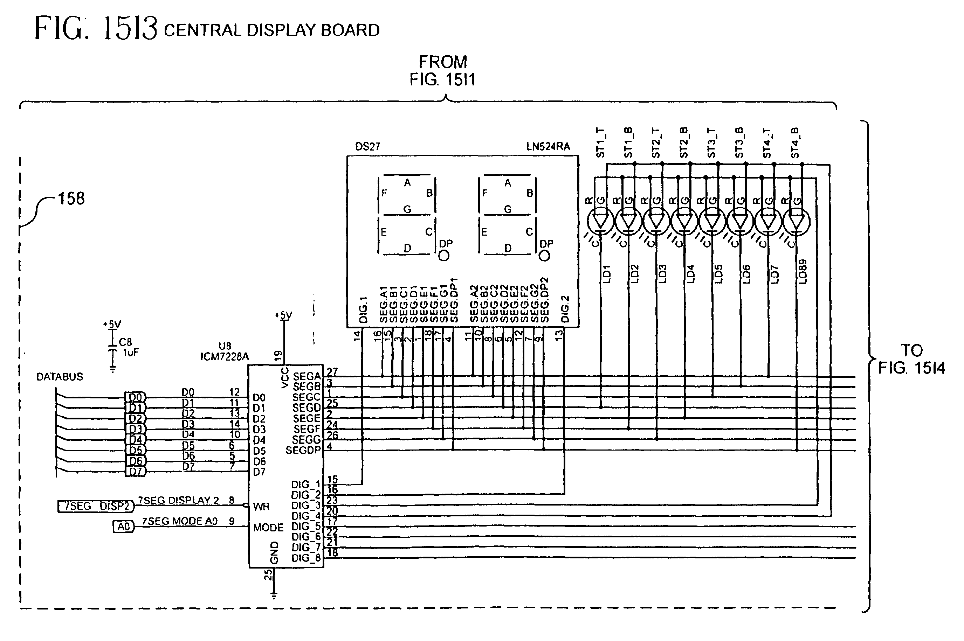

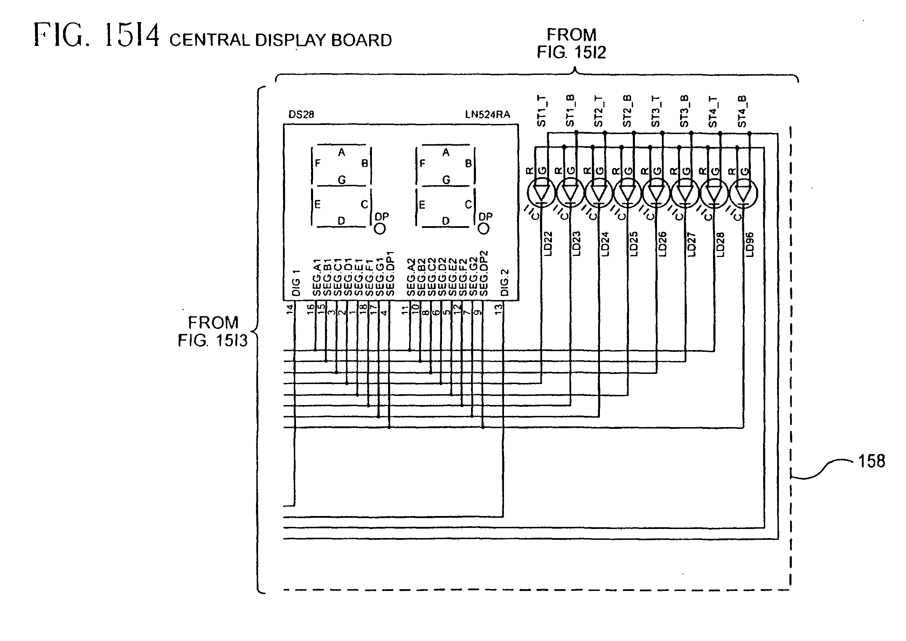

Figures 15I1-15I4 and 15K1-15K4 show the pan fill level display 136 and the product status indicators 44 located on the display 18 as shown in Figure 4. Twelve groups of two 7-segment displays LN524RA DS25-DS36 correspond to the twelve pan fill level displays 136 shown in Figure 4. Likewise, groups 160 of eight LED's LD1-LD100 correspond to the product status indicators 44 in each product type section 132 shown in Figure 4. For instance, LED LD1 on Figures 15I1-15I4 correspond to the product status indicator 44 in the first column and upper first row in the front counter station 12, and LED LD2 corresponds to the product status indicator 44 corresponding to the first column and lower first row in the front counter station 12. Six 7-segment display drivers ICM7228A U7-U12 are electrically connected to the decoders, latches and buffer shown in Figures 15A1-15A4 and 15B1-15B4, and provide signals required for the LED's LD1-LD100 and the 7-segment displays LN524RA DS25-DS36 to display the status and the pan fill levels for each product, respectively.

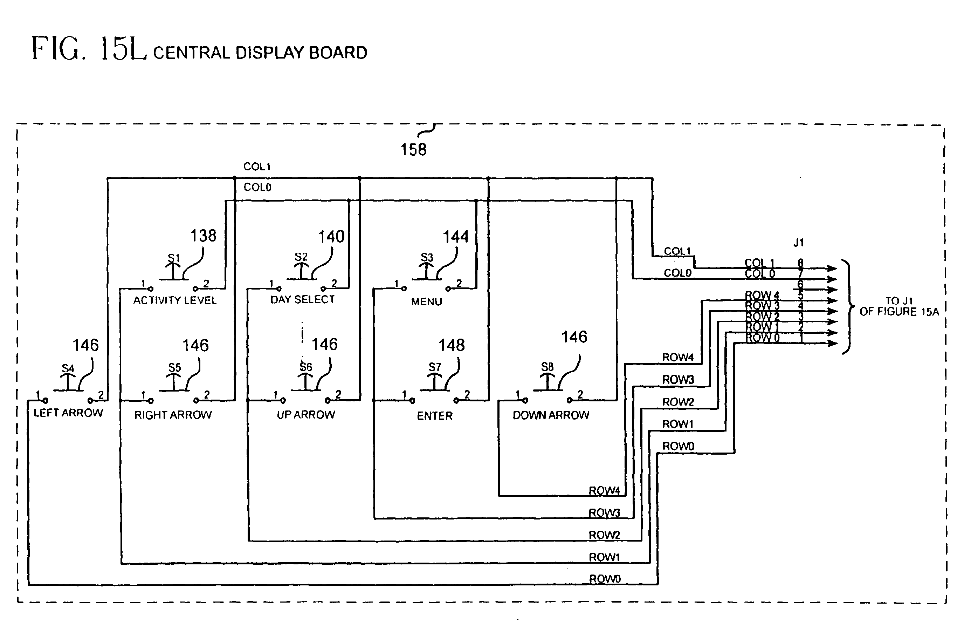

Figure 15L is a schematic diagram of the activity level switch 138. the day part select switch 140, the menu switch 144, the editing cursor switches 146 and the enter switch 148 shown in the lower portion of the display 18 on Figure 4. Each of the switches include two terminals interconnected in a column and row matrix and provided as signals via a connector J1 to the buffer 74HCT540 U 14 and the latch 74HCT574 U15 shown in Figures 15A1-15A4. The microcontroller 80C32 U1 on the SCB 156 can readily determine which of the switches was selected by accessing the buffer and latch by means well known in the art.

### Additional Embodiments

The product status indicators 44 may include a liquid crystal display (LCD) or light emitting diode (LED) display, which is used to display the current value of the storage time for the corresponding food product. The worker may then use the storage time to determine whether a particular action should be taken with respect to the corresponding food product, such as cooking replenishment product or discarding the product.

Although illustrative embodiments of the present invention have been described herein with reference to the accompanying drawing, it is to be understood that the invention is not limited to those precise embodiments, and that various other changes and modifications may be effected therein by one skilled in the art without departing from the scope of the invention as defined by the appended claims.

## Claims

1. A method for monitoring the status and storage location of a prepared food product in a restaurant using a product status system having a processing circuit (150, 152, 154, 156), a source storage location (12, 14, 16), and a destination storage location (12, 14, 16), wherein the prepared food product is supplied by a user of the system to the source storage location (12, 14, 16), the source storage location (12, 14, 16) having a source storage timer (U1) associated therewith, the source storage timer (U1) being coupled to the processing circuit (150, 152, 154, 156), the source storage timer (U1) counting a source storage time, the source storage time being representative of the duration of time that the prepared food product has been stored at the source storage location (12, 14, 16), the source storage time being compared with an acceptable food product hold time, and
wherein the prepared food product is removed from the source storage location (12, 14, 16) by the system user and transferred by the system user to the destination storage location (12, 14, 16),
**characterised in that** the system includes:
- a source food product status indicator (44) associated with the source storage location (12, 14, 16), the source food product status indicator (44) being coupled to the processing circuit (150, 152, 154, 156), the source food product status indicator (44) having at least a first state which indicates that the prepared food product is stored at the associated source storage location (12, 14, 16), at least a second state which indicates that the prepared food product is not stored at the associated source storage location (12, 14, 16, and at least a third state which indicates that the source storage time exceeds the acceptable food product hold time;
- first means (38, 42) for selecting a source food product transfer mode associated with the source storage location (12, 14, 16), the first means (38, 42) for selecting the source food product transfer mode being coupled to the processing circuit (150, 152, 154, 156);
- a destination food product status indicator (44) associated with the destination storage location (12, 14, 16), the destination food product status indicator (44) being coupled to the processing circuit (150, 152, 154, 156), the destination food product status indicator (44) having at least a first state which indicates that the prepared food product is stored at the associated destination storage location (12, 14, 16), at least a second state which indicates that the prepared food product is not stored at the associated destination storage location (12, 14, 16), and at least a third state which indicates that the cumulative storage time exceeds the acceptable food product hold time;
- second means (38, 42) for selecting a destination food product transfer mode associated with the destination storage location (12, 14, 16), the second means (38, 42) for selecting the destination food product transfer mode being coupled to the processing circuit (150, 152, 154, 156); and
- a destination storage timer (U1) associated with the destination storage location (12, 14, 16), the destination storage timer (U1) being coupled to the processing circuit (150, 152, 154, 156);
and wherein the method includes the following steps:
a.) changing by the system the state of the source food product status indicator (44) from the second state to the first state in response to the prepared food product being supplied to the source storage location (12, 14, 16);
b.) initiating by the system the source storage timer (U1) associated with the source storage location (12, 14, 16) in response to the source food product status indicator (44) changing from the second state to the first state, whereby the source storage timer (U1) counts the source storage time;
c.) changing by the system the state of the food product status indicator (44) associated with the source storage location (12, 14, 16) to the third state if the source storage time exceeds the acceptable food product hold time;
d.) selecting by the system user with the first means (38, 42) the source food product transfer mode;
e.) changing by the system the state of the source food product status indicator (44) from the first state to the second state in response to the prepared food product being removed by the system user from the source storage location (12, 14, 16) and the source food product transfer mode being selected;
f.) selecting by the system user with the second means (38, 42) the destination food product transfer mode;
g.) changing by the system the state of the destination food product status indicator (44) from the second state to the first state in response to the prepared food product being supplied by the system user to the destination storage location (12, 14, 16) and the destination food product transfer mode being selected;
h.) initiating by the system the destination storage timer (U1) associated with the destination storage location (12, 14, 16) in response to the destination food product status indicator (44) changing from the second state to the first state, the destination storage timer (U1) counting the cumulative storage time representative of the duration of time that the prepared food product has been stored at the source storage location (12, 14, 16) and the destination storage location (12, 14, 16);
i.) comparing by the system the cumulative storage time with the acceptable food product hold time; and
j.) changing by the system the state of the destination food product status indicator (44) to the third state in response to the cumulative storage time exceeding the acceptable food product hold time.

2. The method of Claim 1,
**characterised in that** the destination food product status indicator (44) has at least a fourth state which indicates that the cooking of a replenishment food product should commence, and the method includes the following steps:
k.) comparing by the system the cumulative storage time with a cook start time, the cook start time being equal to the difference between the acceptable food product hold time and the time required to cook the replenishment food product; and
1.) changing by the system the state of the destination food product status indicator (44) to the fourth state in response to the cumulative storage time exceeding the cook start time.

3. The method of Claim 1,
**characterised in that** the method includes the step of displaying by the system the state of at least one of the source food product status indicator (44) and the destination food product status indicator (44) on a display (18), the display (18) being located remotely from at least one of the source storage location (12, 14, 16) and the destination storage location (12, 14, 16).

4. The method of Claim 1,
**characterised in that** at least one of the source storage location (12, 14, 16) and the destination storage location (12, 14, 16) has an active switch (34) associated therewith, wherein at least one of the source food product status indicator (44) and the destination food product status indicator (44) has a location inactive state which indicates that at least one of the source storage location (12, 14, 16) and the destination storage location (12, 14, 16) is not being used, and the method includes the step of changing by the system the state of at least one of the source food product status indicator (44) and the destination food product status indicator (44) to the location inactive state in response to activation by the system user of the active switch (34).

5. The method of Claim 1,
**characterised in that** at least one of the source food product status indicator (44) and the destination food product status indicator (44) has a location inactive state which indicates that at least one of the source storage location (12, 14, 16) and the destination
storage location (12, 14, 16) is not being used, and the method includes the step of changing by the system the state of at least one of the source food product status indicator (44) and the destination food product status indicator (44) to the location inactive state in response to at least one of a time, a day and an event.

6. The method of Claim 1,
**characterised in that** the method includes the step of providing a pan fill level associated with at least one of the source storage location (12, 14, 16) and the destination storage location (12, 14, 16), the pan fill level indicating a quantity of the prepared food product to cook in response to the state of at least one of the source food product status indicator (44) and the destination food product status indicator (44) changing to the second state.

7. The method of Claim 6,
**characterised in that** the method includes the step of displaying by the system the pan fill level on a display (18), the display (18) being located remotely from at least one of the source storage location (12, 14, 16) and the destination storage location (12, 14, 16).

8. The method of Claim 6,
**characterised in that** the method includes the following steps:
m.) electronically displaying by the system an activity level associated with at least one of the source storage location (12, 14, 16) and the destination storage location (12, 14, 16), the activity level indicating a rate of sale of the prepared food product; and
n.) changing the pan fill level as a function of the activity level.

9. The method of Claim 8,
**characterised in that** the method includes the step of storing by the system the activity level in a memory (U15).

10. The method of Claim 8,
**characterised in that** at least one of the source storage location (12, 14, 16) and the destination storage location (12, 14, 16) has an activity level switch (138) associated therewith, and the method includes the step of changing the activity level in response to activation by the system user of the activity level switch (138).

11. The method of Claim 8,
**characterised in that** the method includes the step of changing the activity level in response to at least one of a time, a day and an event.

12. The method of Claim 8,
**characterised in that** the method includes the step of displaying by the system the activity level on a display (18), the display (18) being located remotely from at least one of the source storage location (12, 14, 16) and the destination storage location (12, 14, 16).

13. The method of Claim 6,
**characterised in that** the method includes the following steps:
o.) providing by the system a selectable menu associated with at least one of the source storage location (12, 14, 16) and the destination storage location (12, 14, 16), the selectable menu having associated therewith at least one pan fill level; and
p.) electronically displaying by the system the selectable menu on a display (18), the display (18) being located remotely from at least one of the source storage location (12, 14, 16) and the destination storage location (12, 14, 16).

14. The method of Claim 6,
**characterised in that** the step of providing a pan fill level includes the following steps:
q.) calculating by the system a food product per unit sale volume, the food product per unit sale volume being representative of a quantity of food product sold at a unit sale volume, the unit sale volume being representative of a volume of sale in dollars;
r.) determining by the system an activity level, the activity level being representative of a quantity of unit sale volume substantially equal to a current volume of sale; and
s.) multiplying by the system the food product per unit sale volume by the activity level and dividing by the system the product of the food product per unit sale volume and the activity level by a quantity of open pans to yield the pan fill level.

15. The method of Claim 13,
**characterised in that** at least one of the source storage location (12, 14, 16) and the destination storage location (12, 14, 16) has a selectable menu switch (144), associated therewith, and the method includes the step of changing by the system the selectable menu in response to activation by the system user of the selectable menu switch (144).

16. The method of Claim 1,
**characterised in that** the method includes the step of positioning the source storage location (12, 14, 16) and the destination storage location (12, 14, 16) in substantially similar spatial locations in different stations (12, 14, 16).

17. The method of Claim 1,
**characterised in that** the destination food product indicator (44) has a transfer mode state which indicates that the food product can be transferred into the associated destination storage location (12, 14, 16), and the method includes the step of changing by the system the state of the destination food product status indicator (44) to the transfer mode state in response to the system user selecting the destination food product transfer mode.

18. A product status system which monitors the status and storage location of a prepared food product having a processing circuit (150, 152, 154, 156), a source storage location (12, 14, 16) for receiving the prepared food product, and a source storage timer (U1) associated with the source storage location (12, 14, 16), the source storage timer (U1) being coupled to the processing circuit (150, 152, 154, 156), the source storage timer (U1) being adapted to count a source storage time, the source storage time being representative of the duration of time that the prepared food product has been stored at the source storage location (12, 14, 16), the processing circuit (U1) being adapted to compare the source storage time with an acceptable food product hold time, wherein at least a portion of the prepared food product is removed from the source storage location (12, 14, 16) and transferred to a destination storage location (12, 14, 16),
**characterised in that** the system includes:
- a source food product status switch (42) associated with the source storage location (12, 14, 16), the source food product status switch (42) being coupled to the processing circuit (150, 152, 154, 156);
- means (38) for selecting a source food product transfer mode associated with the source storage location (12, 14, 16), the means (38) for selecting the source food product transfer mode being coupled to the processing circuit;
- a source food product status indicator (44) associated with the source storage location (12, 14, 16), the source food product status indicator (44) being coupled to the processing circuit (150, 152, 154, 156), the source food product status indicator (44) having at least a first state which indicates that the prepared food product is stored at the associated source storage location (12, 14, 16) and at least a second state which indicates that the prepared food product is not stored at the associated source storage location (12, 14, 16), the state of the source food product status indicator (44) being adapted to change from the second state to the first state in response to the prepared food product being supplied to the source storage location (12, 14, 16) and the source food product status switch (42) being selected, the state of the source food product status indicator (44) being adapted to change from the first state to the second state in response to the source storage location (12, 14, 16) no longer containing prepared food product and the source food product status switch (42) being selected;
- the source storage timer (U1) being adapted to be initiated in response to the source food product status indicator (44) when changing from the second state to the first state, the source food product status indicator (44) having at least a third state which indicates that the source storage time exceeds the acceptable food product hold time, the state of the source food product status indicator (44) being adapted to change to the third state in response to the source storage time exceeding the acceptable food product hold time;
- a destination food product status switch (42) associated with a destination storage location (12, 14, 16), the destination food product status switch (42) being coupled to the processing circuit (150, 152, 154, 156);
- means (38) for selecting a destination food product transfer mode associated with the destination storage location (12, 14, 16), the means (38) for selecting the destination food product transfer mode being coupled to the processing circuit (150, 152, 154, 156);
- a destination food product status indicator (44) associated with the destination storage location (12, 14, 16), the destination food product status indicator (44) being coupled to the processing circuit (150, 152, 154, 156), the destination food product status indicator (44) having at least a first state which indicates that the prepared food product is stored at the associated destination storage location (12, 14, 16) and at least a second state which indicates that the prepared food product is not stored at the associated destination storage location (12, 14, 16), the state of the destination food product status indicator (44) being adapted to change from the second state to the first state in response to the prepared food product being supplied to the destination storage location (12, 14, 16) and the destination food product status switch (42) being selected, the state of the destination food product status indicator (44) being adapted to change from the first state to the second state in response to the destination storage location (12, 14, 16) no longer containing prepared food product and the destination food product status switch (42) being selected; and
- a destination storage timer (U1) associated with the destination storage location (12, 14, 16), the destination storage timer (U1) being coupled to the processing circuit (150, 152, 154, 156), the destination storage timer (U1) being adapted to be initiated in response to the destination food product status indicator (44) when changing from the second state to the first state, the destination storage timer (U1) being adapted to count a cumulative storage time, the cumulative storage time being representative of the duration of time that the prepared food product has been stored at the source storage location (12, 14, 16) and the destination storage location (12, 14, 16), the destination food product status indicator (44) having at least a third state which indicates that the cumulative storage time exceeds the acceptable food product hold time, the processing circuit (150, 152, 154, 156) being adapted to compare the cumulative storage time with the acceptable food product hold time, the state of the destination food product status indicator (44) being adapted to change to the third state in response to the cumulative storage time exceeding the acceptable food product hold time.

19. The system of Claim 18,
**characterised in that** the destination food product status indicator (44) has at least a fourth state which indicates that the cooking of a replenishment food product should commence, the processing circuit (150, 152, 154, 156) being adapted to compare the cumulative storage time with a cook start time, the cook start time being equal to the difference between the acceptable food product hold time and the time required to cook the replenishment food product, the state of the destination food product status indicator (44) being adapted to change to the fourth state in response to the cumulative storage time exceeding the cook start time.

20. The system of Claim 18,
**characterised in that** the system has a display (18), the display (18) being adapted to indicate the state of at least one of the source food product status indicator (44) and the destination food product status indicator (44), the display (18) being located remotely from at least one of the source storage location (12, 14, 16) and the destination storage location (12, 14, 16).

21. The system of Claim 18,
**characterised in that** the system has an active switch (34) associated with at least one of the source storage location (12, 14, 16) and the destination storage location (12, 14, 16), wherein at least one of the source food product status indicator (44) and the destination food product status indicator (44) has a location inactive state which indicates that at least one of the source storage location (12, 14, 16) and the destination storage location (12, 14, 16) is not being used, the state of at least one of the source food product status indicator (44) and the destination food product status indicator (44) being adapted to change to the location inactive state in response to activation of the active switch (34).

22. The system of Claim 18,
**characterised in that** at least one of the source food product status indicator (44) and the destination food product status indicator (44) has a location inactive state which indicates that at least one of the source storage location (12, 14, 16) and the destination storage location (12, 14, 16) is not being used, the state of at least one of the source food product status indicator (44) and the destination food product status indicator (44) being adapted to change to the location inactive state in response to at least one of a time, a day and an event.

23. The system of Claim 18,
**characterised in that** the system has a pan fill level associated with at least one of the source storage location (12, 14, 16) and the destination storage location (12, 14, 16), the pan fill level being adapted to indicate a quantity of the prepared food product to cook in response to the state of at least one of the source food product status indicator (44) and the destination food product status indicator (44) when changing to the second state.

24. The system of Claim 23,
**characterised in that** the system has a display (18), the display (18) being located remotely from at least one of the source storage location (12, 14, 16) and the destination storage location (12, 14, 16), the pan fill level being adapted to be displayed on the display (18).

25. The system of Claim 23,
**characterised in that** the system has an activity level associated with at least one of the source storage location (12, 14, 16) and the destination storage location (12, 14, 16), the activity level indicating a rate of sale of the prepared food product, the pan fill level being adapted to change as a function of the activity level.

26. The system of Claim 25,
**characterised in that** the system has a memory (U15), the activity level being stored in the memory (U 15).

27. The system of Claim 25,
**characterised in that** the system has an activity level switch (138) associated with at least one of the source storage location (12, 14, 16) and the destination storage location (12, 14, 16), the activity level being adapted to change in response to activation of the activity level switch (138).

28. The system of Claim 25,
**characterised in that** the activity level is changed in response to at least one of a time, a day and an event.

29. The system of Claim 25,
**characterised in that** the system has a display (18), the display (18) being located remotely from at least one of the source storage location (12, 14, 16) and the destination storage location (12, 14, 16), the activity level being adapted to be displayed on the display (18).

30. The system of Claim 23,
**characterised in that** the system has a display (18) and a selectable menu associated with at least one of the source storage location (12, 14, 16) and the destination storage location (12, 14, 16), the selectable menu having associated therewith the pan fill level, the selectable menu being adapted to be electronically displayed on the display (18).

31. The system of Claim 30,
**characterised in that** at least one of the source storage location (12, 14, 16) and the destination storage location (12, 14, 16) has a selectable menu switch (144) associated therewith, the selectable menu being adapted to change in response to activation of the selectable menu switch (144).

32. The system of Claim 18,
**characterised in that** the source storage location (12, 14, 16) and the destination storage location (12, 14, 16) are positioned in substantially similar spatial locations in different stations (12, 14, 16).

33. The system of Claim 18,
**characterised in that** the destination food product status indicator (44) has a transfer mode state which indicates that the prepared food product can be transferred into the destination storage location (12, 14, 16), the state of the destination food product status indicator (44) being adapted to change to the transfer mode state in response to the source food product transfer mode and the destination food product status switch (42) being selected.

34. The system of Claim 18,
**characterised in that** at least one of the source storage location (12, 14, 16) and the destination storage location (12, 14, 16) has a food product pan (48) associated therewith, at least one of the source food product status switch (42), the destination food product status switch (42), the source food product status indicator (44) and the destination food product status indicator (44) being located in alignment with the food product pan (48).

## Patentansprüche

1. Verfahren zum Überwachen des Status und des Lagerungsortes eines zubereiteten Nahrungsmittelprodukts in einem Restaurant unter Verwendung eines Produktstatussystems mit einer Verarbeitungsschaltung (150, 152, 154, 156), einem Ursprungs-Lagerungsort (12, 14, 16) und einem Ziel-Lagerungsort (12, 14, 16), wobei das zubereitete Nahrungsmittelprodukt von einem Nutzer des Systems dem Ursprungs-Lagerungsort (12, 14, 16) zugeführt wird, wobei der Ursprungs-Lagerungsort (12, 14, 16) einen zugeordneten Ursprungs-Lagerungszeitgeber (U1) aufweist, wobei der Ursprungs-Lagerungszeitgeber (U1) mit der Verarbeitungsschaltung (150, 152, 154, 156) gekoppelt ist, wobei der Ursprungs-Lagerungszeitgeber (U1) eine Ursprungs-Lagerungszeit zählt, wobei die Ursprungs-Lagerungszeit repräsentativ für die Zeitdauer ist, für die das zubereitete Nahrungsmittelprodukt an dem Ursprungs-Lagerungsort (12, 14, 16) gelagert worden ist, wobei die Ursprungs-Lagerungszeit mit einer akzeptablen Nahrungsmittelprodukt-Haltezeit verglichen wird und wobei das zubereitete Nahrungsmittelprodukt von dem Systemnutzer von dem Ursprungs-Lagerungsort (12, 14, 16) entnommen wird und von dem Systemnutzer zu dem Ziel-Lagerungsort (12, 14, 16) transferiert wird,
**dadurch gekennzeichnet,**
**dass** das System folgendes aufweist:
- eine dem Ursprungs-Lagerungsort (12, 14, 16) zugeordnete Ursprungs-Nahrungsmittelprodukt-Statusanzeige (44), wobei die Ursprungs-Nahrungsmittelprodukt-Statusanzeige (44) mit der Verarbeitungsschaltung (150, 152, 154, 156) gekoppelt ist, wobei die Ursprungs-Nahrungsmittelprodukt-Statusanzeige (44) folgendes aufweist: mindestens einen ersten Zustand, der anzeigt, dass das zubereitete Nahrungsmittelprodukt an dem zugeordneten Ursprungs-Lagerungsort (12, 14, 16) gelagert wird, mindestens einen zweiten Zustand, der anzeigt, dass das zubereitete Nahrungsmittelprodukt nicht an dem zugeordneten Ursprungs-Lagerungsort (12, 14, 16) gelagert wird, sowie mindestens einen dritten Zustand, der anzeigt, dass die Ursprungs-Lagerungszeit die akzeptable Nahrungsmittelprodukt-Haltezeit überschreitet;
- eine erste Einrichtung (38, 42) zum Auswählen eines dem Ursprungs-Lagerungsort (12, 14, 16) zugeordneten Ursprungs-Nahrungsmittelprodukt-Transfermodus, wobei die erste Einrichtung (38, 42) zum Auswählen des Ursprungs-Nahrungsmittelprodukt-Transfermodus mit der Verarbeitungsschaltung (150, 152, 154, 156) gekoppelt ist;
- eine dem Ziel-Lagerungsort (12, 14, 16) zugeordnete Ziel-Nahrungsmittelprodukt-Statusanzeige (44), wobei die Ziel-Nahrungsmittelprodukt-Statusanzeige (44) mit der Verarbeitungsschaltung (150, 152, 154, 156) gekoppelt ist, wobei die Ziel-Nahrungsmittelprodukt-Statusanzeige (44) folgendes aufweist: mindestens einen ersten Zustand, der anzeigt, dass das zubereitete Nahrungsmittelprodukt an dem zugeordneten Ziel-Lagerungsort (12, 14, 16) gelagert wird, mindestens einen zweiten Zustand, der anzeigt, dass das zubereitete Nahrungsmittelprodukt nicht an dem zugeordneten Ziel-Lagerungsort (12, 14, 16) gelagert wird, sowie mindestens einen dritten Zustand, der anzeigt, dass die kumulierte Lagerungszeit die akzeptable Nahrungsmittelprodukt-Haltezeit überschreitet;
- eine zweite Einrichtung (38, 42) zum Auswählen eines dem Ziel-Lagerungsort (12, 14, 16) zugeordneten Ziel-Nahrungsmittelprodukt-Transfermodus, wobei die zweite Einrichtung (38, 42) zum Auswählen des Ziel-Nahrungsmittelprodukt-Transfermodus mit der Verarbeitungsschaltung (150, 152, 154, 156) gekoppelt ist; und
- einen dem Ziel-Lagerungsort (12, 14, 16) zugeordneten Ziel-Lagerungszeitgeber (U1), wobei der Ziel-Lagerungszeitgeber (U1) mit der Verarbeitungsschaltung (150, 152, 154, 156) gekoppelt ist;
und wobei das Verfahren folgende Schritte aufweist:
a.) durch das System erfolgendes Ändern des Zustands der Ursprungs-Nahrungsmittelprodukt-Statusanzeige (44) von dem zweiten Zustand in den ersten Zustand in Reaktion darauf, dass das zubereitete Nahrungsmittelprodukt dem Ursprungs-Lagerungsort (12, 14, 16) zugeführt wird;
b.) durch das System erfolgendes Initiieren des dem Ursprungs-Lagerungsort (12, 14, 16) zugeordneten Ursprungs-Lagerungszeitgebers (U1) in Reaktion darauf, dass die Ursprungs-Nahrungsmittelprodukt-Statusanzeige (44) von dem zweiten Zustand in den ersten Zustand wechselt, wobei der Ursprung-Lagerungszeitgeber (U1) die Ursprungs-Lagerungszeit zählt;
c.) durch das System erfolgendes Ändern des Zustands der dem Ursprungs-Lagerungsort (12, 14, 16) zugeordneten Nahrungsmittelprodukt-Statusanzeige (44) in den dritten Zustand, wenn die Ursprungs-Lagerungszeit die akzeptable Nahrungsmittelprodukt-Haltezeit überschreitet;
d.) durch den Systemnutzer mittels der ersten Einrichtung (38, 42) erfolgendes Auswählen des Ursprungs-Nahrungsmittelprodukt-Transfermodus;
e.) durch das System erfolgendes Ändern des Zustands der Ursprungs-Nahrungsmittelprodukt-Statusanzeige (44) von dem ersten Zustand in den zweiten Zustand in Reaktion darauf, dass das zubereitete Nahrungsmittelprodukt von dem Systemnutzer von dem Ursprungs-Lagerungsort (12, 14, 16) entnommen wird und der Ursprungs-Nahrungsmittelprodukt-Transfermodus ausgewählt wird;
f.) durch den Systemnutzer mittels der zweiten Einrichtung (38, 42) erfolgendes Auswählen des Ziel-Nahrungsmittelprodukt-Transfermodus;
g.) durch das System erfolgendes Ändern des Zustands der Ziel-Nahrungsmittelprodukt-Statusanzeige (44) von dem zweiten Zustand in den ersten Zustand in Reaktion darauf, dass das zubereitete Nahrungsmittelprodukt von dem Systemnutzer dem Ziel-Lagerungsort (12, 14, 16) zugeführt wird und der Ziel-Nahrungsmittelprodukt-Transfermodus ausgewählt wird;
h.) durch das System erfolgendes Initiieren des dem Ziel-Lagerungsort (12, 14, 16) zugeordneten Ziel-Lagerungszeitgebers (U1) in Reaktion darauf, dass die Ziel-Nahrungsmittelprodukt-Statusanzeige (44) von dem zweiten Zustand in den ersten Zustand wechselt, wobei der Ziel-Lagerungszeitgeber (U1) die kumulierte Lagerungszeit zählt, die für die Zeitdauer repräsentativ ist, für die das zubereitete Nahrungsmittelprodukt an dem Ursprungs-Lagerungsort (12, 14, 16) und dem Ziel-Lagerungsort (12, 14, 16) gelagert worden ist;
i.) durch das System erfolgendes Vergleichen der kumulierten Lagerungszeit mit der akzeptablen Nahrungsmittelprodukt-Haltezeit; und
j.) durch das System erfolgendes Ändern des Zustands der Ziel-Nahrungsmittelprodukt-Statusanzeige (44) in den dritten Zustand in Reaktion darauf, dass die kumulierte Lagerungszeit die akzeptable Nahrungsmittelprodukt-Haltezeit überschreitet.

2. Verfahren nach Anspruch 1,
**dadurch gekennzeichnet,**
**dass** die Ziel-Nahrungsmittelprodukt-Statusanzeige (44) mindestens einen vierten Zustand aufweist, der anzeigt, dass die Zubereitung eines Nachschub-Nahrungsmittelprodukts beginnen sollte, und wobei das Verfahren folgende Schritte beinhaltet:
k.) durch das System erfolgendes Vergleichen der kumulierten Lagerungszeit mit einer Zubereitungs-Startzeit, wobei die Zubereitungs-Startzeit gleich der Differenz zwischen der akzeptablen Nahrungsmittelprodukt-Haltezeit sowie der Zeit ist, die zum Zubereiten des Nachschub-Nahrungsmittelprodukts erforderlich ist; und
1.) durch das System erfolgendes Ändern des Zustands der Ziel-Nahrungsmittelprodukt-Statusanzeige (44) in den vierten Zustand in Reaktion darauf, dass die kumulierte Lagerungszeit die Zubereitungs-Startzeit überschreitet.

3. Verfahren nach Anspruch 1,
**dadurch gekennzeichnet,**
**dass** das Verfahren den Schritt beinhaltet, in dem durch das System der Zustand von mindestens einer von der Ursprungs-Nahrungsmittelprodukt-Statusanzeige (44) und der Ziel-Nahrungsmittelprodukt-Statusanzeige (44) auf einer Anzeige (18) angezeigt wird, wobei die Anzeige (18) entfernt von mindestens einem von dem Ursprungs-Lagerungsort (12, 14, 16) und dem Ziel-Lagerungsort (12, 14, 16) vorgesehen ist.

4. Verfahren nach Anspruch 1,
**dadurch gekennzeichnet,**
**dass** mindestens einem von dem Ursprungs-Lagerungsort (12, 14, 16) und dem Ziel-Lagerungsort (12, 14, 16) ein Aktiv-Schalter (34) zugeordnet ist, wobei mindestens eine von der Ursprungs-Nahrungsmittelprodukt-Statusanzeige (44) und der Ziel-Nahrungsmittelprodukt-Statusanzeige (44) einen inaktiven Ortszustand aufweist, der anzeigt, dass mindestens einer von dem Ursprungs-Lagerungsort (12, 14, 16) und dem Ziel-Lagerungsort (12, 14, 16) nicht in Verwendung ist, und wobei das Verfahren den Schritt beinhaltet, in dem durch das System der Zustand von mindestens einer von der Ursprungs-Nahrungsmittelprodukt-Statusanzeige (44) und der Ziel-Nahrungsmittelprodukt-Statusanzeige (44) in Reaktion auf eine Aktivierung des Aktiv-Schalters (44) von dem Systemnutzer in den inaktiven Ortszustand geändert wird.

5. Verfahren nach Anspruch 1,
**dadurch gekennzeichnet,**
**dass** mindestens eine von der Ursprungs-Nahrungsmittelprodukt-Statusanzeige (44) und der Ziel-Nahrungsmittelprodukt-Statusanzeige (44) einen inaktiven Ortszustand aufweist, der anzeigt, dass mindestens einer von dem Ursprungs-Lagerungsort (12, 14, 16) und dem Ziel-Lagerungsort (12, 14, 16) nicht in Verwendung ist, und wobei das Verfahren den Schritt beinhaltet, in dem durch das System der Zustand von mindestens einer von der Ursprungs-Nahrungsmittelprodukt-Statusanzeige (44) und der Ziel-Nahrungsmittelprodukt-Statusanzeige (44) in Reaktion auf mindestens eines von einer Zeit, einem Tag und einem Ereignis in den inaktiven Ortszustand geändert wird.

6. Verfahren nach Anspruch 1,
**dadurch gekennzeichnet,**
**dass** das Verfahren den Schritt beinhaltet, in dem ein Behältnis-Füllstand bereitgestellt wird, der mindestens einem von dem Ursprungs-Lagerungsort (12, 14, 16) und dem Ziel-Lagerungsort (12, 14, 16) zugeordnet ist, wobei der Behältnis-Füllstand eine Menge des zuzubereitenden Nahrungsmittelprodukts in Reaktion auf einen Wechsel des Zustands von mindestens einer von der Ursprungs-Nahrungsmittelprodukt-Statusanzeige (44) und der Ziel-Nahrungsmittelprodukt-Statusanzeige (44) in den zweiten Zustand anzeigt.

7. Verfahren nach Anspruch 6,
**dadurch gekennzeichnet,**
**dass** das Verfahren den Schritt beinhaltet, in dem durch das System der Behältnis-Füllstand auf einer Anzeige (18) angezeigt wird, wobei die Anzeige (18) entfernt von mindestens einem von dem Ursprungs-Lagerungsort (12, 14, 16) und dem Ziel-Lagerungsort (12, 14, 16) vorgesehen ist.

8. Verfahren nach Anspruch 6,
**dadurch gekennzeichnet,**
**dass** das Verfahren folgende Schritte beinhaltet:
m.) durch das System erfolgendes elektronisches Anzeigen eines Aktivitätspegels, der mindestens einem von dem Ursprungs-Lagerungsort (12, 14, 16) und dem Ziel-Lagerungsort (12, 14, 16) zugeordnet ist, wobei der Aktivitätspegel eine Verkaufsrate des zubereiteten Nahrungsmittelprodukts anzeigt; und
n.) Ändern des Behältnis-Füllstands in Abhängigkeit von dem Aktivitätspegel.

9. Verfahren nach Anspruch 8,
**dadurch gekennzeichnet,**
**dass** das Verfahren den Schritt beinhaltet, in dem der Aktivitätspegel durch das System in einem Speicher (U15) gespeichert wird.

10. Verfahren nach Anspruch 8,
**dadurch gekennzeichnet,**
**dass** mindestens einem von dem Ursprungs-Lagerungsort (12, 14, 16) und dem Ziel-Lagerungsort (12, 14, 16) ein Aktivitätspegel-Schalter (138) zugeordnet ist und das Verfahren den Schritt beinhaltet, in dem der Aktivitätspegel in Reaktion auf eine Aktivierung des Aktivitätspegel-Schalters (138) von dem Systemnutzer geändert wird.

11. Verfahren nach Anspruch 8,
**dadurch gekennzeichnet,**
**dass** das Verfahren den Schritt beinhaltet, in dem der Aktivitätspegel in Reaktion auf mindestens eines von einer Zeit, einem Tag und einem Ereignis geändert wird.

12. Verfahren nach Anspruch 8,
**dadurch gekennzeichnet,**
**dass** das Verfahren den Schritt beinhaltet, in dem der Aktivitätspegel von dem System auf einer Anzeige (18) angezeigt wird, wobei die Anzeige (18) entfernt von mindestens einem von dem Ursprungs-Lagerungsort (12, 14, 16) und dem Ziel-Lagerungsort (12, 14, 16) vorgesehen ist.

13. Verfahren nach Anspruch 6,
**dadurch gekennzeichnet,**
**dass** das Verfahren folgende Schritte beinhaltet:
o.) durch das System erfolgendes Bereitstellen eines Auswahlmenüs, das mindestens einem von dem Ursprungs-Lagerungsort (12, 14, 16) und dem Ziel-Lagerungsort 12, 14, 16) zugeordnet wird, wobei dem Auswahlmenü mindestens ein Behältnis-Füllstand zugeordnet wird; und
p.) durch das System erfolgendes elektronisches Anzeigen des Auswahlmenüs auf einer Anzeige (18), wobei die Anzeige (18) entfernt von mindestens einem von dem Ursprungs-Lagerungsort (12, 14, 16) und dem Ziel-Lagerungsort (12, 14, 16) vorgesehen ist.

14. Verfahren nach Anspruch 6,
**dadurch gekennzeichnet,**
**dass** der Schritt des Bereitstellens eines Behältnis-Füllstands folgende Schritte beinhaltet:
q.) durch das System folgendes Berechnen eines Nahrungsmittelprodukts pro Verkaufsvolumeneinheit, wobei das Nahrungsmittelprodukt pro Verkaufsvolumeneinheit repräsentativ für eine Nahrungsmittelproduktmenge ist, die in einer Verkaufsvolumeneinheit verkauft wird, wobei die Verkaufsvolumeneinheit repräsentativ für ein Verkaufsvolumen in Dollar ist;
r.) durch das System erfolgendes Bestimmen eines Aktivitätspegels, wobei der Aktivitätspegel repräsentativ für eine Menge der Verkaufsvolumeneinheit ist, die im wesentlichen gleich einem aktuellen Verkaufsvolumen ist; und
s.) durch das System erfolgendes Multiplizieren des Nahrungsmittelprodukts pro Verkaufsvolumeneinheit mit dem Aktivitätspegel und durch das System erfolgendes Dividieren des Produkts aus dem Nahrungsmittelprodukt pro Verkaufsvolumeneinheit und dem Aktivitätspegel durch eine Menge offener Behältnisse, um den Behältnis-Füllstand zu erhalten.

15. Verfahren nach Anspruch 13,
**dadurch gekennzeichnet,**
**dass** mindestens einem von dem Ursprungs-Lagerungsort (12, 14, 16) und dem Ziel-Lagerungsort (12, 14, 16) ein Auswahlmenü-Schalter (144) zugeordnet ist und dass das Verfahren den Schritt beinhaltet, in dem das Auswahlmenü von dem System in Reaktion auf eine Aktivierung des Auswahlmenü-Schalters (144) von dem Systemnutzer geändert wird.

16. Verfahren nach Anspruch 1,
**dadurch gekennzeichnet,**
**dass** das Verfahren den Schritt beinhaltet, in dem der Ursprungs-Lagerungsort (12, 14, 16) und der Ziel-Lagerungsort (12, 14, 16) im wesentlichen in ähnlichen räumlichen Positionen in unterschiedlichen Stationen (12, 14, 16) positioniert werden.

17. Verfahren nach Anspruch 1,
**dadurch gekennzeichnet,**
**dass** die Ziel-Nahrungsmittelprodukt-Anzeige (44) einen Transfermodus-Zustand aufweist, der anzeigt, dass das Nahrungsmittelprodukt in den zugeordneten Ziel-Lagerungsort (12, 14, 16) transferiert werden kann, und wobei das Verfahren den Schritt beinhaltet, in dem durch das System der Zustand der Ziel-Nahrungsmittelprodukt-Statusanzeige (44) in Reaktion auf eine Auswahl
des Ziel-Nahrungsmittelprodukt-Transfermodus von dem Systemnutzer in den Transfermodus-Zustand geändert wird.

18. Produktstatussystem, das den Status und den Lagerungsort eines zubereiteten Nahrungsmittelprodukts überwacht und eine Verarbeitungsschaltung (150, 152, 154, 156), einen Ursprungs-Lagerungsort (12, 14, 16) zum Aufnehmen des zubereiteten Nahrungsmittelprodukts sowie einen dem Ursprungs-Lagerungsort (12, 14, 16) zugeordneten Ursprungs-Lagerungszeitgeber (U1) aufweist, wobei der Ursprungs-Lagerungszeitgeber (U1) mit der Verarbeitungsschaltung (150, 152, 154, 156) gekoppelt ist, wobei der Ursprungs-Lagerungszeitgeber (U1) zum Zählen einer Ursprungs-Lagerungszeit ausgelegt ist, wobei die Ursprungs-Lagerungszeit repräsentativ für die Zeitdauer ist, für die das zubereitete Nahrungsmittelprodukt an dem Ursprungs-Lagerungsort (12, 14, 16) gelagert worden ist, wobei die Verarbeitungsschaltung (U1) dazu ausgebildet ist, die Ursprungs-Lagerungszeit mit einer akzeptablen Nahrungsmittelprodukt-Haltezeit zu vergleichen, wobei zumindest ein Teil des zubereiteten Nahrungsmittelprodukts von dem Ursprungs-Lagerungsort (12, 14, 16) entnommen wird und zu einem Ziel-Lagerungsort (12, 14, 16) transferiert wird,
**dadurch gekennzeichnet,**
**dass** das System folgendes aufweist:
- einen dem Ursprungs-Lagerungsort (12, 14, 16) zugeordneten Ursprungs-Nahrungsmittelprodukt-Statusschalter (42), wobei der Ursprungs-Nahrungsmittelprodukt-Statusschalter (42) mit der Verarbeitungsschaltung (150, 152, 154, 156) gekoppelt ist;
- eine Einrichtung (38) zum Auswählen eines dem Ursprungs-Lagerungsort (12, 14, 16) zugeordneten Ursprungs-Nahrungsmittelprodukt-Transfermodus, wobei die Einrichtung (38) zum Auswählen des Ursprungs-Nahrungsmittelprodukt-Transfermodus mit der Verarbeitungsschaltung gekoppelt ist;
- eine Ursprungs-Nahrungsmittelprodukt-Statusanzeige (44), die dem Ursprungs-Lagerungsort (12, 14, 16) zugeordnet ist, wobei die Ursprungs-Nahrungsmittelprodukt-Statusanzeige (44) mit der Verarbeitungsschaltung (150, 152, 154, 156) gekoppelt ist, wobei die Ursprungs-Nahrungsmittelprodukt-Statusanzeige (44) mindestens einen ersten Zustand aufweist, der anzeigt, dass das zubereitete Nahrungsmittelprodukt an dem zugeordneten Ursprungs-Lagerungsort (12, 14, 16) gelagert wird, und mindestens einen zweiten Zustand aufweist, der anzeigt, dass das zubereitete Nahrungsmittelprodukt nicht an dem zugeordneten Ursprungs-Lagerungsort (12, 14, 16) gelagert wird, wobei der Zustand der Ursprungs-Nahrungsmittelprodukt-Statusanzeige (44) dazu ausgebildet ist, in Reaktion darauf, dass das zubereitete Nahrungsmittelprodukt dem Ursprungs-Lagerungsort (12, 14, 16) zugeführt wird und der Ursprungs-Nahrungsmittelprodukt-Statusschalter (42) ausgewählt ist, von dem zweiten Zustand in den ersten Zustand zu wechseln, und wobei der Zustand der Ursprungs-Nahrungsmittelprodukt-Statusanzeige (44) dazu ausgebildet ist, in Reaktion darauf, dass der Ursprungs-Lagerungsort (12, 14, 16) kein zubereitetes Nahrungsmittelprodukt mehr enthält und der Ursprungs-Nahrungsmittelprodukt-Statusschalter (42) ausgewählt ist, von dem ersten Zustand in den zweiten Zustand zu wechseln;
- wobei der Ursprungs-Lagerungszeitgeber (U1) dazu ausgebildet ist, in Reaktion auf die Ursprungs-Nahrungsmittelprodukt-Statusanzeige (44) beim Wechsel derselben von dem zweiten Zustand in den ersten Zustand initiiert zu werden, wobei die Ursprungs-Nahrungsmittelprodukt-Statusanzeige (44) mindestens einen dritten Zustand aufweist, der anzeigt, dass die Ursprungs-Lagerungszeit die akzeptable Nahrungsmittelprodukt-Haltezeit überschreitet, wobei der Zustand der Ursprungs-Nahrungsmittelprodukt-Statusanzeige (44) dazu ausgebildet ist, in Reaktion darauf, dass die Ursprungs-Lagerungszeit die akzeptable Nahrungsmittelprodukt-Haltezeit überschreitet, in den dritten Zustand zu wechseln;
- einen dem Ziel-Lagerungsort (12, 14, 16) zugeordneten Ziel-Nahrungsmittelprodukt-Statusschalter (42), wobei der Ziel-Nahrungsmittelprodukt-Statusschalter (42) mit der Verarbeitungsschaltung (150, 152, 154, 156) gekoppelt ist;
- eine Einrichtung (38) zum Auswählen eines dem Ziel-Lagerungsort (12, 14, 16) zugeordneten Ziel-Nahrungsmittelprodukt-Transfermodus, wobei die Einrichtung (38) zum Auswählen des Ziel-Nahrungsmittelprodukt-Transfermodus mit der Verarbeitungsschaltung (150, 152, 154, 156) gekoppelt ist;
- eine dem Ziel-Lagerungsort (12, 14, 16) zugeordnete Ziel-Nahrungsmittelprodukt-Statusanzeige (44), wobei die Ziel-Nahrungsmittelprodukt-Statusanzeige (44) mit der Verarbeitungsschaltung (150, 152, 154, 156) gekoppelt ist, wobei die Ziel-Nahrungsmittelprodukt-Statusanzeige (44) mindestens einen ersten Zustand aufweist, der anzeigt, dass das zubereitete Nahrungsmittelprodukt an dem zugeordneten Ziel-Lagerungsort (12, 14, 16) gelagert wird, und mindestens einen zweiten Zustand aufweist, der anzeigt, dass das zubereitete Nahrungsmittelprodukt nicht an dem zugeordneten Ziel-Lagerungsort (12, 14, 16) gelagert wird, wobei der Zustand der Ziel-Nahrungsmittelprodukt-Statusanzeige (44) dazu ausgebildet ist, in Reaktion darauf, dass das zubereitete Nahrungsmittelprodukt dem Ziel-Lagerungsort (12, 14, 16) zugeführt wird und der Ziel-Nahrungsmittelprodukt-Statusschalter (42) ausgewählt ist, von dem zweiten Zustand in den ersten Zustand zu wechseln, und wobei der Zustand der Ziel-Nahrungsmittelprodukt-Statusanzeige (44) dazu ausgebildet ist, in Reaktion darauf, dass der Ziel-Lagerungsort (12, 14, 16) kein zubereitetes Nahrungsmittelprodukt mehr enthält und der Ziel-Nahrungsmittelprodukt-Statusschalter (42) ausgewählt ist, von dem ersten Zustand in den zweiten Zustand zu wechseln; und
- einen dem Ziel-Lagerungsort (12, 14, 16) zugeordneten Ziel-Lagerungszeitgeber (U1), wobei der Ziel-Lagerungszeitgeber (U1) mit der Verarbeitungsschaltung (150, 152, 154, 156) gekoppelt ist, wobei der Ziel-Lagerungszeitgeber (U1) dazu ausgebildet, in Reaktion auf den Wechsel der Ziel-Nahrungsmittelprodukt-Statusanzeige (44) von dem zweiten Zustand in den ersten Zustand initiiert zu werden, wobei der Ziel-Lagerungszeitgeber (U1) dazu ausgebildet ist, eine kumulierte Lagerungszeit zu zählen, wobei die kumulierte Lagerungszeit repräsentativ für die Zeitdauer ist, für die das zubereitete Nahrungsmittelprodukt an dem Ursprungs-Lagerungsort (12, 14, 16) und dem Ziel-Lagerungsort (12, 14, 16) gelagert worden ist, wobei die Ziel-Nahrungsmittelprodukt-Statusanzeige (44) mindestens einen dritten Zustand aufweist, der anzeigt, dass die kumulierte Lagerungszeit die akzeptable Nahrungsmittelprodukt-Haltezeit überschreitet, wobei die Verarbeitungsschaltung (150, 152, 154, 156) dazu ausgebildet ist, die kumulierte Lagerungszeit mit der akzeptablen Nahrungsmittelprodukt-Haltezeit vergleichen, wobei der Zustand der Ziel-Nahrungsmittelprodukt-Statusanzeige (44) dazu ausgebildet ist, in Reaktion darauf, dass die kumulierte Lagerungszeit die akzeptable Nahrungsmittelprodukt-Haltezeit überschreitet, in den dritten Zustand zu wechseln.

19. System nach Anspruch 18,
**dadurch gekennzeichnet,**
**dass** die Ziel-Nahrungsmittelprodukt-Statusanzeige (44) mindestens einen vierten Zustand aufweist, der anzeigt, dass die Zubereitung eines Nachschub-Nahrungsmittelprodukts beginnen sollte, wobei die Verarbeitungsschaltung (150, 152, 154, 156) dazu ausgebildet ist, die kumulierte Lagerungszeit mit einer Zubereitungs-Startzeit zu vergleichen, wobei die Zubereitungs-Startzeit gleich der Differenz zwischen der akzeptablen Nahrungsmittelprodukt-Haltezeit sowie der Zeit ist, die zum Zubereiten des Nachschub-Nahrungsmittelprodukts erforderlich ist, wobei der Zustand der Ziel-Nahrungsmittelprodukt-Statusanzeige (44) dazu ausgebildet ist, in Reaktion darauf, dass die kumulierte Lagerungszeit die Zubereitungs-Startzeit überschreitet, in den vierten Zustand zu wechseln.

20. System nach Anspruch 18,
**dadurch gekennzeichnet,**
**dass** das System eine Anzeige (18) aufweist, wobei die Anzeige (18) dazu ausgebildet ist, den Zustand von mindestens einer der Ursprungs-Nahrungsmittelprodukt-Statusanzeige (44) und der Ziel-Nahrungsmittelprodukt-Statusanzeige (44) anzuzeigen, wobei die Anzeige (18) entfernt von mindestens einem von dem Ursprungs-Lagerungsort (12, 14, 16) und dem Ziel-Lagerungsort (12, 14, 16) vorgesehen ist.

21. System nach Anspruch 18,
**dadurch gekennzeichnet,**
**dass** System einen Aktiv-Schalter (34) aufweist, der mindestens einem von dem Ursprungs-Lagerungsort (12, 14, 16) und dem Ziel-Lagerungsort (12, 14, 16) zugeordnet ist, wobei mindestens eine von der Ursprungs-Nahrungsmittelprodukt-Statusanzeige (44) und der Ziel-Nahrungsmittelprodukt-Statusanzeige (44) einen inaktiven Ortszustand aufweist, der anzeigt, dass mindestens einer von dem Ursprungs-Lagerungsort (12, 14, 16) und dem Ziel-Lagerungsort (12, 14, 16) nicht in Verwendung ist, wobei der Zustand von mindestens einer von der Ursprungs-Nahrungsmittelprodukt-Statusanzeige (44) und der Ziel-Nahrungsmittelprodukt-Statusanzeige (44) in Reaktion auf eine Aktivierung des Aktiv-Schalters (44) in den inaktiven Ortszustand wechseln kann.

22. System nach Anspruch 18,
**dadurch gekennzeichnet,**
**dass** mindestens eine von der Ursprungs-Nahrungsmittelprodukt-Statusanzeige (44) und der Ziel-Nahrungsmittelprodukt-Statusanzeige (44) einen inaktiven Ortszustand aufweist, der anzeigt, dass mindestens einer von dem Ursprungs-Lagerungsort (12, 14, 16) und dem Ziel-Lagerungsort (12, 14, 16) nicht in Verwendung ist, wobei der Zustand von mindestens einer von der Ursprungs-Nahrungsmittelprodukt-Statusanzeige (44) und der Ziel-Nahrungsmittelprodukt-Statusanzeige (44) dazu ausgebildet ist, in Reaktion auf mindestens eines von einer Zeit, einem Tag und einem Ereignis in den inaktiven Ortszustand zu wechseln.

23. System nach Anspruch 18,
**dadurch gekennzeichnet,**
**dass** das System einen Behältnis-Füllstand aufweist, der mindestens einem von dem Ursprungs-Lagerungsort (12, 14, 16) und dem Ziel-Lagerungsort (12, 14, 16) zugeordnet ist, wobei der Behältnis-Füllstand dazu ausgebildet ist, eine Menge des zuzubereitenden Nahrungsmittelprodukts in Reaktion auf einen Wechsel des Zustands von mindestens einer von der Ursprungs-Nahrungsmittelprodukt-Statusanzeige (44) und der Ziel-Nahrungsmittelprodukt-Statusanzeige (44) in den zweiten Zustand anzuzeigen.

24. System nach Anspruch 23,
**dadurch gekennzeichnet,**
**dass** das System eine Anzeige (18) aufweist, wobei die Anzeige (18) entfernt von mindestens einem von dem Ursprungs-Lagerungsort (12, 14, 16) und dem Ziel-Lagerungsort (12, 14, 16) vorgesehen ist, und wobei der Behältnis-Füllstand dazu ausgebildet ist, auf der Anzeige (18) angezeigt zu werden.

25. System nach Anspruch 23,
**dadurch gekennzeichnet,**
**dass** das System einen Aktivitätspegel aufweist, der mindestens einem von dem Ursprungs-Lagerungsort (12, 14, 16) und dem Ziel-Lagerungsort (12, 14, 16) zugeordnet ist, wobei der Aktivitätspegel eine Verkaufsrate des zubereiteten Nahrungsmittelprodukts anzeigt, und wobei der Behältnis-Füllstand dazu ausgebildet ist, sich in Abhängigkeit von dem Aktivitätspegel zu ändern.

26. System nach Anspruch 25,
**dadurch gekennzeichnet,**
**dass** das System einen Speicher (U15) aufweist, wobei der Aktivitätspegel in dem Speicher (U15) gespeichert ist.

27. System nach Anspruch 25,
**dadurch gekennzeichnet,**
**dass** das System einen mindestens einem von dem Ursprungs-Lagerungsort (12, 14, 16) und dem Ziel-Lagerungsort (12, 14, 16) zugeordneten Aktivitätspegel-Schalter (138) aufweist, wobei der Aktivitätspegel dazu ausgebildet ist, sich in Reaktion auf eine Aktivierung des Aktivitätspegel-Schalters (138) zu ändern.

28. System nach Anspruch 25,
**dadurch gekennzeichnet,**
**dass** der Aktivitätspegel in Reaktion auf mindestens eines von einer Zeit, einem Tag und einem Ereignis geändert wird.

29. System nach Anspruch 25,
**dadurch gekennzeichnet,**
**dass** das System eine Anzeige (18) aufweist, wobei die Anzeige (18) entfernt von mindestens einem von dem Ursprungs-Lagerungsort (12, 14, 16) und dem Ziel-Lagerungsort (12, 14, 16) vorgesehen ist, und wobei der Aktivitätspegel dazu ausgebildet ist, auf der Anzeige (18) angezeigt zu werden.

30. System nach Anspruch 23,
**dadurch gekennzeichnet,**
**dass** das System eine Anzeige (18) und ein Auswahlmenü aufweist, das mindestens einem von dem Ursprungs-Lagerungsort (12, 14, 16) und dem Ziel-Lagerungsort 12, 14, 16) zugeordnet ist, wobei dem Auswahlmenü der Behältnis-Füllstand zugeordnet ist und wobei das Auswahlmenü dazu ausgebildet ist, auf der Anzeige (18) elektronisch angezeigt zu werden.

31. System nach Anspruch 30,
**dadurch gekennzeichnet,**
**dass** mindestens einem von dem Ursprungs-Lagerungsort (12, 14, 16) und dem Ziel-Lagerungsort (12, 14, 16) einen Auswahlmenü-Schalter (144) zugeordnet ist, wobei das Auswahlmenü dazu ausgebildet ist, in Reaktion auf eine Aktivierung des Auswahlmenü-Schalters (144) zu wechseln.

32. System nach Anspruch 18,
**dadurch gekennzeichnet,**
**dass** der Ursprungs-Lagerungsort (12, 14, 16) und der Ziel-Lagerungsort (12, 14, 16) im wesentlichen in ähnlichen räumlichen Positionen in unterschiedlichen Stationen (12, 14, 16) positioniert sind.

33. System nach Anspruch 18,
**dadurch gekennzeichnet,**
**dass** die Ziel-Nahrungsmittelprodukt-Statusanzeige (44) einen Transfermodus-Zustand aufweist, der anzeigt, dass das zubereitete Nahrungsmittelprodukt in den Ziel-Lagerungsort (12, 14, 16) transferiert werden kann, wobei der Zustand der Ziel-Nahrungsmittelprodukt-Statusanzeige (44) dazu ausgebildet ist, in Reaktion auf eine Auswahl des Ursprungs-Nahrungsmittelprodukt-Transfermodus sowie des Ziel-Nahrungsmittelprodukt-Statusschalters (42) in den Transfermodus-Zustand zu wechseln.

34. System nach Anspruch 18,
**dadurch gekennzeichnet,**
**dass** mindestens einem von dem Ursprungs-Lagerungsort (12, 14, 16) und dem Ziel-Lagerungsort (12, 14, 16) ein Nahrungsmittelprodukt-Behältnis (48) zugeordnet ist, wobei mindestens einer von dem Ursprungs-Nahrungsmittelprodukt-Statusschalter (42), dem Ziel-Nahrungsmittelprodukt-Statusschalter (42), der Ursprungs-Nahrungsmittelprodukt-Statusanzeige (44) und der Ziel-Nahrungsmittelprodukt-Statusanzeige (44) in Ausrichtung mit dem Nahrungsmittelprodukt-Behältnis (48) angeordnet ist.

## Revendications

1. Procédé pour surveiller l'état et l'emplacement de stockage d'un produit alimentaire préparé dans un restaurant en utilisant un système d'état de produit ayant un circuit de traitement (150, 152, 154, 156), un emplacement de stockage source (12, 14, 16) et un emplacement de stockage de destination (12, 14, 16), dans lequel le produit alimentaire préparé est fourni par un utilisateur du système à l'emplacement de stockage source (12, 14, 16), l'emplacement de stockage source (12, 14, 16) ayant un temporisateur de stockage source (UI) associé à lui-même, le temporisateur de stockage source (UI) étant couplé au circuit de traitement (150, 152, 154, 156), le temporisateur de stockage source (UI) comptant un temps de stockage source, le temps de stockage source étant représentatif de la durée temporelle pendant laquelle le produit alimentaire préparé a été stocké à l'emplacement de stockage source (12, 14, 16), le temps de stockage source étant comparé à un temps de retenue de produit alimentaire acceptable, et dans lequel le produit alimentaire préparé est enlevé de l'emplacement de stockage source (12, 14, 16) par l'utilisateur du système et transféré par l'utilisateur du système à l'emplacement de stockage source (12, 14, 16), **caractérisé en ce que** le système inclut:
- un indicateur d'état de produit alimentaire source (44) associé à l'emplacement de stockage source (12, 14, 16), l'indicateur d'état de produit alimentaire source (44) étant couplé au circuit de traitement (150, 152, 154, 156), l'indicateur d'état de produit alimentaire source (44) ayant au moins un premier état qui indique que le produit alimentaire préparé est stocké à l'emplacement de stockage source associé (12, 14, 16), au moins un second état qui indique que le produit alimentaire préparé n'est pas stocké à l'emplacement de stockage source associé (12, 14, 16), et au moins un troisième état qui indique que le temps de stockage source excède le temps de retenue de produit alimentaire acceptable;
- un premier moyen (38, 42) pour sélectionner un mode de transfert de produit alimentaire source associé à l'emplacement de stockage source (12, 14, 16), le premier moyen (38, 42) pour sélectionner le mode de transfert de produit alimentaire source étant couplé au circuit de traitement (150, 152, 154, 156);
- un indicateur d'état de produit alimentaire de destination (44) associé à l'emplacement de stockage de destination (12, 14, 16), l'indicateur d'état de produit alimentaire de destination (44) étant couplé au circuit de traitement (150, 152, 154, 156), l'indicateur d'état de produit alimentaire de destination (44) ayant au moins un premier état qui indique que le produit alimentaire préparé est stocké à l'emplacement de stockage de destination associé (12, 14, 16), au moins un second état qui indique que le produit alimentaire préparé n'est pas stocké à l'emplacement de stockage de destination associé (12, 14, 16), et au moins un troisième état qui indique que le temps de stockage cumulé excède le temps de retenue de produit alimentaire acceptable;
- un second moyen (38, 42) pour sélectionner un mode de transfert de produit alimentaire de destination associé à l'emplacement de stockage de destination (12, 14, 16), le second moyen (38, 42) pour sélectionner le mode de transfert de produit alimentaire de destination étant couplé au circuit de traitement (150, 152, 154, 156); et
- un temporisateur de stockage de destination (UI) associé à l'emplacement de stockage de destination (12, 14, 16), le temporisateur de stockage de destination (UI) étant couplé au circuit de traitement (150, 152, 154, 156);
et dans lequel le procédé inclut les étapes suivantes:
a) changement par le système de l'état de l'indicateur d'état de produit alimentaire source (44) depuis le second état vers le premier état en réponse au fait que le produit alimentaire préparé est alimenté à l'emplacement de stockage source (12, 14, 16);
b) initialisation par le système du temporisateur de stockage source (UI) associé à l'emplacement de stockage source (12, 14, 16) en réponse au changement de l'indicateur d'état de produit alimentaire source (44) du second état vers le premier état, en raison de quoi le temporisateur de stockage source (UI) compte le temps de stockage source;
c) changement par le système de l'état de l'indicateur d'état de produit alimentaire (44) associé à l'emplacement de stockage source (12, 14, 16) vers le troisième état si le temps de stockage source excède le temps de retenue de produit alimentaire acceptable;
d) sélection par l'utilisateur du système, avec le premier moyen (38, 42), du mode de transfert de produit alimentaire source;
e) changement par le système de l'état de l'indicateur d'état de produit alimentaire source (44) du premier état vers le second état en réponse au fait que le produit alimentaire préparé est enlevé par l'utilisateur du système depuis l'emplacement de stockage source (12, 14, 16) et que le mode de transfert de produit alimentaire source est sélectionné;
f) sélection par l'utilisateur du système, avec le second moyen (38, 42), du mode de transfert de produit alimentaire de destination;
g) changement par le système de l'état de l'indicateur d'état de produit alimentaire de destination (44) du second état vers le premier état en réponse au fait que le produit alimentaire préparé est fourni par l'utilisateur du système à l'emplacement de stockage de destination (12, 14, 16) et que le mode de transfert de produit alimentaire de destination est sélectionné;
h) initialisation par le système du temporisateur de stockage de destination (UI) associé à l'emplacement de stockage de destination (12, 14, 16) en réponse au changement de l'indicateur d'état de produit alimentaire de destination (44) du second état vers le premier état, le temporisateur de stockage de destination (UI) comptant le temps de stockage cumulé représentatif de la durée temporelle pendant laquelle le produit alimentaire préparé a été stocké à l'emplacement de stockage source (12, 14, 16) et à l'emplacement de stockage de destination (12, 14, 16);
i) comparaison par le système du temps de stockage cumulé avec le temps de retenue de produit alimentaire acceptable; et
j) changement par le système de l'état de l'indicateur d'état de produit alimentaire de destination (44) vers le troisième état en réponse au fait que le temps de stockage cumulé excède le temps de retenue de produit alimentaire acceptable.

2. Procédé selon la revendication 1,
**caractérisé en ce que** l'indicateur d'état de produit alimentaire de destination (44) présente au moins un quatrième état qui indique que la cuisson d'un produit alimentaire d'appoint devrait commencer, et le procédé inclut les étapes suivantes:
k) comparaison par le système du temps de stockage cumulé avec un temps de départ de cuisson, le temps de départ de cuisson étant égal à la différence entre le temps de retenue de produit alimentaire acceptable et le temps nécessaire pour cuire le produit alimentaire d'appoint; et
1) changement par le système de l'état de l'indicateur d'état de produit alimentaire de destination (44) vers le quatrième état en réponse au fait que le temps de stockage cumulé excède le temps de départ de cuisson.

3. Procédé selon la revendication 1,
**caractérisé en ce que** le procédé inclut l'étape consistant à afficher par le système l'état d'au moins un indicateur parmi l'indicateur d'état de produit alimentaire source (44) et l'indicateur d'état de produit alimentaire de destination (44) sur un affichage (18), l'affichage (18) étant situé à distance d'un emplacement au moins parmi l'emplacement de stockage source (12, 14, 16) et l'emplacement de stockage de destination (12, 14, 16).

4. Procédé selon la revendication 1,
**caractérisé en ce qu'**un emplacement au moins parmi l'emplacement de stockage source (12, 14, 16) et l'emplacement de stockage de destination (12, 14, 16) comporte un commutateur actif (34) associé à lui-même, dans lequel un indicateur au moins parmi l'indicateur d'état de produit alimentaire source (44) et l'indicateur d'état de produit alimentaire de destination (44) présente un état d'emplacement inactif qui indique qu'au moins un emplacement parmi l'emplacement de stockage source (12, 14, 16) et l'emplacement de stockage de destination (12, 14, 16) n'est pas utilisé, et le procédé inclut l'étape consistant à changer par le système l'état d'au moins un indicateur parmi l'indicateur d'état de produit alimentaire source (44) et l'indicateur d'état de produit alimentaire de destination (44) vers l'état d'emplacement inactif en réponse à l'activation par l'utilisateur du système du commutateur actif (34).

5. Procédé selon la revendication 1,
**caractérisé en ce qu'**un indicateur au moins parmi l'indicateur d'état de produit alimentaire source (44) et l'indicateur d'état de produit alimentaire de destination (44) présente un état d'emplacement inactif qui indique qu'un emplacement au moins parmi l'emplacement de stockage source (12, 14, 16) et l'emplacement de stockage de destination (12, 14, 16) n'est pas utilisé, et le procédé inclut l'étape consistant à changer par le système l'état d'au moins un indicateur parmi l'indicateur d'état de produit alimentaire source (44) et l'indicateur d'état de produit alimentaire de destination (44) vers l'état d'emplacement inactif en réponse à un paramètre au moins parmi un instant, un jour, et un événement.

6. Procédé selon la revendication 1,
**caractérisé en ce que** le procédé inclut l'étape consistant à fournir un niveau de remplissage de récipient associé à au moins un emplacement parmi l'emplacement de stockage source (12, 14, 16) et l'emplacement de stockage de destination (12, 14, 16), le niveau de remplissage de récipient indiquant une quantité de produit alimentaire préparé à cuire en réponse au changement de l'état d'au moins un indicateur parmi l'indicateur d'état de produit alimentaire source (44) et l'indicateur d'état de produit alimentaire de destination (44) vers le second état.

7. Procédé selon la revendication 6,
**caractérisé en ce que** le procédé inclut l'étape consistant à afficher par le système le niveau de remplissage de récipient sur un affichage (18), l'affichage (18) étant situé à distance d'au moins un emplacement parmi l'emplacement de stockage source (12, 14, 16) et l'emplacement de stockage de destination (12, 14, 16).

8. Procédé selon la revendication 6,
**caractérisé en ce que** le procédé inclut les étapes suivantes:
m) affichage par voie électronique par le système d'un niveau d'activité associé à un emplacement au moins parmi l'emplacement de stockage source (12, 14, 16) et l'emplacement de stockage de destination (12, 14, 16), l'état d'activité indiquant une cadence de vente du produit alimentaire préparé; et
n) changer le niveau de remplissage de récipient en fonction du niveau d'activité.

9. Procédé selon la revendication 8,
**caractérisé en ce que** le procédé inclut l'étape consistant à stocker par le système le niveau d'activité dans une mémoire (U15).

10. Procédé selon la revendication 8,
**caractérisé en ce qu'**un emplacement au moins parmi l'emplacement de stockage source (12, 14, 16) et l'emplacement de stockage de destination (12, 14, 16) comporte un commutateur de niveau d'activité (138) associé à lui-même, et le procédé inclut l'étape consistant à changer le niveau d'activité en réponse à l'activation par l'utilisateur du système du commutateur de niveau d'activité (138).

11. Procédé selon la revendication 8,
**caractérisé en ce que** le procédé inclut l'étape consistant à changer le niveau d'activité en réponse à un paramètre au moins parmi un instant, un jour et un événement.

12. Procédé selon la revendication 8,
**caractérisé en ce que** le procédé inclut l'étape consistant à afficher par le système le niveau d'activité sur un affichage (18), l'affichage (18) étant situé à distance d'un emplacement au moins parmi l'emplacement de stockage source (12, 14, 16) et l'emplacement de stockage de destination (12, 14, 16).

13. Procédé selon la revendication 6,
**caractérisé en ce que** le procédé inclut les étapes suivantes:
o) présentation par le système d'un menu de sélection associé à un emplacement au moins parmi l'emplacement de stockage source (12, 14, 16) et l'emplacement de stockage de destination (12, 14, 16), le menu de sélection comportant au moins un niveau de remplissage de récipient associé à lui-même; et
p) affichage par voie électronique par le système du menu de sélection sur un affichage (18), l'affichage (18) étant situé à distance d'au moins un emplacement parmi l'emplacement de stockage source (12, 14, 16) et l'emplacement de stockage de destination (12, 14, 16).

14. Procédé selon la revendication 6,
**caractérisé en ce que** l'étape consistant à fournir un niveau de remplissage de récipient inclut les étapes suivantes:
q) calcul par le système d'un volume de vente par unité de produit alimentaire, le volume de vente par unité de produit alimentaire étant représentatif d'une quantité de produit alimentaire vendue à chaque volume de vente unitaire, le volume de vente unitaire étant représentatif d'un volume de vente en dollars;
r) détermination par le système d'un niveau d'activité, le niveau d'activité étant représentatif d'une quantité de volume de vente unitaire sensiblement égal à un volume de vente courant; et
s) multiplication par le système du volume de vente de produit alimentaire par unité par le niveau d'activité et division par le système du produit du volume de vente par unité de produit alimentaire et le niveau d'activité par une quantité de récipients ouverts pour obtenir le niveau de remplissage de récipient.

15. Procédé selon la revendication 13,
**caractérisé en ce qu'**un emplacement au moins parmi l'emplacement de stockage source (12, 14, 16) et l'emplacement de stockage de destination (12, 14, 16) comprend un commutateur de menu de sélection (144) associé à lui-même, et le procédé inclut l'étape consistant à changer, par le système, le menu de sélection en réponse à l'activation par l'utilisateur du système du commutateur de menu de sélection (144).

16. Procédé selon la revendication 1,
**caractérisé en ce que** le procédé inclut l'étape consistant à positionner l'emplacement de stockage source (12, 14, 16) et l'emplacement de stockage de destination (12, 14, 16) dans des emplacements sensiblement similaires dans l'espace dans différentes stations (12, 14, 16).

17. Procédé selon la revendication 1,
**caractérisé en ce que** l'indicateur de produit alimentaire de destination (44) comporte un état de mode de transfert qui indique que le produit alimentaire peut être transféré vers l'emplacement de stockage de destination associé (12, 14, 16), et le procédé inclut l'étape consistant à changer par le système l'état de l'indicateur d'état de produit alimentaire de destination (44) vers l'état de mode de transfert en réponse à la sélection par l'utilisateur du système du mode de transfert de produit alimentaire de destination.

18. Système d'état de produit qui surveille l'état et l'emplacement de stockage d'un produit alimentaire préparé ayant un circuit de traitement (150, 152, 154, 156), un emplacement de stockage source (12, 14, 16) pour recevoir le produit alimentaire préparé, et un temporisateur de stockage source (UI) associé à l'emplacement de stockage source (12, 14, 16), le temporisateur de stockage source (UI) étant couplé au circuit de traitement (150, 152, 154, 156), le temporisateur de stockage source (UI) étant adapté à compter un temps de stockage source, le temps de stockage source étant représentatif de la durée temporelle pendant laquelle le produit alimentaire préparé a été stocké à l'emplacement de stockage source (12, 14, 16), le circuit de traitement (UI) étant adapté à comparer le temps de stockage source avec un temps de retenue de produit alimentaire acceptable, dans lequel au moins une portion du produit alimentaire préparé est enlevée de l'emplacement de stockage source (12, 14, 16) et transférée à un emplacement de stockage de destination (12, 14, 16),
**caractérisé en ce que** le système inclut:
- un commutateur d'état de produit alimentaire source (42) associé à l'emplacement de stockage source (12, 14, 16), le commutateur d'état de produit alimentaire source (42) étant couplé au circuit de traitement (150, 152, 154, 156);
- un moyen (38) pour sélectionner un mode de transfert de produit alimentaire source associé à l'emplacement de stockage source (12, 14, 16), le moyen (38) pour sélectionner le mode de transfert de produit alimentaire source étant couplé au circuit de traitement;
- un indicateur d'état de produit alimentaire source (44) associé à l'emplacement de stockage source (12, 14, 16), l'indicateur d'état de produit alimentaire source (44) étant couplé au circuit de traitement (150, 152, 154, 156), l'indicateur d'état de produit alimentaire source (44) ayant au moins un premier état qui indique que le produit alimentaire préparé est stocké à l'emplacement de stockage source associé (12, 14, 16), et au moins un second état qui indique que le produit alimentaire préparé n'est pas stocké à l'emplacement de stockage source associé (12, 14, 16), l'état de l'indicateur d'état de produit alimentaire source (44) étant adapté à changer du second état vers le premier état en réponse au fait que le produit alimentaire préparé est fourni à l'emplacement de stockage source (12, 14, 16) et que le commutateur d'état de produit alimentaire source (42) est sélectionné, l'état de l'indicateur d'état de produit alimentaire source (44) étant adapté à changer du premier état vers le second état en réponse au fait que l'emplacement de stockage source (12, 14, 16) ne contient plus de produit alimentaire préparé et que le commutateur d'état de produit alimentaire source (42) est sélectionné;
- le temporisateur de stockage source (UI) étant adapté à être initialisé en réponse au changement de l'indicateur d'état de produit alimentaire source (44) du second état vers le premier état, l'indicateur d'état de produit alimentaire source (44) ayant au moins un troisième état qui indique que le temps de stockage source excède le temps de retenue de produit alimentaire acceptable, l'état de l'indicateur d'état de produit alimentaire source (44) étant adapté à changer vers le troisième état en réponse au fait que le temps de stockage source excède le temps de retenue de produit alimentaire acceptable;
- un commutateur d'état de produit alimentaire de destination (42) associé à un emplacement de stockage de destination (12, 14, 16), le commutateur d'état de produit alimentaire de destination (42) étant couplé au circuit de traitement (150, 152, 154, 156);
- un moyen (38) pour sélectionner un mode de transfert de produit alimentaire de destination associé à l'emplacement de stockage de destination (12, 14, 16), le moyen (38) pour sélectionner le mode de transfert de produit alimentaire de destination étant couplé au circuit de traitement (150, 152, 154, 156);
- un indicateur d'état de produit alimentaire de destination (44) associé à l'emplacement de stockage de destination (12, 14, 16), l'indicateur d'état de produit alimentaire de destination (44) étant couplé au circuit de traitement (150, 152, 154, 156), l'indicateur d'état de produit alimentaire de destination (44) ayant au moins un premier état qui indique que le produit alimentaire préparé est stocké à l'emplacement de stockage de destination associé (12, 14, 16), et au moins un second état qui indique que le produit alimentaire préparé n'est pas stocké à l'emplacement de stockage de destination associé (12, 14, 16), l'état de l'indicateur d'état de produit alimentaire de destination (44) étant adapté à changer du second état vers le premier état en réponse au fait que le produit alimentaire préparé est alimenté à l'emplacement de stockage de destination (12, 14, 16) et que le commutateur d'état de produit alimentaire de destination (42) est sélectionné, l'état de l'indicateur d'état de produit alimentaire de destination (44) étant adapté à changer du premier état vers le second état en réponse au fait que l'emplacement de stockage de destination (12, 14, 16) ne contient plus de produit alimentaire préparé et que le commutateur d'état de produit alimentaire de destination (42) est sélectionné, et
- un temporisateur de stockage de destination (UI) associé à l'emplacement de stockage de destination (12, 14, 16), le temporisateur de stockage de destination (UI) étant couplé au circuit de traitement (150, 152, 154, 156), le temporisateur de stockage de destination (UI) étant adapté à être initialisé en réponse au changement de l'indicateur d'état de produit alimentaire de destination (44) du second état vers le premier état, le temporisateur de stockage de destination (UI) étant adapté à compter un temps de stockage cumulé, le temps de stockage cumulé étant représentatif de la durée temporelle pendant laquelle le produit alimentaire préparé a été stocké à l'emplacement de stockage source (12, 14, 16) et à l'emplacement de stockage de destination (12, 14, 16), l'indicateur d'état de produit alimentaire de destination (44) ayant au moins un troisième état qui indique que le temps de stockage cumulé excède le temps de retenue de produit alimentaire acceptable, le circuit de traitement (150, 152, 154, 156) étant adapté à comparer le temps de stockage cumulé avec le temps de retenue de produit alimentaire acceptable, l'indicateur d'état de produit alimentaire de destination (44) étant adapté à changer vers le troisième état en réponse au fait que le temps de stockage cumulé excède le temps de retenue de produit alimentaire acceptable.

19. Système selon la revendication 18,
**caractérisé en ce que** l'indicateur d'état de produit alimentaire de destination (44) présente au moins un quatrième état qui indique que la cuisson d'un produit alimentaire d'appoint devrait commencer, le circuit de traitement (150, 152, 154, 156) étant adapté à comparer le temps de stockage cumulé avec un temps de départ de cuisson, le temps de départ de cuisson étant égal à la différence entre le temps de retenue de produit alimentaire acceptable et le temps nécessaire pour cuire le produit alimentaire d'appoint, l'état de l'indicateur d'état de produit alimentaire de destination (44) étant adapté à changer vers le quatrième état en réponse au fait que le temps de stockage cumulé excède le temps de départ de cuisson.

20. Système selon la revendication 18,
**caractérisé en ce que** le système comprend un affichage (18), l'affichage (18) étant adapté à indiquer l'état d'au moins un indicateur parmi l'indicateur d'état de produit alimentaire source (44) et de l'indicateur d'état de produit alimentaire de destination (44), l'affichage (18) étant situé à distance depuis au moins un emplacement parmi l'emplacement de stockage source (12, 14, 16) et l'emplacement de stockage de destination (12, 14, 16).

21. Système selon la revendication 18,
**caractérisé en ce que** le système comprend un commutateur actif (34) associé à un emplacement au moins parmi l'emplacement de stockage source (12, 14, 16) et l'emplacement de stockage de destination (12, 14, 16), dans lequel au moins un indicateur parmi l'indicateur d'état de produit alimentaire source (44) et l'indicateur d'état de produit alimentaire de destination (44) présente un état d'emplacement inactif qui indique qu'au moins un emplacement parmi l'emplacement de stockage source (12, 14, 16) et l'emplacement de stockage de destination (12, 14, 16) n'est pas utilisé, l'état d'au moins un indicateur parmi l'indicateur d'état de produit alimentaire source (44) et l'indicateur d'état de produit alimentaire de destination (44) étant adapté à changer vers l'état d'emplacement inactif en réponse à l'activation du commutateur actif (34).

22. Système selon la revendication 18,
**caractérisé en ce qu'**au moins un indicateur parmi l'indicateur d'état de produit alimentaire source (44) et l'indicateur d'état de produit alimentaire de destination (44) présente un état d'emplacement inactif qui indique comment un emplacement parmi l'emplacement de stockage source (12, 14, 16) et l'emplacement de stockage de destination (12, 14, 16) n'est pas utilisé, l'état d'au moins un indicateur parmi l'indicateur d'état de produit alimentaire source (44) et l'indicateur d'état de produit alimentaire de destination (44) étant adapté à changer vers l'état d'emplacement inactif en réponse à un paramètre au moins parmi un instant, un jour, et un événement.

23. Système selon la revendication 18,
**caractérisé en ce que** le système comporte un niveau de remplissage de récipient associé à un emplacement au moins parmi l'emplacement de stockage source (12, 14, 16) et l'emplacement de stockage de destination (12, 14, 16), le niveau de remplissage de récipient étant adapté à indiquer une quantité de produit alimentaire préparé qu'il s'agit de cuire en réponse à l'état d'au moins un indicateur parmi l'indicateur d'état de produit alimentaire source (44) et l'indicateur d'état de produit alimentaire de destination (44) lorsqu'il change vers le second état.

24. Système selon la revendication 23,
**caractérisé en ce que** le système comprend un affichage (18), l'affichage (18) étant situé à distance d'au moins un emplacement parmi l'emplacement de stockage source (12, 14, 16) et l'emplacement de stockage de destination (12, 14, 16), le niveau de remplissage de récipient étant adapté à être affiché sur l'affichage (18).

25. Système selon la revendication 23,
**caractérisé en ce que** le système présente un niveau d'activité associé à au moins un emplacement parmi l'emplacement de stockage source (12, 14, 16) et l'emplacement de stockage de destination (12, 14, 16), le niveau d'activité indiquant une cadence de vente du produit alimentaire préparé, le niveau de remplissage de récipient étant adapté à changer en fonction du niveau d'activité.

26. Système selon la revendication 25,
**caractérisé en ce que** le système comprend une mémoire (U15), le niveau d'activité étant stocké dans la mémoire (U15)

27. Système selon la revendication 25,
**caractérisé en ce que** le système comprend un commutateur de niveau d'activité (138) associé à un emplacement au moins parmi l'emplacement de stockage source (12, 14, 16) et l'emplacement de stockage de destination (12, 14, 16), le niveau d'activité étant adapté à changer en réponse à l'activation du commutateur de niveau d'activité (138).

28. Système selon la revendication 25,
**caractérisé en ce que** le niveau d'activité est changé en réponse à au moins un paramètre parmi un instant, un jour, et un événement

29. Système selon la revendication 25,
**caractérisé en ce que** le système comprend un affichage (18), l'affichage (18) étant situé à distance d'un emplacement au moins parmi l'emplacement de stockage source (12, 14, 16) et l'emplacement de stockage de destination (12, 14, 16), le niveau d'activité étant adapté à être affiché sur l'affichage (18).

30. Système selon la revendication 23,
**caractérisé en ce que** le système comprend un affichage (18) et un menu de sélection associé à au moins un emplacement parmi l'emplacement de stockage source (12, 14, 16) et l'emplacement de stockage de destination (12, 14, 16), le menu de sélection comportant le niveau de remplissage de récipient associé à lui-même, le menu de sélection étant adapté à être affiché par voie électronique sur l'affichage (18).

31. Système selon la revendication 30,
**caractérisé en ce qu'**un emplacement au moins parmi l'emplacement de stockage source (12, 14, 16) et l'emplacement de stockage de destination (12, 14, 16) comporte un commutateur de menu de sélection (144) associé à lui-même, le menu de sélection étant adapté à changer en réponse à l'activation du commutateur de menu de sélection (144).

32. Système selon la revendication 18,
**caractérisé en ce que** l'emplacement de stockage source (12, 14, 16) et l'emplacement de stockage de destination (12, 14, 16) sont positionnés à des emplacements sensiblement similaires dans l'espace dans différentes stations (12, 14, 16).

33. Système selon la revendication 18,
**caractérisé en ce que** l'indicateur d'état de produit alimentaire de destination (44) présente un état de mode de transfert qui indique que le produit alimentaire préparé peut être transféré vers l'emplacement de stockage de destination (12, 14, 16), l'état de l'indicateur d'état de produit alimentaire de destination (44) étant adapté à changer vers l'état de mode de transfert en
réponse au fait que le mode de transfert de produit alimentaire source et que le commutateur d'état de produit alimentaire de destination (42) sont sélectionnés.

34. Système selon la revendication 18,
**caractérisé en ce qu'**un emplacement au moins parmi l'emplacement de stockage source (12, 14, 16) et l'emplacement de stockage de destination (12, 14, 16) comprend un récipient de produit alimentaire (48) associé à lui-même, au moins un élément parmi le commutateur d'état de produit alimentaire source (42), le commutateur d'état de produit alimentaire de destination (42), l'indicateur d'état de produit alimentaire source (44), et l'indicateur d'état de produit alimentaire de destination (44) étant situé en alignement avec le récipient de produit alimentaire (48).
